(19) Europäisches Patentamt
European Patent Office
Office européen des brevets

(11) EP 4 610 284 A1

(12) EUROPEAN PATENT APPLICATION
published in accordance with Art. 153(4) EPC

(43) Date of publication:
**03.09.2025 Bulletin 2025/36**

(21) Application number: **23882777.8**

(22) Date of filing: **27.10.2023**

(51) International Patent Classification (IPC):
***C08F 220/14*** (2006.01) ***C08F 20/14*** (2006.01)
***C08K 5/00*** (2006.01) ***C08K 5/3462*** (2006.01)
***C08L 33/12*** (2006.01)

(52) Cooperative Patent Classification (CPC):
**C08F 20/14; C08F 220/14; C08K 5/00; C08K 5/3462; C08L 33/12**

(86) International application number:
**PCT/JP2023/038977**

(87) International publication number:
**WO 2024/090576 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.10.2022 JP 2022172929**
**28.10.2022 JP 2022172930**
**24.05.2023 JP 2023085752**

(71) Applicant: **Mitsubishi Chemical Corporation**
**Tokyo 100-8251 (JP)**

(72) Inventors:
- **SUZUKI, Tatsuya**
  **Tokyo 100-8251 (JP)**
- **FUJITA, Shiho**
  **Tokyo 100-8251 (JP)**
- **KURIHARA, Yu**
  **Tokyo 100-8251 (JP)**
- **ISOMURA, Manabu**
  **Tokyo 100-8251 (JP)**
- **KATOU, Yuuki**
  **Tokyo 100-8251 (JP)**
- **KANEMORI, Kouichi**
  **Tokyo 100-8251 (JP)**
- **NARUYOSHI, Wataru**
  **Tokyo 100-8251 (JP)**

(74) Representative: **Hoffmann Eitle**
**Patent- und Rechtsanwälte PartmbB**
**Arabellastraße 30**
**81925 München (DE)**

# (54) MONOMER COMPOSITION, METHACRYLIC RESIN COMPOSITION AND PRODUCTION METHOD THEREFOR, AND MOLDED RESIN OBJECT

(57) An object is to provide a monomer composition to obtain a methacrylic resin composition having excellent light stability or long-term thermal stability while maintaining transparency and heat resistance originally possessed by a methacrylic resin; a methacrylic resin composition and a production method therefor, and a molded resin object containing the methacrylic resin composition. The object is achieved by a monomer composition containing methyl methacrylate and 1 to 10000 ppm by mass of an ester compound having a specific α-hydrogen (component A1), an α,β-unsaturated carbonyl compound (component A21), an α,β-unsaturated carboxylic acid ester (component A22), or a pyrazine compound (component A3). In addition, the above object is achieved by a methacrylic resin composition using the monomer composition and a production method therefor, and a molded resin object containing the methacrylic resin composition.

EP 4 610 284 A1

## Description

TECHNICAL FIELD

The present invention relates to a monomer composition, a methacrylic resin composition and a production method therefor, and a molded resin object.

Priority is claimed on Japanese Patent Application No. 2022-172929 and Japanese Patent Application No. 2022-172930, filed October 28, 2022, and Japanese Patent Application No. 2023-085752, filed May 24, 2023, the contents of which are incorporated herein by reference.

BACKGROUND ART

Methyl methacrylate (hereinafter, also referred to as "MMA") is known to be extremely useful as a raw material for polymers having various uses. For example, a methacrylic resin obtained by polymerization of MMA has excellent transparency, heat resistance, and weather resistance, and has well-balanced resin physical properties such as mechanical strength, thermal properties, and molding workability. Due to such excellent characteristics, the methacrylic resin is used in many applications such as a member for a vehicle, a member for medical use, a toy, a liquid container, an optical material, a signboard, a display, a decorative member, a building material, and a faceplate of an electronic device, and is particularly used for a member having translucency.

In the above-described application, when a member in which the methacrylic resin is used is installed in an environment exposed to light such as direct sunlight and an UV lamp, there is a problem in that the transparency of the methacrylic resin is greatly reduced. Therefore, a methacrylic resin in which transparency is maintained even when exposed to light for a long time, that is, a methacrylic resin having excellent light stability has been required. In the present specification, "UV" means light mainly including light in a wavelength range of 295 to 430 nm.

As a technique for improving the light stability of the methacrylic resin, for example, Patent Document 1 discloses a methacrylic resin obtained by polymerizing a monomer such as methyl methacrylate in the presence of a light-stabilizing hindered amine compound having a specific structure. Patent Document 2 discloses a methacrylic resin containing a polymer having a triazine-based compound as a structural unit.

In addition, in order to maintain the quality of MMA, which is a raw material of the methacrylic resin, for example, Patent Document 3 discloses that a methyl ether of hydroquinone is used as a polymerization inhibitor. Patent Document 4 discloses that N,N'-dialkyl-p-phenylenediamine or N-oxyl is used as a polymerization inhibitor. Patent Document 5 discloses that MMA is distilled in the presence of a phenol-based polymerization inhibitor.

In addition, in the above-described application, when a member in which the methacrylic resin is used is installed for a long period of time in a high-temperature environment, there is a problem in that yellowish color (yellowing) occurs in the methacrylic resin and the transparency is greatly reduced. Therefore, a methacrylic resin in which transparency is maintained even when stored for a long period of time at a high temperature, that is, a methacrylic resin having excellent long-term thermal stability has been required.

As a technique for improving the long-term thermal stability of the methacrylic resin, a method of adding an antioxidant to the methacrylic resin is known. For example, Patent Document 6 discloses a stabilizer containing a phosphite compound and an antioxidant. In addition, Patent Document 7 discloses a stabilizer composition containing phosphite esters and at least one stabilizer selected from a phenol-based stabilizer, a sulfur-based stabilizer, a phosphorus-based stabilizer, or a hindered amine stabilizer.

Citation List

Patent Documents

Patent Document 1: Japanese Unexamined Patent Application, First Publication No. S55-139404
Patent Document 2: Japanese Unexamined Patent Application, First Publication No. 2012-72333
Patent Document 3: Japanese Unexamined Patent Application, First Publication No. 2004-155757
Patent Document 4: Published Japanese Translation No. 2005-502695 of the PCT International Publication
Patent Document 5: Published Japanese Translation No. H10-504553 of the PCT International Publication
Patent Document 6: Japanese Unexamined Patent Application, First Publication No. H5-86084
Patent Document 7: Japanese Unexamined Patent Application, First Publication No. H11-222493

SUMMARY OF INVENTION

Technical Problem

The methacrylic resin compositions disclosed in Patent Documents 1 and 2 and the methacrylic resin compositions disclosed in Patent Documents 3 to 5, which are based on MMA as a raw material, all contain an additive. Therefore, there is a problem in that although the addition of the additive improves the light stability of the methacrylic resin composition, coloration derived from the additive occurs.

In addition, the methacrylic resin compositions containing the additive disclosed in Patent Documents 6 and 7 have a problem in that, although the long-term thermal stability of the methacrylic resin compositions is improved as the amount of the additive increases, coloration derived from the additive occurs. Since the methacrylic resin compositions disclosed in Patent Documents 3 to 5, which are based on MMA as a raw material also contain an additive, even though the long-term thermal stability is improved, coloration may occur.

Therefore, the methacrylic resin compositions of Patent Documents 1 to 7 have a problem in that they cannot be used when a specific tone and transparency are required at the same time. In addition, even when a polymerization inhibitor is added in order to maintain the quality of MMA, the quality of MMA may deteriorate during storage.

An object of the present invention is to provide a monomer composition to obtain a methacrylic resin composition having excellent light stability while maintaining transparency and heat resistance originally possessed by a methacrylic resin; a methacrylic resin composition and a production method therefor, and a molded resin object containing the methacrylic resin composition.

Another object of the present invention is to provide a monomer composition to obtain a methacrylic resin composition having excellent long-term thermal stability while maintaining transparency and heat resistance originally possessed by a methacrylic resin; a methacrylic resin composition and a production method therefor, and a molded resin object containing the methacrylic resin composition.

Solution to Problem

The present inventors conducted intensive studies to achieve the aforementioned objects. As a result, it was found that, in MMA in which quality is deteriorated during storage, an MMA concentration is decreased, and MMA dimers and methyl pyruvate are generated. When the MMA contains the MMA dimer, physical properties of the methacrylic resin composition obtained by polymerization are adversely affected. In addition, when the MMA contains the methyl pyruvate, coloration of the methacrylic resin composition obtained by polymerization increases. It was found that, when a monomer composition containing MMA contains a specific amount of an ester compound having an α-hydrogen in a specific structural formula, the quality stability during storage is improved, and the generation of the MMA dimer and methyl pyruvate is suppressed. In addition, the present inventors found that, when a polymerizable composition containing such a monomer composition is polymerized, a methacrylic resin composition having excellent light stability is obtained while maintaining transparency and heat resistance originally possessed by a methacrylic resin, thereby completing the present invention.

In addition, the present inventors found that, when a monomer composition containing MMA contains a specific amount of an α,β-unsaturated carbonyl compound having a specific structural formula, the quality stability during storage is improved, and the generation of the MMA dimer and methyl pyruvate is suppressed. In addition, the present inventors found that, when a polymerizable composition containing such a monomer composition is polymerized, a methacrylic resin composition having excellent light stability is obtained while maintaining transparency and heat resistance originally possessed by a methacrylic resin, thereby completing the present invention.

In addition, the present inventors found that, when a monomer composition containing MMA contains a specific amount of a pyrazine compound having a specific structural formula, the quality stability during storage is improved, and the generation of the MMA dimer and methyl pyruvate is suppressed. In addition, the present inventors found that, when a polymerizable composition containing such a monomer composition is polymerized, a methacrylic resin composition having excellent long-term thermal stability is obtained while maintaining transparency and heat resistance originally possessed by a methacrylic resin, thereby completing the present invention.

The gist of the present invention is as follows.

[1] A monomer composition, comprising:

methyl methacrylate; and
one compound (component A) selected from an ester compound having an α-hydrogen (component A1) represented by Formula (1-1), an α,β-unsaturated carbonyl compound (component A21) represented by Formula (2-1), an α,β-unsaturated carboxylic acid ester (component A22) represented by Formula (2-2), or a pyrazine compound (component A3) represented by Formula (3-1),
wherein, when the monomer composition contains component A1 and a concentration of component A1 with

respect to a total mass of the monomer composition is indicated by XA1 (ppm by mass), XA1 is 5 to 10000 ppm by mass,
when the monomer composition contains component A21 and a concentration of component A21 with respect to the total mass of the monomer composition is indicated by XA21 (ppm by mass), XA21 is 1 to 10000 ppm by mass,
when the monomer composition contains component A22 and a concentration of component A22 with respect to the total mass of the monomer composition is indicated by XA22 (ppm by mass), XA22 is 1 to 10000 ppm by mass, and
when the monomer composition contains component A3 and a concentration of component A3 with respect to the total mass of the monomer composition is indicated by XA3 (ppm by mass), XA3 is 1 ppm by mass or more,

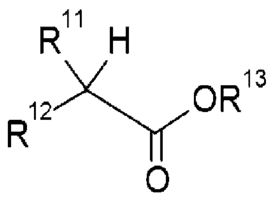

・・・(1-1)

(in Formula (1-1), $R^{11}$ and $R^{12}$ are each independently a hydrogen atom or an alkyl group having 1 to 5 carbon atoms, $R^{13}$ is an alkyl group having 1 to 5 carbon atoms, and any one or more of $R^{11}$ to $R^{13}$ is an alkyl group having 2 to 5 carbon atoms),

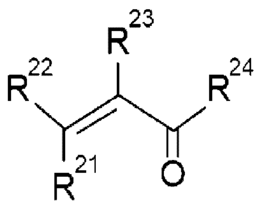

・・・(2-1)

(in Formula (2-1), $R^{21}$, $R^{22}$, and $R^{23}$ are each independently a hydrogen atom or an alkyl group having 1 to 5 carbon atoms, and $R^{24}$ is an alkyl group having 1 to 5 carbon atoms or an amino group),

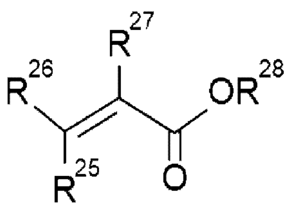

・・・(2-2)

(in Formula (2-2), $R^{25}$, $R^{26}$, and $R^{27}$ are each independently a hydrogen atom or an alkyl group having 1 to 10 carbon atoms, $R^{28}$ is an alkyl group having 1 to 10 carbon atoms, and any one or more of $R^{25}$ and $R^{26}$ is an alkyl group having 1 to 10 carbon atoms),

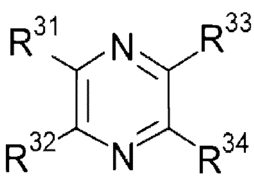

・・・(3-1)

(in Formula (3-1), $R^{31}$, $R^{32}$, $R^{33}$, and $R^{34}$ are each independently a hydrogen atom, an alkyl group having 1 to 5 carbon atoms, or an alkoxy group having 1 to 6 carbon atoms).

[2] The monomer composition according to [1],
wherein component A is component A1.
[3] The monomer composition according to [2],
wherein XA1 is 10 to 5000 ppm by mass.
[4] The monomer composition according to [2] or [3],

wherein a molecular weight of component A1 is 200 or less.

[5] The monomer composition according to any one of [2] to [4],
wherein, in Formula (1-1), $R^{11}$ and $R^{12}$ are each independently a hydrogen atom, a methyl group, an ethyl group, an n-propyl group, or an isopropyl group, and $R^{13}$ is a methyl group, an isobutyl group, or an isoamyl group.

[6] The monomer composition according to any one of [2] to [5],
wherein component A1 is at least one selected from the group consisting of isobutyl isobutyrate, methyl isovalerate, and isoamyl isobutyrate.

[7] The monomer composition according to [1],
wherein component A is component A21.

[8] The monomer composition according to [7],
wherein XA21 is 10 to 5000 ppm by mass.

[9] The monomer composition according to [7] or [8],
wherein a molecular weight of component A21 is 200 or less.

[10] The monomer composition according to any one of [7] to [9],
wherein, in Formula (2-1), $R^{21}$, $R^{22}$, and $R^{23}$ are each independently a hydrogen atom, a methyl group, an ethyl group, an n-propyl group, or an isopropyl group, and $R^{24}$ is a methyl group or an amino group.

[11] The monomer composition according to any one of [7] to [10],
wherein component A21 is at least one selected from the group consisting of isopropenyl methyl ketone and methacrylamide.

[12] The monomer composition according to [1],
wherein component A is component A22.

[13] The monomer composition according to [12],
wherein XA22 is 10 to 5000 ppm by mass.

[14] The monomer composition according to [12] or [13],
wherein a molecular weight of component A22 is 200 or less.

[15] The monomer composition according to any one of [12] to [14],
wherein, in Formula (2-2), $R^{25}$, $R^{26}$, and $R^{27}$ are each independently a hydrogen atom, a methyl group, an ethyl group, an n-propyl group, or an isopropyl group, and $R^{28}$ is a methyl group, an ethyl group, an n-propyl group, an isopropyl group, an n-butyl group, an isobutyl group, or an isopentyl group.

[16] The monomer composition according to any one of [12] to [15],
wherein component A22 is at least one selected from the group consisting of methyl crotonate and methyl 3,3-dimethylacrylate.

[17] The monomer composition according to [1],
wherein component A is component A3.

[18] The monomer composition according to [17],
wherein XA3 is 1 to 10000 ppm by mass.

[19] The monomer composition according to [17] or [18],
wherein XA3 is 1 to 1000 ppm by mass.

[20] The monomer composition according to any one of [17] to [19],
wherein a molecular weight of component A3 is 200 or less.

[21] The monomer composition according to any one of [17] to [20],
wherein, in Formula (3-1), $R^{31}$, $R^{32}$, $R^{33}$, and $R^{34}$ are each independently a hydrogen atom or an alkyl group having 1 to 5 carbon atoms.

[22] The monomer composition according to any one of [17] to [21],
wherein, in Formula (3-1), $R^{31}$, $R^{32}$, $R^{33}$, and $R^{34}$ are each independently a hydrogen atom, a methyl group, an ethyl group, an n-propyl group, or an isopropyl group.

[23] The monomer composition according to any one of [17] to [22],
wherein component A3 is at least one selected from the group consisting of 2,3,5,6-tetramethylpyrazine and 2,3,5-trimethylpyrazine.

[24] The monomer composition according to [1], further comprising:
a polymerization inhibitor (component B1).

[25] The monomer composition according to [24],
wherein, when a concentration of component B1 with respect to the total mass of the monomer composition is indicated by XB1 (ppm by mass), XB1 is 1 to 1000 ppm by mass.

[26] The monomer composition according to [24] or [25],
wherein, when the concentration of component A1 with respect to the total mass of the monomer composition is indicated by XA1 (ppm by mass) and a concentration of component B1 with respect to the total mass of the monomer composition is indicated by XB1 (ppm by mass), XB1/XA1 is 0.005 to 7.

[27] The monomer composition according to [24], wherein, when a concentration of component B1 with respect to the total mass of the monomer composition is indicated by XB1 (ppm by mass), XB1 is 1 to 2000 ppm by mass.
[28] The monomer composition according to [24] or [27], wherein, when the concentration of component A3 with respect to the total mass of the monomer composition is indicated by XA3 (ppm by mass) and a concentration of component B1 with respect to the total mass of the monomer composition is indicated by XB1 (ppm by mass), XB1/XA3 is 0.005 to 1000.
[29] The monomer composition according to any one of [24] to [28], wherein component B1 is at least one polymerization inhibitor selected from the group consisting of a phenol-based compound, a quinone-based compound, a nitrobenzene-based compound, an N-oxyl-based compound, an amine-based compound, a phosphorus-containing compound, a sulfur-containing compound, an iron-containing compound, a copper-containing compound, and a manganese-containing compound.
[30] The monomer composition according to any one of [24] to [29], wherein component B1 is at least one polymerization inhibitor selected from the group consisting of a phenol-based compound, an N-oxyl-based compound, an amine-based compound, and a sulfur-containing compound.
[31] The monomer composition according to [17], further comprising:
an ester compound having an α-hydrogen (component B2) represented by Formula (3-2),

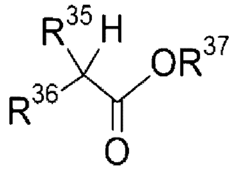

· · · (3-2)

(in Formula (3-2), $R^{35}$ and $R^{36}$ are each independently a hydrogen atom or an alkyl group having 1 to 5 carbon atoms, and $R^{37}$ is an alkyl group having 1 to 5 carbon atoms).
[32] The monomer composition according to [31], wherein, when a concentration of component B2 with respect to the total mass of the monomer composition is indicated by XB2 (ppm by mass), XB2 is 5 to 10000 ppm by mass.
[33] The monomer composition according to [31] or [32], wherein, when a concentration of component B2 with respect to the total mass of the monomer composition is indicated by XB2 (ppm by mass), XB2/XA3 is 0.005 to 1000.
[34] The monomer composition according to any one of [31] to [33], wherein, in Formula (3-2), $R^{35}$ and $R^{36}$ are each independently a hydrogen atom, a methyl group, an ethyl group, an n-propyl group, or an isopropyl group, and $R^{37}$ is a methyl group, an ethyl group, an n-propyl group, or an isopropyl group.
[35] The monomer composition according to [17], further comprising:
an α,β-unsaturated carbonyl compound (component B3) represented by Formula (3-3),

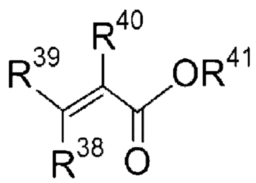

· · · (3-3)

(in Formula (3-3), $R^{38}$, $R^{39}$, and $R^{40}$ are each independently a hydrogen atom or an alkyl group having 1 to 10 carbon atoms, and $R^{41}$ is an alkyl group having 1 to 10 carbon atoms).
[36] The monomer composition according to [35], wherein, when a concentration of component B3 is indicated by XB3 (ppm by mass), XB3 is 5 to 10000 ppm by mass.
[37] The monomer composition according to [35] or [36], wherein, when a concentration of component B3 is indicated by XB3 (ppm by mass), XB3/XA3 is 0.005 to 1000.
[38] The monomer composition according to any one of [35] to [37], wherein, in Formula (3-3), $R^{38}$, $R^{39}$, and $R^{40}$ are each independently a hydrogen atom, a methyl group, an ethyl group, an n-propyl group, or an isopropyl group, and $R^{41}$ is a methyl group, an ethyl group, an n-propyl group, or an isopropyl group.
[39] The monomer composition according to any one of [1] to [38], wherein, when a concentration of the methyl methacrylate with respect to the total mass of the monomer composition

is indicated by XM (% by mass), XM is 85% by mass or more.

[40] The monomer composition according to any one of [1] to [39], further comprising:

an acrylic acid ester.

[41] The monomer composition according to [40],

wherein the acrylic acid ester is at least one selected from the group consisting of methyl acrylate, ethyl acrylate, and n-butyl acrylate.

[42] The monomer composition according to any one of [1] to [41], further comprising:

styrene.

[43] A production method for a methacrylic resin composition, comprising:

a step of radically polymerizing a polymerizable composition containing the monomer composition according to any one of [1] to [42].

[44] A methacrylic resin composition, comprising:

a polymer of the monomer composition according to any one of [1] to [42].

[45] A methacrylic resin composition, comprising:

a methacrylic polymer; and

one compound (component A) selected from an ester compound having an α-hydrogen (component A1) represented by Formula (1-1), an α,β-unsaturated carbonyl compound (component A21) represented by Formula (2-1), an α,β-unsaturated carboxylic acid ester (component A22) represented by Formula (2-2), or a pyrazine compound (component A3) represented by Formula (3-1),

wherein, when the methacrylic resin composition contains component A1 and a concentration of component A1 with respect to a total mass of the methacrylic resin composition is indicated by YA1 (ppm by mass), YA1 is 5 to 10000 ppm by mass,

when the methacrylic resin composition contains component A21 and a concentration of component A21 with respect to the total mass of the methacrylic resin composition is indicated by YA21 (ppm by mass), YA21 is 0.1 to 4000 ppm by mass,

when the methacrylic resin composition contains component A22 and a concentration of component A22 with respect to the total mass of the methacrylic resin composition is indicated by YA22 (ppm by mass), YA22 is 1 to 10000 ppm by mass, and

when the methacrylic resin composition contains component A3 and a concentration of component A3 with respect to the total mass of the methacrylic resin composition is indicated by YA3 (ppm by mass), YA3 is 1 ppm by mass or more,

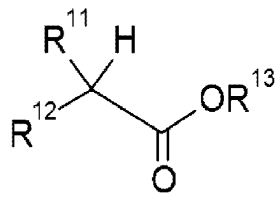 · · · (1-1)

(in Formula (1-1), $R^{11}$ and $R^{12}$ are each independently a hydrogen atom or an alkyl group having 1 to 5 carbon atoms, $R^{13}$ is an alkyl group having 1 to 5 carbon atoms, and any one or more of $R^{11}$ to $R^{13}$ is an alkyl group having 2 to 5 carbon atoms),

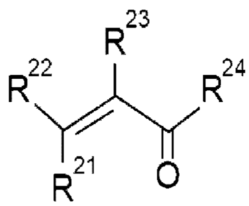 · · · (2-1)

(in Formula (2-1), $R^{21}$, $R^{22}$, and $R^{23}$ are each independently a hydrogen atom or an alkyl group having 1 to 5 carbon atoms, and $R^{24}$ is an alkyl group having 1 to 5 carbon atoms or an amino group),

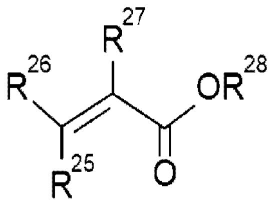

· · · (2-2)

(in Formula (2-2), $R^{25}$, $R^{26}$, and $R^{27}$ are each independently a hydrogen atom or an alkyl group having 1 to 10 carbon atoms, $R^{28}$ is an alkyl group having 1 to 10 carbon atoms, and any one or more of $R^{25}$ and $R^{26}$ is an alkyl group having 1 to 10 carbon atoms),

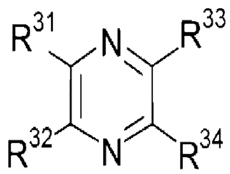

· · · (3-1)

(in Formula (3-1), $R^{31}$, $R^{32}$, $R^{33}$, and $R^{34}$ are each independently a hydrogen atom, an alkyl group having 1 to 5 carbon atoms, or an alkoxy group having 1 to 6 carbon atoms).

[46] The methacrylic resin composition according to [45],
wherein component A is component A1.
[47] The methacrylic resin composition according to [46],
wherein YA1 is 10 to 5000 ppm by mass.
[48] The methacrylic resin composition according to [46] or [47],
wherein, in Formula (1-1), $R^{11}$ and $R^{12}$ are each independently a hydrogen atom, a methyl group, an ethyl group, an n-propyl group, or an isopropyl group, and $R^{13}$ is a methyl group, an isobutyl group, or an isoamyl group.
[49] The methacrylic resin composition according to any one of [46] to [48],
wherein component A1 is at least one selected from the group consisting of isobutyl isobutyrate, methyl isovalerate, and isoamyl isobutyrate.
[50] The methacrylic resin composition according to [45],
wherein component A is component A21.
[51] The methacrylic resin composition according to [50],
wherein YA21 is 1 to 4000 ppm by mass.
[52] The methacrylic resin composition according to [50],
wherein YA21 is 10 to 1000 ppm by mass.
[53] The methacrylic resin composition according to [50] or [51],
wherein, in Formula (2-1), $R^{21}$, $R^{22}$, and $R^{23}$ are each independently a hydrogen atom, a methyl group, an ethyl group, an n-propyl group, or an isopropyl group, and $R^{24}$ is a methyl group or an amino group.
[54] The methacrylic resin composition according to any one of [50] to [53],
wherein component A21 is at least one selected from the group consisting of isopropenyl methyl ketone and methacrylamide.
[55] The methacrylic resin composition according to [45],
wherein component A is component A22.
[56] The methacrylic resin composition according to [55],
wherein YA22 is 10 to 5000 ppm by mass.
[57] The methacrylic resin composition according to [55] or [56],
wherein, in Formula (2-2), $R^{25}$, $R^{26}$, and $R^{27}$ are each independently a hydrogen atom, a methyl group, an ethyl group, an n-propyl group, or an isopropyl group, and $R^{28}$ is a methyl group, an ethyl group, an n-propyl group, an isopropyl group, an n-butyl group, an isobutyl group, or an isopentyl group.
[58] The methacrylic resin composition according to any one of [55] to [57],
wherein component A22 is at least one selected from the group consisting of methyl crotonate and methyl 3,3-dimethylacrylate.
[59] The methacrylic resin composition according to [45],
wherein component A is component A3.
[60] The methacrylic resin composition according to [59],
wherein YA3 is 1 to 10000 ppm by mass.

[61] The methacrylic resin composition according to [59], wherein YA3 is 1 to 1000 ppm by mass.

[62] The methacrylic resin composition according to any one of [59] to [61], wherein, in Formula (3-1), $R^{31}$, $R^{32}$, $R^{33}$, and $R^{34}$ are each independently a hydrogen atom or an alkyl group having 1 to 5 carbon atoms.

[63] The methacrylic resin composition according to any one of [59] to [62], wherein, in Formula (3-1), $R^{31}$, $R^{32}$, $R^{33}$, and $R^{34}$ are each independently a hydrogen atom, a methyl group, an ethyl group, an n-propyl group, or an isopropyl group.

[64] The methacrylic resin composition according to any one of [59] to [63], wherein component A3 is at least one selected from the group consisting of 2,3,5,6-tetramethylpyrazine and 2,3,5-trimethylpyrazine.

[65] The methacrylic resin composition according to any one of [45] to [64], further comprising: a polymerization inhibitor (component B1).

[66] The methacrylic resin composition according to [65], wherein, when a concentration of component B1 with respect to the total mass of the methacrylic resin composition is indicated by YB1 (ppm by mass), YB1 is 1 to 2000 ppm by mass.

[67] The methacrylic resin composition according to [65] or [66], wherein, when a concentration of component B1 with respect to the total mass of the methacrylic resin composition is indicated by YB1 (ppm by mass), YB1/YA3 is 0.005 to 1000.

[68] The methacrylic resin composition according to any one of [65] to [67], wherein component B1 is at least one polymerization inhibitor selected from the group consisting of a phenol-based compound, a quinone-based compound, a nitrobenzene-based compound, an N-oxyl-based compound, an amine-based compound, a phosphorus-containing compound, a sulfur-containing compound, an iron-containing compound, a copper-containing compound, and a manganese-containing compound.

[69] The methacrylic resin composition according to any one of [65] to [68], wherein component B1 is at least one polymerization inhibitor selected from the group consisting of a phenol-based compound, an N-oxyl-based compound, an amine-based compound, and a sulfur-containing compound.

[70] The methacrylic resin composition according to [59], further comprising: an ester compound having an α-hydrogen (component B2) represented by Formula (3-2),

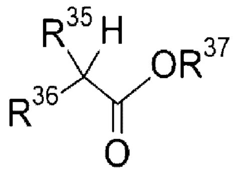

· · · (3-2)

(in Formula (3-2), $R^{35}$ and $R^{36}$ are each independently a hydrogen atom or an alkyl group having 1 to 5 carbon atoms, and $R^{37}$ is an alkyl group having 1 to 5 carbon atoms).

[71] The methacrylic resin composition according to [70], wherein, when a concentration of component B2 with respect to the total mass of the methacrylic resin composition is indicated by YB2 (ppm by mass), YB2 is 5 to 10000 ppm by mass.

[72] The methacrylic resin composition according to [70] or [71], wherein, when a concentration of component B2 with respect to the total mass of the methacrylic resin composition is indicated by YB2 (ppm by mass), YB2/YA3 is 0.005 to 1000.

[73] The methacrylic resin composition according to any one of [70] to [72], wherein, in Formula (3-2), $R^{35}$ and $R^{36}$ are each independently a hydrogen atom, a methyl group, an ethyl group, an n-propyl group, or an isopropyl group, and $R^{37}$ is a methyl group, an ethyl group, an n-propyl group, or an isopropyl group.

[74] The methacrylic resin composition according to [59], further comprising: an α,β-unsaturated carbonyl compound (component B3) represented by Formula (3-3),

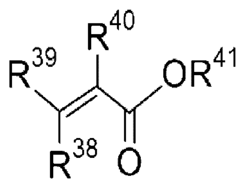

· · · (3-3)

(in Formula (3-3), $R^{38}$, $R^{39}$, and $R^{40}$ are each independently a hydrogen atom or an alkyl group having 1 to 10 carbon atoms, and $R^{41}$ is an alkyl group having 1 to 10 carbon atoms).

[75] The methacrylic resin composition according to [74],
wherein, when a concentration of component B3 with respect to the total mass of the methacrylic resin composition is indicated by YB3 (ppm by mass), YB3 is 5 to 10000 ppm by mass.

[76] The methacrylic resin composition according to [74] or [75],
wherein, when a concentration of component B3 with respect to the total mass of the methacrylic resin composition is indicated by YB3 (ppm by mass), YB3/YA3 is 0.005 to 1000.

[77] The methacrylic resin composition according to any one of [74] to [76],
wherein, in Formula (3-3), $R^{38}$, $R^{39}$, and $R^{40}$ are each independently a hydrogen atom, a methyl group, an ethyl group, an n-propyl group, or an isopropyl group, and $R^{41}$ is a methyl group, an ethyl group, an n-propyl group, or an isopropyl group.

[78] The methacrylic resin composition according to any one of [45] to [77],
wherein the methacrylic polymer includes, with respect to a total mass of the methacrylic polymer, 70% to 100% by mass of a repeating unit derived from methyl methacrylate and 0% to 30% by mass of a repeating unit derived from an acrylic acid ester.

[79] The methacrylic resin composition according to any one of [45] to [77],
wherein the methacrylic polymer includes, with respect to a total mass of the methacrylic polymer, 50% to 100% by mass of a repeating unit derived from methyl methacrylate and 0% to 50% by mass of a repeating unit derived from styrene.

[80] A molded resin object, comprising:
the methacrylic resin composition according to any one of [45] to [79].

## Advantageous Effects of Invention

According to the embodiments in which component A1, component A21, or component A22 is used, it is possible to provide a methacrylic resin composition having excellent light stability while maintaining transparency and heat resistance originally possessed by a methacrylic resin, and a monomer composition having high quality stability to obtain the methacrylic resin composition.

According to the embodiment in which component A3 is used, it is possible to provide a methacrylic resin composition having excellent long-term thermal stability while maintaining transparency and heat resistance originally possessed by a methacrylic resin, and a monomer composition having high quality stability to obtain a methacrylic resin composition.

## DESCRIPTION OF EMBODIMENTS

Hereinafter, embodiments according to the present invention will be described, but the present invention is not limited to the following.

**In** the present specification, a numerical value range represented using "to" means a range including the numerical values written before and after "to" as a lower limit value and an upper limit value, and "A to B" means A or more and B or less.

As described later, the monomer composition and the methacrylic resin composition according to the embodiment contain a specific amount of one component A selected from component A1, component A21, component A22, or component A3.

Hereinafter, embodiments containing each component will be described.

### <<First embodiment>>

### [1. Monomer composition]

The monomer composition according to a first embodiment contains MMA and an ester compound having an $\alpha$-hydrogen (component A1) represented by Formula (1-1).

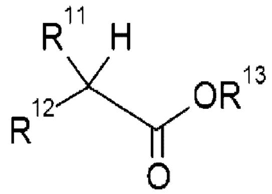 · · · (1-1)

In Formula (1-1), $R^{11}$ and $R^{12}$ are each independently a hydrogen atom or an alkyl group having 1 to 5 carbon atoms, and $R^{13}$ is an alkyl group having 1 to 5 carbon atoms. In addition, any one or more of $R^{11}$ to $R^{13}$ is an alkyl group having 2 to 5 carbon atoms.
When a concentration of component A1 with respect to the total mass of the monomer composition according to the first embodiment is indicated by XA1 (ppm by mass), XA1 is 5 to 10,000 ppm by mass.
It is preferable that the monomer composition according to the first embodiment further contain a polymerization inhibitor (component B1). **In** addition, the monomer composition may contain a monomer other than MMA, other compounds (component C), or water, as long as the effect of the present invention is not impaired.
Hereinafter, each item will be described in detail.

<1-1. Methyl methacrylate>

The monomer composition according to the first embodiment contains MMA. The MMA can be produced by, for example, an acetone cyanohydrin method, a new acetone cyanohydrin method, a C4 direct oxidation method, a direct metal method, an ethylene method, a new ethylene method, or the like. The MMA contained in the monomer composition is preferably produced by a C4 direct oxidation method, and more preferably produced by a C4 direct oxidation method using isobutanol derived from a biomass as a starting raw material.

<1-2. Component A1>

The monomer composition according to the first embodiment contains an ester compound having an $\alpha$-hydrogen (component A1) represented by Formula (1-1). In the present specification, the "$\alpha$-hydrogen" represents a hydrogen atom bonded to a carbon atom adjacent to a carbon atom of a carbonyl group. When the monomer composition contains component A1, the generation of the MMA dimer and methyl pyruvate can be suppressed. The reason for this is presumed as follows.
Since an ester compound having an $\alpha$-hydrogen has weak acidity and can trap an anion, component A1 can suppress a dimerization reaction of MMA by an anion mechanism. In addition, methyl pyruvate is generated by oxidizing MMA with a hydroxyl radical and an oxygen molecule. Component A1 can trap a radical intermediate generated by a reaction between the hydroxyl radical and MMA, and return the intermediate to MMA. Therefore, it is presumed that the generation of the MMA dimer and methyl pyruvate is suppressed.
A molecular weight of component A1 is preferably 200 or less. When the molecular weight thereof is 200 or less, the number of $\alpha$-hydrogens per unit mass in component A1 can be increased, and thus the effect of the present invention can be obtained with a smaller mass. The molecular weight of component A1 is more preferably 190 or less, still more preferably 180 or less, and particularly preferably 170 or less.
$R^{11}$ and $R^{12}$ in Formula (1-1) are each independently a hydrogen atom or an alkyl group having 1 to 5 carbon atoms. $R^{11}$ and $R^{12}$ may be the same as or different from each other. In addition, $R^{13}$ in Formula (1-1) is an alkyl group having 1 to 5 carbon atoms. $R^{13}$ and $R^{11}$, or $R^{13}$ and $R^{12}$ may be the same as or different from each other. In addition, any one or more of $R^{11}$ to $R^{13}$ is an alkyl group having 2 to 5 carbon atoms.
In general, the $\alpha$-hydrogen of the ester compound has a property of reacting with an anion or a radical, but reactivity may be reduced depending on the type of a substituent. When $R^{11}$, $R^{12}$, and $R^{13}$ satisfy the above-described conditions, the reactivity of the $\alpha$-hydrogen of component A1 with an anion or a radical is maintained, and thus the effect of the present invention can be obtained. It is preferable that $R^{11}$ and $R^{12}$ be each independently a hydrogen atom or an alkyl group having 1 to 5 carbon atoms, and the total number of carbon atoms in $R^{11}$ and $R^{12}$ be 1 to 10; it is more preferable that $R^{11}$ and $R^{12}$ be each independently a hydrogen atom, a methyl group, an ethyl group, an n-propyl group, an isopropyl group, an n-butyl group, a 1-methylpropyl group, or a 2-methylpropyl group, and the total number of carbon atoms in $R^{11}$ and $R^{12}$ be 1 to 8; and it is still more preferable that $R^{11}$ and $R^{12}$ be each independently a hydrogen atom, a methyl group, an ethyl group, an n-propyl group, or an isopropyl group, and the total number of carbon atoms in $R^{11}$ and $R^{12}$ be 1 to 6. In addition, $R^{13}$ is preferably a methyl group, an ethyl group, an n-propyl group, an isopropyl group, a 1-methylpropyl group, a 2-methylpropyl group, an n-pentyl group, a 1-methylbutyl group, a 2-methylbutyl group, a 3-methylbutyl group, a 1-ethylpropyl group, a 2-ethylpropyl group, or a 1,2-dimethylpropyl group; more preferably an ethyl group, an n-propyl group, an isopropyl group, a 1-methylpropyl group, a 2-methylpropyl group, an n-pentyl group, a 1-methylbutyl group, a 2-methylbutyl group, a 3-methylbutyl group, a 1-ethylpropyl group, a 2-ethylpropyl group, or a 1,2-dimethylpropyl group; still more preferably an n-propyl group, an isopropyl group, a 1-methylpropyl group, a 2-methylpropyl group, an n-pentyl group, a 1-methylbutyl group, a 2-methylbutyl group, a 3-methylbutyl group, a 1-ethylpropyl group, a 2-ethylpropyl group, or a 1,2-dimethylpropyl group; particularly preferably a 1-methylpropyl group, a 2-methylpropyl group, an n-pentyl group, a 1-methylbutyl group, a 2-methylbutyl group, a 3-methylbutyl group, a 1-ethylpropyl group, a 2-ethylpropyl group, or a 1,2-dimethylpropyl group; and most preferably a 2-methylpropyl group or a 3-methylbutyl group. Since these groups are substituents having high stability, component A1 can be prevented from being changed into other compounds during storage.

Among the compounds satisfying the above-described conditions, from the viewpoint of quality stability of the monomer composition during storage and quality of the methacrylic resin composition obtained by polymerizing the monomer composition, component A1 is more preferably at least one selected from the group consisting of isobutyl isobutyrate, methyl isovalerate, and isoamyl isobutyrate, and more preferably at least one selected from the group consisting of isobutyl isobutyrate and isoamyl isobutyrate.

Component A1 may be one kind or two or more kinds.

<1-3. Component B1>

The monomer composition according to the first embodiment preferably contains a polymerization inhibitor (component B1). In the present specification, the "polymerization inhibitor" means a compound having a function of suppressing the polymerization reaction of MMA. Examples of the polymerization inhibitor include a phenol-based compound, a quinone-based compound, a nitrobenzene-based compound, an N-oxyl-based compound, an amine-based compound, a phosphorus-containing compound, a sulfur-containing compound, an iron-containing compound, a copper-containing compound, and a manganese-containing compound.

By containing component B1, it is possible to suppress the dimerization reaction of MMA by a radical mechanism during the storage of MMA. **In** addition, component B can trap the above-described hydroxyl radical generated during the storage of MMA. That is, when the monomer composition contains component B1 in addition to component A1, the generated amount of the methyl pyruvate can be reduced by two different mechanisms in which the hydroxyl radical generated by component B1 is removed and the radical intermediate generated by the reaction between the hydroxy radical and MMA is trapped by component A1, and the intermediate is returned to MMA. Therefore, it is considered that the generation of the MMA dimer and methyl pyruvate can be efficiently suppressed.

Examples of the polymerization inhibitor as the phenol-based compound include alkylphenol, hydroxyphenol, aminophenol, nitrophenol, nitrosophenol, alkoxyphenol, and tocopherol.

Examples of the alkylphenol include o-cresol, m-cresol, p-cresol, 2-t-butyl-4-methylphenol, 2,4-dimethyl-6-t-butylphenol, 2,6-di-t-butyl-4-methylphenol, 2-t-butylphenol, 4-t-butylphenol, 2,4-di-t-butylphenol, 2-methyl-4-t-butylphenol, 4-t-butyl-2,6-dimethylphenol, 2,2'-methylenebis(6-t-butyl-4-methylphenol), 2,2'-methylenebis(4-ethyl-6-t-butylphenol), 4,4'-thiobis(3-methyl-6-t-butylphenol), and 3,5-di-t-butyl-4-hydroxytoluene.

Examples of the hydroxyphenol include hydroquinone, 2-methylhydroquinone, 2-t-butylhydroquinone, 2,5-di-t-butylhydroquinone, 2,6-di-t-butylhydroquinone, 2,5-di-t-amylhydroquinone, 2-t-butylmethoxyhydroquinone, 2,3,5-trimethylhydroquinone, 2,5-dichlorohydroquinone, 1,2-dihydroxybenzene, 2-acetylhydroquinone, 4-methylcatechol, 4-t-butylcatechol, 2-methylresorcinol, 4-methylresorcinol, and 2,3-dihydroxyacetophenone.

Examples of the aminophenol include o-aminophenol, m-aminophenol, p-aminophenol, 2-(N,N-dimethylamino)phenol, and 4-(ethylamino)phenol.

Examples of the nitrophenol include o-nitrophenol, m-nitrophenol, p-nitrophenol, and 2,4-dinitrophenol.

Examples of the nitrosophenol include o-nitrosophenol, m-nitrosophenol, p-nitrosophenol, and $\alpha$-nitroso-$\beta$-naphthol.

Examples of the alkoxyphenol include 2-methoxyphenol, 2-ethoxyphenol, 2-isopropoxyphenol, 2-t-butoxyphenol, 4-methoxyphenol, 4-ethoxyphenol, 4-propoxyphenol, 4-butoxyphenol, 4-t-butoxyphenol, 4-heptoxyphenol, hydroquinone monobenzyl ether, t-butyl-4-methoxyphenol, di-t-butyl-4-methoxyphenol, pyrogallol-1,2-dimethylether, and hydroquinone monobenzate.

Examples of the tocopherol include $\alpha$-tocopherol and 2,3-dihydro-2,2-dimethyl-7-hydroxybenzofuran.

Examples of the polymerization inhibitor as the quinone-based compound include p-benzoquinone, chloro-p-benzoquinone, 2,5-dichloro-p-benzoquinone, 2,6-dichloro-p-benzoquinone, tetrachloro-p-benzoquinone, tetrabromo-p-benzoquinone, 2,3-dimethyl-p-benzoquinone, 2,5-dimethyl-p-benzoquinone, methoxy-p-benzoquinone, and methyl-p-benzoquinone.

Examples of the polymerization inhibitor as the nitrobenzene-based compound include nitrobenzene, o-dinitrobenzene, m-dinitrobenzene, p-dinitrobenzene, 2,4-dinitrotoluene, dinitrodurene, and 2,2-diphenyl-1-picrylhydrazine.

Examples of the polymerization inhibitor as the N-oxyl-based compound include 4-hydroxy-2,2,6,6-tetramethyl-piperidine-N-oxyl, 4-oxo-2,2,6,6-tetramethyl-piperidine-N-oxyl, 4-acetoxy-2,2,6,6-tetramethyl-piperidine-N-oxyl, 2,2,6,6-tetramethyl-piperidine-N-oxyl, piperidine-1-oxyl, 4-(dimethylamino)-2,2,6,6-tetramethyl-piperidine-N-oxyl, 4-amino-2,2,6,6-tetramethyl-piperidine-N-oxyl, 4-ethenoloxy-2,2,6,6-tetramethylpiperidine-N-oxyl, 4-benzoyloxy-2,2,6,6-tetramethyl-piperidine-N-oxyl, 2,2,5,5-tetramethyl-piperidine-N-oxyl, 3-amino-2,2,5,5-tetramethyl-piperidine-N-oxyl, 4,4',4"-tris(2,2,6,6-tetramethyl-piperidine-N-oxyl)phosphite, 3-oxo-2,2,5,5-tetramethylpyrrolidine-N-oxyl, pyrrolidine-1-oxyl, 2,2,5,5-tetramethyl-1-oxa-3-azacyclopentyl-3-oxy, 2,2,5,5-tetramethyl-3-pyrrolinyl-1-oxy-3-carboxylic acid, 2,2,3,3,5,5,6,6-octamethyl-1,4-diazacyclohexyl-1,4-dioxy, di-tert-butyl nitroxide, and di-tert-amyl nitroxide.

Examples of the polymerization inhibitor as the amine-based compound include N,N-diphenylamine, alkylated diphenylamine, 4,4'-dicamyl-diphenylamine, 4,4'-dioctyldiphenylamine, 4-aminodiphenylamine, p-nitrosodiphenylamine, N-nitrosodinaphthylamine, N-nitrosodiphenylamine, N-nitrosophenylnaphthylamine, N-nitrosophenylhydroxylamine, N,N'-dialkyl-p-phenylenediamine (alkyl groups may be the same as or different from each other, each independently have 1 to 4 carbon atoms, and may be linear or branched), N,N'-diphenyl-p-phenylenediamine, N-phenyl-N'-isopropyl-p-phenylenediamine, N-(1,3-dimethylbutyl)-N'-phenyl-1,4-phenylenediamine, N,N'-di-2-naphthyl-p-phenylenediamine, N,N-diethylhydroxylamine, 1,4-benzenediamine, N-(1,4-dimethylpentyl)-N'-phenyl-1,4-benzenediamine, N-(1,3-dimethylbutyl)-N'-phenyl-1,4-benzenediamine, 6-ethoxy-2,2,4-trimethyl-1,2-dihydroquinoline, 2,2,4-trimethyl-1,2-dihydroquinoline polymer, aldol-α-naphthylamine, N-phenyl-β-naphthylamine, 4-hydroxy-2,2,6,6-tetramethylpiperidine, 4-benzoyloxy-2,2,6,6-tetramethylpiperidine, 1,4-dihydroxy-2,2,6,6-tetramethylpiperidine, and 1-hydroxy-4-benzoyloxy-2,2,6,6-tetramethylpiperidine.

Examples of the polymerization inhibitor as the phosphorus-containing compound include triphenylphosphine, triphenylphosphite, triethylphosphite, tris(isodecyl)phosphite, tris(tridecyl)phosphite, phenyldiisooctylphosphite, phenyldiisodecylphosphite, phenyldi(tridecyl)phosphite, diphenyliisooctylphosphite, diphenyldiisodecylphosphite, diphenyldi(tridecyl)phosphite, phosphonic acid [1,1-diphenyl-4,4'-diylbistetraxis-2,4-bis(1,1-dimethylethyl)phenyl] ester, tris(nonylphenyl)phosphite, 4,4'-isopropylidenediphenol alkylphosphite, tris(2,4-di-tert-butylphenyl)phosphite, tris(biphenyl) phosphite, distearyl pentaerythritol diphosphite, di(2,4-di-tert-butylphenyl)pentaerythritol diphosphite, di(nonylphenyl) pentaerythritol diphosphite, phenyl bisphenol A pentaerythritol diphosphite, tetra(tridecyl)-4,4'-butylidenebis(3-methyl-6-tert-butylphenol) diphosphite, hexa(tridecyl)-1,1,3-tris(2-methyl-4-hydroxy-5-tert-butylphenyl)butanetriphosphite, 3,5-di-tert-butyl-4-hydroxybenzyl phosphate diethyl ester, sodium-bis(4-tert-butylphenyl)phosphate, sodium-2,2'-methylene-bis(4,6-di-tert-butylphenyl)phosphate, and 1,3-bis(diphenoxyphosphoryloxy)benzene.

Examples of the polymerization inhibitor as the sulfur-containing compound include diphenyl sulfide, phenothiazine, 3-oxophenothiazine, 5-oxophenothiazine, a phenothiazine dimer, 1,4-dimercaptobenzene, 1,2-dimercaptobenzene, 2-mercaptophenol, 4-mercaptophenol, 2-(methylthio)phenol, 3,7-bis(dimethylamino)phenothiazinium chloride, and sulfur (simple substance).

Examples of the polymerization inhibitor as the iron-containing compound include iron (III) chloride.

Examples of the polymerization inhibitor as the copper-containing compound include copper dimethyldithiocarbamate, copper diethyldithiocarbamate, copper dibutyldithiocarbamate, copper salicylate, copper acetate, copper thiocyanate, copper nitrate, copper chloride, copper carbonate, copper hydroxide, copper acrylate, and copper methacrylate.

Examples of the polymerization inhibitor as the manganese-containing compound include manganese dialkyldithiocarbamate (alkyl group is any of a methyl group, an ethyl group, a propyl group, or a butyl group, and the alkyl groups may be the same as or different from each other), manganese diphenyldithiocarbamate, manganese formate, manganese acetate, manganese octanoate, manganese naphthenate, manganese permanganate, and manganese salt of ethylenediaminetetraacetic acid.

Among these, from the viewpoint of quality stability of the monomer composition during storage, component B1 is preferably at least one polymerization inhibitor selected from the group consisting of a phenol-based compound, an N-oxyl-based compound, an amine-based compound, and a sulfur-containing compound; more preferably at least one polymerization inhibitor selected from the group consisting of hydroquinone, 4-methoxyphenol, 2,4-dimethyl-6-t-butylphenol, 2,6-di-t-butyl-4-methylphenol, 4-hydroxy-2,2,6,6-tetramethylpiperidine-N-oxyl, N,N-diphenylamine, N-nitrosodiphenylamine, and phenothiazine; still more preferably at least one polymerization inhibitor selected from the group consisting of hydroquinone, 4-methoxyphenol, 2,4-dimethyl-6-t-butylphenol, 2,6-di-t-butyl-4-methylphenol, N,N-diphenylamine, N-nitrosodiphenylamine, and phenothiazine; even more preferably hydroquinone, 4-methoxyphenol, 2,4-dimethyl-6-t-butylphenol, N,N-diphenylamine, N-nitrosodiphenylamine, or phenothiazine; particularly preferably hydroquinone, 4-methoxyphenol, 2,4-dimethyl-6-t-butylphenol, or phenothiazine; and especially preferably hydroquinone, 4-methoxyphenol, 2,4-dimethyl-6-t-butylphenol, or phenothiazine.

Component B1 may be one kind or two or more kinds.

When the monomer composition contains a compound corresponding to both component A1 and component B1, the compound is regarded as component A1. That is, when the monomer composition contains component A1 and component B1, it means that the monomer composition contains another component B1 different from the compound. When the monomer composition contains two or more kinds of compounds corresponding to both component A1 and

component B1, a compound having the highest molar concentration in the monomer composition is regarded as component A1, and the other compounds are regarded as component B1.

<1-4. Monomer other than methyl methacrylate>

The monomer composition according to the first embodiment may contain a monomer other than MMA. In the present specification, the "monomer" means an unpolymerized compound having a polymerizable functional group. Examples of the monomer other than MMA include monomers shown in the following (1) to (16). One kind of the monomer shown in the following (1) to (16) can be used alone, or two or more kinds thereof can be used in any ratio and combination.

(1) Methacrylic acid ester:
for example, ethyl methacrylate, isopropyl methacrylate, n-butyl methacrylate, iso-butyl methacrylate, tert-butyl methacrylate, 2-ethylhexyl methacrylate, phenyl methacrylate, or benzyl methacrylate,
(2) Acrylic acid ester:
for example, methyl acrylate, ethyl acrylate, n-butyl acrylate, iso-butyl acrylate, tert-butyl acrylate, or 2-ethylhexyl acrylate,
(3) Unsaturated carboxylic acid:
for example, acrylic acid, methacrylic acid, maleic acid, or itaconic acid,
(4) Unsaturated carboxylic acid anhydride:
for example, maleic acid anhydride or itaconic acid anhydride,
(5) Maleimide:
for example, N-phenylmaleimide or N-cyclohexylmaleimide,
(6) Hydroxy group-containing vinyl monomer:
for example, 2-hydroxyethyl acrylate, 2-hydroxyethyl methacrylate, or 2-hydroxypropyl methacrylate,
(7) Vinyl ester:
for example, vinyl acetate or vinyl benzoate,
(8) vinyl chloride, vinylidene chloride, or derivatives thereof,
(9) Nitrogen-containing vinyl monomer:
for example, methacrylic amide or acrylonitrile,
(10) Epoxy group-containing monomer:
for example, glycidyl acrylate or glycidyl methacrylate,
(11) Aromatic vinyl monomer:
for example, styrene or $\alpha$-methylstyrene,
(12) Alkanediol di(meth)acrylate:
for example, ethylene glycol di(meth)acrylate, 1,2-propylene glycol di(meth)acrylate, 1,3-butylene glycol di(meth) acrylate, or 1,6-hexanediol di(meth)acrylate,
(13) Polyoxyalkylene glycol di(meth)acrylate:
for example, diethylene glycol di(meth)acrylate, dipropylene glycol di(meth)acrylate, triethylene glycol (meth)acrylate, tetraethylene glycol di(meth)acrylate, polyethylene glycol di(meth)acrylate, or neopentyl glycol di(meth)acrylate; here, "(meth)acrylate" means at least one selected from "acrylate" or "methacrylate",
(14) Vinyl monomer having two or more ethylenically unsaturated bonds in the molecule:
for example, divinylbenzene,
(15) Unsaturated polyester prepolymer obtained from at least one polyvalent carboxylic acid including an ethylenically unsaturated polycarboxylic acid and at least one diol,
(16) Vinyl ester prepolymer obtained by acrylic-modifying a terminal of epoxy group.

A methacrylic polymer contained in a methacrylic resin composition according to a first embodiment, which will be described later, is preferably a copolymer including a repeating unit derived from MMA and a repeating unit derived from a vinyl monomer copolymerizable with MMA, and the vinyl monomer is preferably an acrylic acid ester or styrene. Therefore, it is preferable that the monomer composition according to the first embodiment further contain an acrylic acid ester or styrene as the monomer other than MMA.

<1-5. Component C>

The monomer composition according to the first embodiment may contain other compounds (component C). Examples of component C include known additives such as a release agent, a thermal stabilizer, a lubricant, a plasticizer, an antioxidant, an antistatic agent, a light stabilizer other than component A1, an ultraviolet absorber, a flame retardant, a

flame retardant aid, a filler, a pigment, a dye, a silane coupling agent, a leveling agent, an antifoaming agent, and a fluorescent agent. The above-described additive can be used alone or in combination of any two or more kinds thereof.

In addition, examples of component C include impurities generated in the process of producing MMA, such as diacetyl. From the viewpoint of reducing coloration of the monomer composition, a concentration of the diacetyl is preferably 55 (μmol/L) or less, more preferably 20 (μmol/L) or less, still more preferably 10 (μmol/L) or less, and particularly preferably 1 μmol/L or less.

Component C may be one kind or two or more kinds.

<1-6. Concentration of each component in monomer composition>

In the monomer composition according to the first embodiment, when a concentration of MMA with respect to the total mass of the monomer composition is indicated by XM (% by mass), XM is preferably 85% by mass or more. The lower limit of XM is more preferably 90% by mass or more, still more preferably 95% by mass or more, particularly preferably 97% by mass or more, especially preferably 97.5% by mass or more, and most preferably 98.0% by mass or more. In addition, the upper limit of XM is usually 99.99% by mass or less, and may be 99.98% by mass or less or 99.97% by mass or less. Therefore, examples of XM include ranges of 85% to 99.99% by mass, 90% to 99.98% by mass, 95% to 99.97% by mass, 97% to 99.97% by mass, 97% to 99.97% by mass, 97.5% to 99.97% by mass, and 98.0% to 99.75% by mass.

In the monomer composition according to the first embodiment, when a concentration of component A1 with respect to the total mass of the monomer composition is indicated by XA1 (ppm by mass), XA1 is 5 to 10,000 ppm by mass. When XA1 is 5 ppm by mass or more, an effect of improving the quality stability of the monomer composition can be sufficiently obtained. In addition, when XA1 is 10,000 ppm by mass or less, the amount of impurities when a methacrylic resin composition is produced by polymerization of the monomer composition can be reduced, and adverse effects on physical properties of the methacrylic resin composition can be prevented. The lower limit of XA1 is preferably 10 ppm by mass or more, more preferably 50 ppm by mass or more, and still more preferably 100 ppm by mass or more. In addition, the upper limit of XA1 is preferably 5,000 ppm by mass or less, and more preferably 1,000 ppm by mass or less.

When the monomer composition according to the first embodiment contains component B1, and a concentration of component B1 with respect to the total mass of the monomer composition is indicated by XB1 (ppm by mass), XB1 is preferably 1 to 1,000 ppm by mass. When XB1 is 1 ppm by mass or more, the effect of improving the quality stability of the monomer composition can be sufficiently obtained. In addition, when XB1 is 1,000 ppm by mass or less, the amount of impurities when a methacrylic resin composition is produced by polymerization of the monomer composition can be reduced, and adverse effects on physical properties of the methacrylic resin composition can be prevented. The lower limit of XB1 is more preferably 5 ppm by mass or more, and still more preferably 10 ppm by mass or more. In addition, the upper limit of XB1 is more preferably 500 ppm by mass or less, still more preferably 400 ppm by mass or less, particularly preferably 300 ppm by mass or less, especially preferably 200 ppm by mass or less, and most preferably 100 ppm by mass or less.

In addition, from the viewpoint of improving the quality stability of the monomer composition, XB1/XA1 is preferably 0.005 to 7. The lower limit of XB1/XA1 is more preferably 0.05 or more, and the upper limit thereof is more preferably 5 or less.

When the monomer composition according to the first embodiment contains the monomer other than MMA, a concentration of the monomer with respect to the total mass of the monomer composition is preferably 0% to 15% by mass. **In** addition, the lower limit of the concentration of the monomer is more preferably 1% by mass or more, and the upper limit thereof is more preferably 10% by mass or less.

The above-described preferred upper limit value and lower limit value can be arbitrarily combined.

<1-7. Analysis of monomer composition>

The concentrations of component A1, component B1, the monomer other than MMA, component C, and water in the monomer composition can be calculated, for example, from a charged amount when preparing the monomer composition.

When the charged amount is unknown, the fact that the monomer composition contains component A1, component B1, the monomer other than MMA, component C, or water can be confirmed, for example, by GC-MS measurement. In a GC-MS chart of the monomer composition, when a peak is present at the same retention time as a sample of component A1 and an m/z value detected in a mass spectrum of the peak matches exact mass of component A1, it can be determined that the monomer composition contains component A1. When the sample of component A1 cannot be obtained, when a pattern of the mass spectrum of the peak appearing in the GC-MS chart of the monomer composition and a pattern of a mass spectrum of component A1 in mass spectrum database and match each other, it can be determined that the peak is the peak of component A1. That is, it can be determined that the monomer composition contains component A1. Examples of the mass spectrum database include NIST 20, NIST 17, NIST 14, and NIST 14s. In addition, when volatility is

low and the detection cannot be carried out by the GC-MS measurement, the detection can be carried out by LC-MS. It can be also confirmed that the monomer composition contains component B1, the monomer other than MMA, component C, and water by the same method.

In addition, the concentration of MMA or the monomer other than MMA can be calculated, for example, by performing GC-FID measurement of the monomer composition, quantifying by an area percentage method, and correcting the quantified moisture concentration using a Karl Fischer moisture meter. The concentration of component A1 can be quantified, for example, by performing GC measurement of the monomer composition and using an internal standard method. When a sample of component A1 cannot be obtained and component A1 cannot be quantified by the internal standard method, the concentration (μmol/L) of component A1 can be calculated using the following expression by performing GC-FID measurement on any organic compound having a known concentration under the same conditions as those of the monomer composition. In addition, the concentration of component A1 in units of ppm by mass can be calculated from the concentration of component A1 calculated in units of μmol/L, the molecular weight of component A1, and the density (kg/L) of the monomer composition.

$$\text{Concentration of component A1 } (\mu\text{mol/L}) = \frac{N}{N_A} \times \frac{S_A}{S} \times M$$

Here, N is the number of carbon atoms in one molecule of the organic compound having a known concentration, $N_A$ is the number of carbon atoms in one molecule of component A1, $S_A$ is a peak area of component A, S is a peak area of the organic compound having a known concentration, and M is a concentration (μmol/L) of the organic compound having a known concentration.

In addition, when the volatility is low (boiling point is 500°C or higher) and the quantification cannot be performed by the GC measurement, the quantification can be performed using a chromatography method such as LC.

The concentrations of component B1 and component C can also be calculated by the same method as that for component A1 described above.

In addition, the monomer composition contains water, and a concentration thereof can be confirmed by Karl Fischer method.

<1-8. Production method for monomer composition>

The monomer composition according to the first embodiment can be produced, for example, by a method of adding component A1 to MMA, and component B1, the monomer other than MMA, and component C may be optionally further added thereto.

A commercially available product may be used as MMA, or MMA produced by the method described in <1-1. Methyl methacrylate> may be used. The monomer composition is preferably produced using MMA produced by a C4 direct oxidation method, and more preferably produced using MMA produced by a C4 direct oxidation method using isobutanol derived from a biomass as a starting raw material.

As component A1 and component B1, a commercially available product may be used, or a component synthesized by a known method may be used. When MMA produced by the method described in <1-1. Methyl methacrylate> is used, component A1, and component B1, the monomer other than MMA, and component C optionally added may be added as raw materials or in the middle of a production process to produce the monomer composition. In addition, when component A1 or component B1 is generated as a by-product in the MMA production process, the monomer composition may be produced by leaving a part of component A1 or component B1 to be generated.

[2. Methacrylic resin composition]

The methacrylic resin composition according to the first embodiment contains a methacrylic polymer and an ester compound having an α-hydrogen (component A1) represented by Formula (1-1).

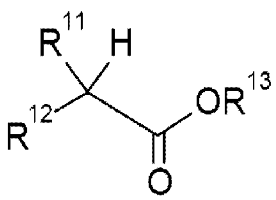

· · · (1-1)

In Formula (1-1), $R^{11}$ and $R^{12}$ are each independently a hydrogen atom or an alkyl group having 1 to 5 carbon atoms, and $R^{13}$ is an alkyl group having 1 to 5 carbon atoms. In addition, any one or more of $R^{11}$ to $R^{13}$ is an alkyl group having 2 to 5 carbon atoms.
When a concentration of component A1 with respect to the total mass of the methacrylic resin composition is indicated by YA1 (ppm by mass), YA1 is 5 to 10,000 ppm by mass. As a result, the methacrylic resin composition exhibits excellent light stability while maintaining transparency and heat resistance.
It is preferable that the methacrylic resin composition further contain a polymerization inhibitor (component B1). In addition, the methacrylic resin composition may contain other compounds (component C) as long as the effect of the present invention is not impaired.
In addition, a form of the methacrylic resin composition is not particularly limited, but is usually solid.
Hereinafter, each item will be described in detail.

<2-1. Methacrylic polymer>

The methacrylic resin composition according to the first embodiment contains a methacrylic polymer, and thus exhibits favorable transparency. In addition, decomposition due to heat or light is suppressed, and thus favorable heating formability, heat resistance, and mechanical strength are exhibited.

(Formulation of methacrylic polymer)

In the present specification, the methacrylic polymer is a polymer including a repeating unit derived from MMA (hereinafter, also referred to as "MMA unit"). In addition, the methacrylic polymer is preferably a copolymer including the MMA unit and a repeating unit derived from a vinyl monomer copolymerizable with MMA (hereinafter, also simply referred to as "vinyl monomer"). In the present specification, the "repeating unit" means a unit derived from a monomer formed by polymerization of the monomer. The repeating unit may be a unit directly formed by a polymerization reaction, or may be a unit of which a part is converted into another structure through treatment of a polymer.
From the viewpoint of heat resistance and light stability of the methacrylic resin composition, a contained proportion of the MMA unit is preferably 50% to 100% by mass, and a contained proportion of the repeating unit derived from the vinyl monomer is preferably 0% to 50% by mass, with respect to the total mass of the methacrylic polymer. The lower limit of the contained proportion of the MMA unit is more preferably 60% or more, still more preferably 70% or more, particularly preferably 80% or more, and most preferably 90% by mass or more. In addition, the upper limit of the contained proportion of the repeating unit derived from the vinyl monomer is more preferably 40% by mass or less, still more preferably 30% by mass or less, particularly preferably 20% by mass or less, and most preferably 10% by mass or less.
When the methacrylic polymer is a copolymer, arrangement of the copolymer is not particularly limited, and may be, for example, a random copolymer, a block copolymer, or an alternating copolymer; but a random copolymer is preferable.
The aspect of MMA is the same as that in <1-1. Methyl methacrylate>.
When the methacrylic polymer is a copolymer including the repeating unit derived from the vinyl monomer, the vinyl monomer is preferably an acrylic acid ester or styrene. As a result, the light stability of the methacrylic resin composition is improved.
When the above-described vinyl monomer is an acrylic acid ester, the methacrylic polymer preferably includes 70% to 100% by mass of the MMA unit and 0% to 30% by mass of the repeating unit derived from an acrylic acid ester. When the above-described vinyl monomer is styrene, the methacrylic polymer preferably includes 50% to 100% by mass of the MMA unit and 0% to 50% by mass of the repeating unit derived from styrene.
As the acrylic acid ester, an acrylic acid ester having an alkyl group having 1 to 6 carbon atoms in a side chain is preferable; and examples thereof include methyl acrylate, ethyl acrylate, propyl acrylate, n-butyl acrylate, and t-butyl acrylate. These may be used alone or in combination of two or more kinds thereof in any ratio and combination. Among these, from the viewpoint of the light stability of the methacrylic resin composition, at least one selected from the group consisting of methyl acrylate, ethyl acrylate, and n-butyl acrylate is preferable; and methyl acrylate or ethyl acrylate is more preferable.
One kind of the vinyl monomer can be used alone, or two or more kinds thereof can be used in any ratio and combination.
In addition, the methacrylic polymer can include a repeating unit derived from a polyfunctional monomer which contains two or more radically polymerizable functional groups in one molecule, as long as the effect of the present invention can be obtained. As a result, solvent resistance, chemical resistance, and the like can be improved.
The radically polymerizable functional group is not particularly limited as long as it has a carbon-carbon double bond and is a group which can be radically polymerized. Specific examples thereof include a vinyl group, an allyl group, a (meth)acryloyl group, and a (meth)acryloyloxy group. In particular, a (meth)acryloyl group is preferable from the viewpoint

that storage stability of a compound having the radically polymerizable functional group is excellent and polymerizability of the compound is easily controlled. Here, the "(meth)acryloyl" means at least one selected from "acryloyl" or "methacryloyl". In addition, the radically polymerizable functional groups in the monomer having two radically polymerizable functional groups may be the same as or different from each other.

Examples of the polyfunctional monomer include allyl methacrylate, allyl acrylate, ethylene glycol di(meth)acrylate, ethylene glycol tri(meth)acrylate, neopentyl glycol di(meth)acrylate, and trimethylolpropane tri(meth)acrylate, but the polyfunctional monomer is not particularly limited thereto. These may be used alone or in combination of two or more kinds thereof in any ratio and combination. Among these, from the viewpoint of further improving the solvent resistance and the chemical resistance, the polyfunctional monomer is more preferably selected from ethylene glycol di(meth)acrylate or neopentyl glycol di(meth)acrylate, and still more preferably ethylene glycol di(meth)acrylate.

<2-2. Component A1>

The methacrylic resin composition according to the first embodiment contains an ester compound having an α-hydrogen (component A1) represented by Formula (1-1). As a result, the methacrylic resin composition exhibits excellent light stability. The reason for this is presumed as follows.

In the methacrylic polymer including the MMA unit, the main chain or the side chain is cleaved by light to generate a radical species. Typically, the generated radical species cause a decrease in transparency of the methacrylic resin composition. However, when component A1 is present in the methacrylic resin composition, component A1 functions as a radical scavenger, and the decrease in transparency is suppressed. As a result, the methacrylic resin composition exhibits excellent light stability.

The aspect of component A1 is the same as the description in <1-2. Component A1>.

Component A1 may be one kind or two or more kinds.

<2-3. Component B1>

The methacrylic resin composition according to the first embodiment preferably contains a polymerization inhibitor (component B 1). As a result, an effect of improving the light stability of the methacrylic resin composition can be more efficiently obtained.

The aspect of component B is the same as the description in <1-3. Component B1>.

Component B1 may be one kind or two or more kinds.

<2-3. Component C>

The methacrylic resin composition according to the first embodiment may contain other compounds (component C). The aspect of component C is the same as the description in <1-5. Component C>.

Component C may be one kind or two or more kinds.

<2-4. Concentration of each component in methacrylic resin composition>

When a concentration of the methacrylic polymer with respect to the total mass of the methacrylic resin composition is indicated by YM (% by mass), YM is not particularly limited, but from the viewpoint of improving heat resistance, YM is usually 95% by mass or more, preferably 97.5% by mass or more, more preferably 98% by mass or more, and still more preferably 99% by mass or more. On the other hand, from the viewpoint of obtaining excellent light stability, YM is usually 99.99% by mass or less, preferably 99.985% by mass or less, more preferably 99.98% by mass or less, still more preferably 99.975% by mass or less, particularly preferably 99.97% by mass or less, especially preferably 99.95% by mass or less, and most preferably 99.9% by mass or less. The above-described upper limit value and lower limit value can be arbitrarily combined. Examples of the YM include ranges of 95% to 99.99% by mass, 95% to 99.985% by mass, 97.5% to 99.98% by mass, 97.5% to 99.975% by mass, 98% to 99.97% by mass, 98% to 99.95% by mass, and 99% to 99.9% by mass. When the methacrylic resin composition contains two or more kinds of methacrylic polymers, YM is the total concentration of the two or more kinds of methacrylic polymers.

When a concentration of component A1 with respect to the total mass of the methacrylic resin composition is indicated by YA1, YA1 is 5 to 10,000 ppm by mass. When the lower limit of YA1 is 5 ppm by mass or more, the methacrylic resin composition exhibits excellent light stability. In addition, when the upper limit of YA1 is 10,000 ppm by mass or less, a decrease in heat resistance of the methacrylic resin composition is suppressed. The lower limit of YA1 is preferably 10 ppm by mass or more, more preferably 50 ppm by mass or more, and still more preferably 100 ppm by mass or more. In addition, the upper limit of YA1 is preferably 5,000 ppm by mass or less, and more preferably 1,000 ppm by mass or less.

When the methacrylic resin composition according to the first embodiment contains component B1, and a

concentration of component B1 with respect to the total mass of the methacrylic resin composition is indicated by YB1 (ppm by mass), YB1 is preferably 1 to 1,000 ppm by mass. When YB1 is 1 ppm by mass or more, the effect of improving the light stability of the methacrylic resin composition can be sufficiently obtained. In addition, when YB1 is 1,000 ppm by mass or less, it is possible to prevent physical properties of the methacrylic resin composition from being adversely affected. The lower limit of YB1 is more preferably 5 ppm by mass or more, and still more preferably 10 ppm by mass or more. In addition, the upper limit of YB1 is more preferably 500 ppm by mass or less, and still more preferably 100 ppm by mass or less.

In addition, from the viewpoint of improving the light stability of the methacrylic resin composition, YB1/YA1 is preferably 0.005 to 7. The lower limit of YB1/YA1 is more preferably 0.05 or more, and the upper limit thereof is more preferably 5 or less.

The above-described preferred upper limit value and lower limit value can be arbitrarily combined.

<2-5. Analysis of methacrylic resin composition>

The concentrations of component A1, component B1, and component C in the methacrylic resin composition can be measured, for example, by the following method. The methacrylic resin composition is finely crushed, and 0.2 g of the crushed methacrylic resin composition is dissolved in 10 mL of acetone for a residual pesticide test (hereinafter, also simply referred to as "acetone"). Next, 1 mL of an internal standard solution is added to the obtained solution using a hole pipette. Here, a 0.1% by volume methyl salicylate/acetone solution is used as the internal standard solution. A standard reagent of component A1 is diluted with acetone to prepare three kinds of test solutions having different concentrations of component A1, and the internal standard solution is added to create a three-point calibration curve by GC-MS measurement. With this, the concentration of each component in the methacrylic resin composition is quantified.

[3. Production method for methacrylic resin composition]

The methacrylic resin composition according to the first embodiment can be produced by a method including a step of radically polymerizing a polymerizable composition containing MMA. The polymerizable composition is, for example, a polymerizable composition (M11) containing a raw material composition, a component A1, and a radical polymerization initiator, or a polymerizable composition (M12) containing the monomer composition according to the first embodiment and a radical polymerization initiator; and the polymerizable composition (M12) is preferable. That is, the methacrylic resin composition according to the first embodiment preferably contains a polymer of the monomer composition according to the first embodiment.

Hereinafter, each item will be described in detail.

<3-1. Polymerizable composition (M11)>

The polymerizable composition (M11) contains a raw material composition, component A1, and a radical polymerization initiator. It is preferable that the polymerizable composition (M11) further contain a polymerization inhibitor (component B1). In addition, the polymerizable composition (M11) may contain other compounds (component C) as long as the effect of the present invention is not impaired.

(Raw material composition)

The raw material composition is also a raw material component of the methacrylic polymer contained in the methacrylic resin composition according to the first embodiment.

Examples of the raw material composition include a composition containing only MMA, and a composition containing MMA and a vinyl monomer. As the vinyl monomer, the same vinyl monomer as described in <2-1. Methacrylic polymer> can be used. When the raw material composition contains an acrylic acid ester or styrene as the vinyl monomer, the light stability of the methacrylic resin composition to be obtained is improved. One kind of the vinyl monomer can be used alone, or two or more kinds thereof can be used in any ratio and combination.

A contained proportion of MMA is preferably 50% to 100% by mass, and a contained proportion of the vinyl monomer is preferably 0% to 50% by mass, with respect to the total mass of the raw material composition. In addition, the lower limit of the contained proportion of MMA is more preferably 70% by mass or more, and the upper limit of the contained proportion of the vinyl monomer is more preferably 30% by mass or less.

In addition, the raw material composition may contain a polymer including the MMA unit in advance. When the raw material composition contains the polymer, the raw material composition is a liquid having viscosity (hereinafter, also referred to as "syrup"), and thus a polymerization time can be shortened and productivity can be improved. Specific examples of the polymer including the MMA unit include a polymer including 50% by mass or more of the MMA unit and 50% by mass or less of a constitutional unit derived from the vinyl monomer with respect to the total mass of the polymer,

and a polymer consisting of 100% by mass of the MMA unit.

Examples of a method of obtaining the above-described syrup include a method of dissolving the polymer including the MMA unit in the raw material composition, and a method of adding a known radical polymerization initiator to the raw material composition and polymerizing a part of the mixture.

A concentration of the raw material composition with respect to the total mass of the polymerizable composition (M11) can be set in a range of 97.5% to 99.99% by mass.

(Component A1)

The aspect of component A1 is the same as the description in <1-2. Component A1>.

Component A1 may be one kind or two or more kinds.

A concentration of component A1 with respect to the total mass of the polymerizable composition (M11) is preferably 5 to 10,000 ppm by mass. When the lower limit of the concentration of component A1 is 5 ppm by mass or more, the methacrylic resin composition to be obtained exhibits excellent light stability. In addition, when the upper limit of the concentration of component A1 is 10,000 ppm by mass or less, the methacrylic resin composition to be obtained exhibits excellent heat resistance. The lower limit of the concentration of component A1 is preferably 10 ppm by mass or more, more preferably 50 ppm by mass or more, and still more preferably 100 ppm by mass or more. In addition, the upper limit of the concentration of component A1 is preferably 5,000 ppm by mass or less, and more preferably 1,000 ppm by mass or less.

(Radical polymerization initiator)

As the radical polymerization initiator, a known radical polymerization initiator can be used. Examples of the radical polymerization initiator include known azo compounds such as 2,2'-azobis(isobutyronitrile) and 2,2'-azobis(2,4-dimethylvaleronitrile); and known organic peroxides such as t-hexylperoxypivalate, benzoyl peroxide, and lauroyl peroxide. These initiators may be used alone or in combination of two or more kinds thereof in any ratio and combination. In addition, as necessary, a known polymerization promoter such as amine and mercaptan can be used in combination with the radical polymerization initiator.

A concentration of the radical polymerization initiator with respect to the total mass of the polymerizable composition (M11) is not particularly limited, and for example, it can be set to 0.005% to 5% by mass, may be set to 0.01% to 1% by mass.

(Component B1)

The aspect of component B1 is the same as the description in <1-3. Component B1>.

Component B1 may be one kind or two or more kinds.

When the polymerizable composition (M11) contains component B, a concentration of component B with respect to the total mass of the polymerizable composition (M11) is preferably 1 to 1,000 ppm by mass. When the concentration of component B is 1 ppm by mass or more, the effect of improving the light stability of the methacrylic resin composition to be obtained can be sufficiently obtained. In addition, when the concentration of component B is 1,000 ppm by mass or less, it is possible to prevent physical properties of the methacrylic resin composition to be obtained from being adversely affected. The lower limit of the concentration of component B is more preferably 5 ppm by mass or more, and still more preferably 10 ppm by mass or more. In addition, the upper limit of the concentration of component B is more preferably 500 ppm by mass or less, and still more preferably 100 ppm by mass or less.

(Component C)

The aspect of component C is the same as the description in <1-5. Component C>.

Component C may be one kind or two or more kinds.

<3-2. Polymerizable composition (M12)>

The polymerizable composition (M12) contains the monomer composition according to the first embodiment and a known radical polymerization initiator. The polymerizable composition (M12) may further contain a vinyl monomer. In addition, the methacrylic resin composition may contain other compounds (component C) as long as the effect of the present invention is not impaired.

(Monomer composition)

The monomer composition is the monomer composition according to the first embodiment, and is a composition containing a raw material component of the methacrylic polymer contained in the methacrylic resin composition according to the first embodiment.
A concentration of the monomer composition with respect to the total mass of the polymerizable composition (M12) can be set to 60% by mass or more and less than 100% by mass.

(Radical polymerization initiator)

The aspect of the radical polymerization initiator is the same as the description in <3-1. Polymerizable composition (M11)>.

(Vinyl monomer)

When the polymerizable composition (M12) contains a vinyl monomer, the same vinyl monomer as described in <2-1. Methacrylic polymer> can be used as the vinyl monomer. When the polymerizable composition (M12) contains an acrylic acid ester or styrene as the vinyl monomer, the light stability of the methacrylic resin composition to be obtained is improved. One kind of the vinyl monomer can be used alone, or two or more kinds thereof can be used in any ratio and combination.
When the vinyl monomer is contained in the monomer composition, the vinyl monomer may be used as it is, or the vinyl monomer may be newly added as necessary. A concentration of the vinyl monomer with respect to the total mass of the polymerizable composition (M12) can be set to more than 0% by mass and less than 40% by mass.

(Component C)

The aspect of component C is the same as the description in <1-5. Component C>.
Component C may be one kind or two or more kinds.

<3-3. Radical polymerization step of polymerizable composition>

The radical polymerization step of the polymerizable composition may include a syrup preparation step of polymerizing a part of the polymerizable composition to prepare a syrup, and a polymerization step of polymerizing a polymerizable component in the obtained syrup. The "polymerizing a part of the polymerizable composition" in the syrup preparation step means that the polymerization is carried out such that a concentration of the polymer is 10% to 80% by mass, preferably 10% to 60% by mass and more preferably 10% to 40% by mass with respect to the total mass of the obtained syrup.
A polymerization temperature when polymerizing the polymerizable composition is not particularly limited, and can be appropriately determined by those skilled in the art according to known technology. In general, the polymerization temperature is appropriately set in a range of preferably 40°C to 180°C and more preferably 50°C to 150°C depending on the kind of the radical polymerization initiator to be used. In addition, the polymerizable composition can be polymerized under a multistage temperature condition as necessary. A polymerization time may be appropriately determined according to the progress of the polymerization curing.
A method of obtaining the methacrylic resin composition by polymerizing the above-described polymerizable composition and producing a molded resin object containing the methacrylic resin composition is not particularly limited.
Examples of a polymerization method for the polymerizable composition include a bulk polymerization method, a suspension polymerization method, an emulsion polymerization method, and a dispersion polymerization method. Among these, a bulk polymerization method is preferable from the viewpoint of productivity.
Specific methods of the bulk polymerization method include, for example, a method of obtaining a molded resin object by the bulk polymerization method using a known casting polymerization method, and a method of obtaining a molded resin object by molding a composition produced by the bulk polymerization method. From the viewpoint of further improving the heat resistance of the molded resin object by increasing the molecular weight or introducing a crosslinking structure, it is preferable to use a method using a casting polymerization method.
Examples of the casting polymerization method include a cell casting method and a continuous casting method.
In the cell casting method, when obtaining a molded resin object or the like having a plate-like form, a syrup obtained by polymerizing the polymerizable composition or a part of the polymerizable composition is injected into a mold using a space formed by two glass plates or metal plates (SUS plates) facing each other and a gasket such as a soft resin tube disposed at the edge thereof as the mold. Next, the polymerization is completed by a thermal polymerization

treatment, and the molded resin object is taken out from the mold.

In the continuous casting method, a space formed by two stainless steel endless belts running opposite each other at a predetermined distance in the same direction at the same speed and with gaskets such as soft resin tubes arranged on both sides of the belts is used as a mold, and the polymerizable composition or a syrup obtained by polymerizing a part of the polymerizable composition is continuously injected into the mold from one end of the endless belts. Next, the polymerization is completed by a thermal polymerization treatment, and the molded resin object is continuously taken out from the other end of the endless belt.

In the casting polymerization method, the space between the voids of the mold is appropriately adjusted by the thickness (diameter) of the gasket, and a molded resin object having a desired thickness can be obtained.

[4. Molded resin object]

The molded resin object according to the first embodiment contains the methacrylic resin composition according to the first embodiment. A molded resin object having excellent light stability while maintaining transparency and heat resistance can be obtained by molding the above-described methacrylic resin composition. Examples of a molding method include molding methods such as press molding, injection molding, gas-assisted injection molding, welding molding, extrusion molding, blow molding, film molding, hollow molding, multilayer molding, and melt spinning. In the present specification, the "molded resin object" is not particularly limited as long as it is a molded object containing the above-described methacrylic resin composition, and may be a molded object consisting of only the methacrylic resin composition. When the molded resin object is a molded object consisting of only the methacrylic resin composition, the methacrylic resin composition substantially corresponds to both the methacrylic resin composition and the molded resin object.

A shape of the molded resin object is not particularly limited, and examples thereof include a plate-shaped molded resin object (resin plate) and a sheet-shaped molded resin object (resin sheet). A thickness of the molded resin object can be adjusted to any thickness as necessary from a thick plate shape to a thin film shape, and can be, for example, 1 to 30 mm.

Applications of the molded resin object are not particularly limited, and the molded resin object is used for many applications such as a member for a vehicle, a member for medical use, a toy, a liquid container, an optical material, a signboard, a display, a decorative member, a building material, and a faceplate of an electronic device, and is particularly used for a member having translucency.

<<Second embodiment>>

[1. Monomer composition 1]

A first aspect of the monomer composition according to a second embodiment contains MMA and an α,β-unsaturated carbonyl compound (component A21) represented by Formula (2-1).

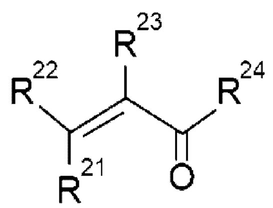

· · · (2-1)

In Formula (2-1), $R^{21}$, $R^{22}$, and $R^{23}$ are each independently a hydrogen atom or an alkyl group having 1 to 5 carbon atoms, and $R^{24}$ is an alkyl group having 1 to 5 carbon atoms or an amino group.

Here, the amino group means an amino group having no substituent on a nitrogen atom ($-NH_2$).

When a concentration of component A21 with respect to the total mass of the monomer composition is indicated by XA21 (ppm by mass), XA21 is 1 to 10,000 ppm by mass.

It is preferable that the monomer composition according to the second embodiment further contain a polymerization inhibitor (component B). In addition, the monomer composition may contain a monomer other than MMA, other compounds (component C), or water, as long as the effect of the present invention is not impaired.

Hereinafter, each item will be described in detail.

<1-1. Methyl methacrylate>

The first aspect of the monomer composition according to the second embodiment contains MMA. Examples and preferred aspects of a production method for MMA are the same as those in the first embodiment.

<1-2. Component A21>

The first aspect of the monomer composition according to the second embodiment contains the α,β-unsaturated carbonyl compound (component A21) represented by Formula (2-1). When the monomer composition contains component A21, the generation of the MMA dimer and methyl pyruvate can be suppressed. The reason for this is presumed as follows.

The MMA dimer is generated by a radical generated during storage of MMA. Examples of the above-described radical include a hydroxyl radical generated by an oxygen molecule absorbing ultraviolet light derived from sunlight. In addition, the hydroxyl radical also causes generation of methyl pyruvate by oxidation of MMA. Since the α,β-unsaturated carbonyl compound has a conjugated double bond, the α,β-unsaturated carbonyl compound absorbs the ultraviolet light, and an absorption wavelength thereof changes depending on the type of the substituent. The α,β-unsaturated carbonyl compound having the structure represented by Formula (2-1) can absorb ultraviolet light in a wide wavelength range. Therefore, when the monomer composition contains component A21, the ultraviolet light in a wide wavelength range is absorbed, and the generation of the hydroxyl radical is suppressed. Therefore, it is presumed that the generation of the MMA dimer and methyl pyruvate is suppressed.

A molecular weight of component A21 is preferably 200 or less. When the molecular weight thereof is 200 or less, the number of α-hydrogens per unit mass in component A21 can be increased, and thus the effect of the present invention can be obtained with a smaller mass. The molecular weight of component A21 is more preferably 190 or less, still more preferably 180 or less, and particularly preferably 170 or less.

$R^{21}$, $R^{22}$, and $R^{23}$ in Formula (2-1) each independently represent a hydrogen atom or an alkyl group having 1 to 5 carbon atoms. In addition, $R^{24}$ in Formula (2-1) represents an alkyl group having 1 to 5 carbon atoms or an amino group. $R^{21}$, $R^{22}$, $R^{23}$, and $R^{24}$ may be the same as or different from each other.

When $R^{21}$, $R^{22}$, $R^{23}$, and $R^{24}$ satisfy the above-described conditions, a π-conjugated system of component A21 is maintained, and thus a property of absorbing ultraviolet light in a wide wavelength range is provided, and the effect of the present invention can be obtained. $R^{21}$, $R^{22}$, and $R^{23}$ are each independently preferably a hydrogen atom, a methyl group, an ethyl group, an n-propyl group, an isopropyl group, an n-butyl group, a 1-methylpropyl group, or a 2-methylpropyl group; more preferably a hydrogen atom, a methyl group, an ethyl group, an n-propyl group, or an isopropyl group; still more preferably a hydrogen atom, a methyl group, or an ethyl group; and particularly preferably a hydrogen atom or a methyl group. In addition, $R^{24}$ is preferably a methyl group or an amino group, and more preferably a methyl group. Since these groups are substituents having high stability, component A21 can be prevented from being changed into other compounds during storage.

Among the compounds satisfying the above-described conditions, from the viewpoint of quality stability of the monomer composition during storage and quality of the methacrylic resin composition obtained by polymerizing the monomer composition, component A21 is more preferably at least one selected from the group consisting of isopropenyl methyl ketone and methacrylamide.

Component A21 may be one kind or two or more kinds.

<1-3. Component B1>

The first aspect of the monomer composition according to the second embodiment preferably contains a polymerization inhibitor (component B1). By containing component B1, it is possible to suppress the dimerization reaction of MMA by a radical mechanism during the storage of MMA. In addition, component B can trap the above-described hydroxyl radical generated during the storage of MMA. That is, when the monomer composition contains component B1 in addition to component A21, the amount of the hydroxyl radical can be reduced by two different mechanisms of suppressing the generation of the hydroxyl radical by component A21 and removing the generated hydroxyl radical by component B1. Therefore, it is considered that the generation of the MMA dimer and methyl pyruvate can be efficiently suppressed.

The aspect of component B1 is the same as the description in <1-3. Component B1> in the first embodiment.

Component B1 may be one kind or two or more kinds.

When the monomer composition contains a compound corresponding to both component A21 and component B1, the compound is regarded as component A21. That is, when the monomer composition contains component A21 and component B1, it means that the monomer composition contains another component B different from the compound. When the monomer composition contains two or more kinds of compounds corresponding to both component A21 and component B1, a compound having the highest molar concentration in the monomer composition is regarded as

component A21, and the other compounds are regarded as component B1.

<1-4. Monomer other than methyl methacrylate>

The first aspect of the monomer composition according to the second embodiment may contain a monomer other than MMA. The aspect of the monomer other than MMA is the same as the description in <1-4. Monomer other than methyl methacrylate> in the first embodiment.

A methacrylic polymer contained in a methacrylic resin composition according to a second embodiment, which will be described later, is preferably a copolymer including a repeating unit derived from MMA and a repeating unit derived from a vinyl monomer copolymerizable with MMA, and the vinyl monomer is preferably an acrylic acid ester or styrene. Therefore, it is preferable that the monomer composition according to the second embodiment further contain an acrylic acid ester or styrene as the monomer other than MMA.

<1-5. Component C>

The first aspect of the monomer composition according to the second embodiment may contain other compounds (component C). The aspect of component C is the same as the description in <1-5. Component C> in the first embodiment.

Component C may be one kind or two or more kinds.

<1-6. Concentration of each component in monomer composition 1>

In the first aspect of the monomer composition according to the second embodiment, when a concentration of MMA with respect to the total mass of the monomer composition is indicated by XM (% by mass), XM is preferably 85% by mass or more. The lower limit of XM is more preferably 90% by mass or more, still more preferably 95% by mass or more, particularly preferably 97% by mass or more, especially preferably 97.5% by mass or more, and most preferably 98.0% by mass or more. In addition, the upper limit of XM is usually 99.99% by mass or less, and may be 99.98% by mass or less or 99.97% by mass or less. Therefore, examples of XM include ranges of 85% to 99.99% by mass, 90% to 99.98% by mass, 95% to 99.97% by mass, 97% to 99.97% by mass, 97% to 99.97% by mass, 97.5% to 99.97% by mass, and 98.0% to 99.97% by mass.

In the first aspect of the monomer composition according to the second embodiment, when a concentration of component A21 with respect to the total mass of the monomer composition is indicated by XA21 (ppm by mass), XA21 is 1 to 10,000 ppm by mass. When XA21 is 1 ppm by mass or more, an effect of improving the quality stability of the monomer composition can be sufficiently obtained. In addition, when XA21 is 10,000 ppm by mass or less, the amount of impurities when a methacrylic resin composition is produced by polymerization of the monomer composition can be reduced, and adverse effects on physical properties of the methacrylic resin composition can be prevented. The lower limit of XA21 is preferably 10 ppm by mass or more, more preferably 50 ppm by mass or more, and still more preferably 100 ppm by mass or more. In addition, the upper limit of XA21 is preferably 5,000 ppm by mass or less, and more preferably 1,000 ppm by mass or less.

When the first aspect of the monomer composition according to the second embodiment contains component B1, and a concentration of component B1 with respect to the total mass of the monomer composition is indicated by XB1 (ppm by mass), XB1 is preferably 1 to 1,000 ppm by mass. When XB1 is 1 ppm by mass or more, the effect of improving the quality stability of the monomer composition can be sufficiently obtained. In addition, when XB1 is 1,000 ppm by mass or less, the amount of impurities when a methacrylic resin composition is produced by polymerization of the monomer composition can be reduced, and adverse effects on physical properties of the methacrylic resin composition can be prevented. The lower limit of XB1 is more preferably 5 ppm by mass or more, and still more preferably 10 ppm by mass or more. In addition, the upper limit of XB1 is more preferably 500 ppm by mass or less, and still more preferably 100 ppm by mass or less.

In addition, from the viewpoint of improving the quality stability of the monomer composition, XB1/XA21 is preferably 0.005 to 7. The lower limit of XB1/XA21 is more preferably 0.05 or more, and the upper limit thereof is more preferably 5 or less.

When the first aspect of the monomer composition according to the second embodiment contains the monomer other than MMA, a concentration of the monomer with respect to the total mass of the monomer composition is preferably 0% to 15% by mass. In addition, the lower limit of the concentration of the monomer is more preferably 1% by mass or more, and the upper limit thereof is more preferably 10% by mass or less.

The above-described preferred upper limit value and lower limit value can be arbitrarily combined.

<1-7. Analysis of monomer composition 1>

A method of confirming that the monomer composition contains component A21, component B1, the monomer other than MMA, component C, or water, and a method of calculating concentrations of component A21, component B1, the monomer other than MMA, component C, and water in the monomer composition are the same as the methods described in the first embodiment.

<1-8. Production method for monomer composition 1>

The first aspect of the monomer composition according to the second embodiment can be produced, for example, by a method of adding component A21 to MMA, and component B1, the monomer other than MMA, and component C may be optionally further added thereto. The production method for the monomer composition 1 is the same as the method described in the first embodiment, except that component A21 is used.

As component A21, a commercially available product may be used, or a component synthesized by a known method may be used.

[2. Monomer composition 2]

A second aspect of the monomer composition according to the second embodiment contains MMA and an $\alpha,\beta$-unsaturated carboxylic acid ester (component A22) represented by Formula (2-2).

In the following description, component A21 and component A22 may be collectively referred to as "component A2".

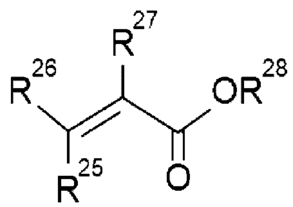 · · · (2-2)

In Formula (2-2), $R^{25}$, $R^{26}$, and $R^{27}$ are each independently a hydrogen atom or an alkyl group having 1 to 10 carbon atoms, and $R^{28}$ is an alkyl group having 1 to 10 carbon atoms. In addition, any one or more of $R^{25}$ and $R^{26}$ is an alkyl group having 1 to 10 carbon atoms.

When a concentration of component A22 with respect to the total mass of the monomer composition is indicated by XA22 (ppm by mass), XA22 is 1 to 10,000 ppm by mass.

It is preferable that the monomer composition further contain a polymerization inhibitor (component B1). In addition, the monomer composition may contain a monomer other than MMA, other compounds (component C), or water, as long as the effect of the present invention is not impaired.

Hereinafter, each item will be described in detail.

<2-1. Methyl methacrylate>

The second aspect of the monomer composition according to the second embodiment contains MMA. Examples and preferred aspects of a production method for MMA are the same as those in the first embodiment.

<2-2. Component A22>

The second aspect of the monomer composition according to the second embodiment contains an $\alpha,\beta$-unsaturated carboxylic acid ester (component A22) represented by Formula (2-2). When the monomer composition contains component A22, the generation of the MMA dimer and methyl pyruvate can be suppressed. The reason for this is presumed as follows.

The MMA dimer is generated by a radical generated during storage of MMA. Examples of the above-described radical include a hydroxyl radical generated by an oxygen molecule absorbing ultraviolet light derived from sunlight. In addition, the hydroxyl radical also causes generation of methyl pyruvate by oxidation of MMA. Since the $\alpha,\beta$-unsaturated carboxylic acid ester has a conjugated double bond, the $\alpha,\beta$-unsaturated carboxylic acid ester absorbs the ultraviolet light, and an absorption wavelength thereof changes depending on the type of the substituent. The $\alpha,\beta$-unsaturated carboxylic acid ester having the structure represented by Formula (2-2) can absorb ultraviolet light in a wide wavelength range.

Therefore, when the monomer composition contains component A22, the ultraviolet light in a wide wavelength range is absorbed, and the generation of the hydroxyl radical is suppressed. Therefore, it is presumed that the generation of the MMA dimer and methyl pyruvate is suppressed.

A molecular weight of component A22 is preferably 200 or less. When the molecular weight thereof is 200 or less, the number of $\alpha$-hydrogens per unit mass in component A22 can be increased, and thus the effect of the present invention can be obtained with a smaller mass. The molecular weight of component A22 is more preferably 190 or less, still more preferably 180 or less, and particularly preferably 170 or less.

$R^{25}$, $R^{26}$, and $R^{27}$ in Formula (2-2) each independently represent a hydrogen atom or an alkyl group having 1 to 10 carbon atoms. In addition, $R^{28}$ in Formula (2-2) is an alkyl group having 1 to 10 carbon atoms. $R^{25}$, $R^{26}$, $R^{27}$, and $R^{28}$ may be the same as or different from each other. In addition, any one or more of $R^{25}$ and $R^{26}$ is an alkyl group having 1 to 10 carbon atoms.

When $R^{25}$, $R^{26}$, $R^{27}$, and $R^{28}$ satisfy the above-described conditions, a $\pi$-conjugated system of component A22 is maintained, and thus a property of absorbing ultraviolet light in a wide wavelength range is provided, and the effect of the present invention can be obtained. $R^{25}$, $R^{26}$, and $R^{27}$ are each independently preferably a hydrogen atom, a methyl group, an ethyl group, an n-propyl group, an isopropyl group, an n-butyl group, a 1-methylpropyl group, or a 2-methylpropyl group; more preferably a hydrogen atom, a methyl group, an ethyl group, an n-propyl group, or an isopropyl group; still more preferably a hydrogen atom, a methyl group, or an ethyl group; and particularly preferably a hydrogen atom or a methyl group. In addition, $R^{28}$ is preferably a methyl group, an ethyl group, an n-propyl group, an isopropyl group, a 1-methylpropyl group, a 2-methylpropyl group, an n-pentyl group, a 1-methylbutyl group, a 2-methylbutyl group, a 3-methylbutyl group, a 1-ethylpropyl group, a 2-ethylpropyl group, or a 1,2-dimethylpropyl group; more preferably a methyl group, an ethyl group, an n-propyl group, an isopropyl group, a 1-methylpropyl group, or a 2-methylpropyl group; still more preferably a methyl group, an ethyl group, an n-propyl group, or an isopropyl group; and particularly preferably a methyl group or an ethyl group. Since these groups are substituents having high stability, component A21 can be prevented from being changed into other compounds during storage.

Among the compounds satisfying the above-described conditions, from the viewpoint of quality stability of the monomer composition during storage and quality of the methacrylic resin composition obtained by polymerizing the monomer composition, component A22 is more preferably at least one selected from the group consisting of methyl crotonate and methyl 3,3-dimethylacrylate.

Component A22 may be one kind or two or more kinds.

<2-3. Component B1>

The aspect of component B1 is the same as the first aspect of the second embodiment.

<2-4. Monomer other than methyl methacrylate>

The aspect of the monomer other than MMA is the same as the first aspect of the second embodiment.

<2-5. Component C>

The aspect of component C is the same as the first aspect of the second embodiment.

<2-6. Concentration of each component in monomer composition 2>

The aspect of XA22 is the same as the aspect of XA21 in the first aspect. The aspect of the concentration of each component other than component A22 is the same as the first aspect of the second embodiment.

<2-7. Analysis of monomer composition 2>

A method of confirming that the monomer composition contains MMA, component A2, component B1, the monomer other than MMA, component C, or water, and a method of measuring concentrations of MMA, component A2, component B, the monomer other than MMA, component C, and water are the same as those in the first aspect of the second embodiment.

<2-8. Production method for monomer composition 2>

Examples and preferred aspects of a production method for the monomer composition are the same as those in the first aspect of the second embodiment.

[3. Methacrylic resin composition 1]

A first aspect of the methacrylic resin composition according to the second embodiment contains a methacrylic polymer and an α,β-unsaturated carbonyl compound (component A21) represented by Formula (2-1).

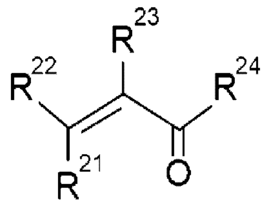

・・・(2-1)

In Formula (1), $R^{21}$, $R^{22}$, and $R^{23}$ are each independently a hydrogen atom or an alkyl group having 1 to 5 carbon atoms, and $R^{24}$ is an alkyl group having 1 to 5 carbon atoms or an amino group.
Here, the amino group means an amino group having no substituent on a nitrogen atom ($-NH_2$).
In addition, when a concentration of component A21 with respect to the total mass of the methacrylic resin composition is defined as YA21 (ppm by mass), YA21 is 0.1 to 4,000 ppm by mass. As a result, the methacrylic resin composition exhibits excellent light stability while maintaining transparency and heat resistance.
It is preferable that the methacrylic resin composition further contain a polymerization inhibitor (component B1). In addition, the methacrylic resin composition may contain other compounds (component C) as long as the effect of the present invention is not impaired.
In addition, a form of the methacrylic resin composition is not particularly limited, but is usually solid.
Hereinafter, each item will be described in detail.

<3-1. Methacrylic polymer>

The first aspect of the methacrylic resin composition according to the second embodiment contains a methacrylic polymer, and thus exhibits favorable transparency. In addition, decomposition due to heat or light is suppressed, and thus favorable heating formability, heat resistance, and mechanical strength are exhibited.
The aspect of the methacrylic polymer is the same as the description of the methacrylic polymer in the first embodiment.

<3-2. Component A21>

The first aspect of the methacrylic resin composition according to the second embodiment contains the α,β-unsaturated carbonyl compound (component A21) represented by Formula (2-1). As a result, the methacrylic resin composition exhibits excellent light stability. The reason for this is presumed as follows.
In the methacrylic polymer including the MMA unit, the main chain or the side chain is cleaved by light to generate a radical species. Typically, the generated radical species cause a decrease in transparency of the methacrylic resin composition. However, when component A21 is present in the methacrylic resin composition, component A21 functions as a radical scavenger, and the decrease in transparency is suppressed. As a result, the methacrylic resin composition exhibits excellent light stability.
The aspect of component A21 is the same as the description in <1-2. Component A21>.
Component A21 may be one kind or two or more kinds.

<3-3. Component B1>

The first aspect of the methacrylic resin composition according to the second embodiment preferably contains a polymerization inhibitor (component B1). As a result, an effect of improving the light stability of the methacrylic resin composition can be more efficiently obtained.
The aspect of component B1 is the same as the description in <1-3. Component B1>.
Component B1 may be one kind or two or more kinds.

<3-4. Component C>

The first aspect of the methacrylic resin composition according to the second embodiment may contain other compounds (component C). The aspect of component C is the same as the description in <1-5. Component C>.

Component C may be one kind or two or more kinds.

<3-5. Concentration of each component in methacrylic resin composition>

When a concentration of the methacrylic polymer with respect to the total mass of the methacrylic resin composition is indicated by YM (% by mass), YM is not particularly limited, but from the viewpoint of improving heat resistance, YM is usually 95% by mass or more, preferably 97.5% by mass or more, more preferably 98% by mass or more, and still more preferably 99% by mass or more. On the other hand, from the viewpoint of obtaining excellent light stability, YM is usually 99.99% by mass or less, preferably 99.985% by mass or less, more preferably 99.98% by mass or less, still more preferably 99.975% by mass or less, particularly preferably 99.97% by mass or less, especially preferably 99.95% by mass or less, and most preferably 99.9% by mass or less. The above-described upper limit value and lower limit value can be arbitrarily combined. Examples of the YM include ranges of 95% to 99.99% by mass, 95% to 99.985% by mass, 97.5% to 99.98% by mass, 97.5% to 99.975% by mass, 98% to 99.97% by mass, 98% to 99.95% by mass, and 99% to 99.9% by mass. When the methacrylic resin composition contains two or more kinds of methacrylic polymers, YM is the total concentration of the two or more kinds of methacrylic polymers.

When a concentration of component A21 with respect to the total mass of the methacrylic resin composition is indicated by YA21, YA21 is 0.1 to 4,000 ppm by mass. When the lower limit of YA21 is 0.1 ppm by mass or more, the methacrylic resin composition exhibits excellent light stability. In addition, when the upper limit of YA21 is 4,000 ppm by mass or less, a decrease in heat resistance of the methacrylic resin composition is suppressed. The lower limit of YA21 is preferably 1 ppm by mass or more, preferably 10 ppm by mass or more, more preferably 50 ppm by mass or more, and still more preferably 100 ppm by mass or more. In addition, the upper limit of YA21 is preferably 3,000 ppm by mass or less, and more preferably 1,000 ppm by mass or less.

In addition, even when component A21 is copolymerized with MMA, the effect of improving the light stability can be similarly obtained as long as the contained amount of YA21 in the methacrylic resin composition is 0.1 to 4,000 ppm.

When the methacrylic resin composition according to the second embodiment contains component B1, and a concentration of component B1 with respect to the total mass of the methacrylic resin composition is indicated by YB1 (ppm by mass), YB1 is preferably 1 to 1,000 ppm by mass. When YB1 is 1 ppm by mass or more, the effect of improving the light stability of the methacrylic resin composition can be sufficiently obtained. In addition, when YB1 is 1,000 ppm by mass or less, it is possible to prevent physical properties of the methacrylic resin composition from being adversely affected. The lower limit of YB1 is more preferably 5 ppm by mass or more, and still more preferably 10 ppm by mass or more. In addition, the upper limit of YB1 is more preferably 500 ppm by mass or less, and still more preferably 100 ppm by mass or less.

In addition, from the viewpoint of improving the light stability of the methacrylic resin composition, YB1/YA21 is preferably 0.005 to 7. The lower limit of YB1/YA21 is more preferably 0.05 or more, and the upper limit thereof is more preferably 5 or less.

The above-described preferred upper limit value and lower limit value can be arbitrarily combined.

<3-6. Analysis of methacrylic resin composition>

A method of measuring concentrations of component A21, component B1, and component C in the methacrylic resin composition is the same as the method described in <2-5. Analysis of methacrylic resin composition> of the first embodiment.

[4. Methacrylic resin composition 2]

A second aspect of the methacrylic resin composition according to the second embodiment contains a methacrylic polymer and an $\alpha,\beta$-unsaturated carboxylic acid ester (component A22) represented by Formula (2-2).

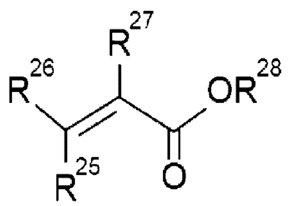 · · · (2-2)

In Formula (2-2), $R^{25}$, $R^{26}$, and $R^{27}$ are each independently a hydrogen atom or an alkyl group having 1 to 10 carbon atoms, and $R^{28}$ is an alkyl group having 1 to 10 carbon atoms. In addition, any one or more of $R^{25}$ and $R^{26}$ is an alkyl group having 1 to 10 carbon atoms.

When a concentration of component A22 with respect to the total mass of the methacrylic resin composition is indicated by YA22 (ppm by mass), YA22 is 1 to 10,000 ppm by mass. As a result, the methacrylic resin composition exhibits excellent light stability while maintaining transparency and heat resistance.
It is preferable that the methacrylic resin composition further contain a polymerization inhibitor (component B1). In addition, the methacrylic resin composition may contain other compounds (component C) as long as the effect of the present invention is not impaired.
In addition, a form of the methacrylic resin composition is not particularly limited, but is usually solid.

<4-1. Methacrylic polymer>

The aspect of the methacrylic polymer is the same as the description of the methacrylic polymer in the first embodiment.

<4-2. Component A22>

The second aspect of the methacrylic resin composition according to the second embodiment contains the α,β-unsaturated carboxylic acid ester (component A22) represented by Formula (2-2). As a result, the methacrylic resin composition exhibits excellent light stability. The reason for this is presumed as follows.
In the methacrylic polymer including the MMA unit, the main chain or the side chain is cleaved by light to generate a radical species. Typically, the generated radical species cause a decrease in transparency of the methacrylic resin composition. However, when component A22 is present in the methacrylic resin composition, component A22 functions as a radical scavenger, and the decrease in transparency is suppressed. As a result, the methacrylic resin composition exhibits excellent light stability.
The aspect of component A22 is the same as the description in <2-2. Component A22>.
Component A22 may be one kind or two or more kinds.

<4-3. Component B1>

The second aspect of the methacrylic resin composition according to the second embodiment preferably contains a polymerization inhibitor (component B1). As a result, an effect of improving the light stability of the methacrylic resin composition can be more efficiently obtained.
The aspect of component B1 is the same as the description in <1-3. Component B1>.
Component B1 may be one kind or two or more kinds.

<4-4. Component C>

The second aspect of the methacrylic resin composition according to the second embodiment may contain other compounds (component C). The aspect of component C is the same as the description in <1-5. Component C>.
Component C may be one kind or two or more kinds.

<4-5. Concentration of each component in methacrylic resin composition>

When a concentration of component A22 with respect to the total mass of the methacrylic resin composition is indicated by YA22, the aspect of YA22 is the same as the aspect of YA21 in the first aspect. The aspect of the concentration of each component other than component A22 is the same as the first aspect.

<4-6. Analysis of methacrylic resin composition>

The concentrations of component A22 and component B1 in the methacrylic resin composition can be measured by the same method as in the first aspect.

[5. Production method for methacrylic resin composition]

The methacrylic resin composition according to the second embodiment can be produced by a method including a step of radically polymerizing a polymerizable composition containing MMA. The polymerizable composition is, for example, a polymerizable composition (M21) containing a raw material composition, a component A21 or a component A22, and a radical polymerization initiator, or a polymerizable composition (M22) containing the monomer composition according to the second embodiment and a radical polymerization initiator; and the polymerizable composition (M22) is

preferable. That is, the methacrylic resin composition according to the second embodiment preferably contains a polymer of the monomer composition according to the second embodiment.

Hereinafter, each item will be described in detail.

<5-1. Polymerizable composition (M21)>

The polymerizable composition (M21) contains a raw material composition, a component A21 or a component A22, and a radical polymerization initiator. It is preferable that the polymerizable composition (M21) further contain a polymerization inhibitor (component B1). In addition, the methacrylic resin composition may contain other compounds (component C) as long as the effect of the present invention is not impaired.

(Raw material composition)

The raw material composition is also a raw material component of the methacrylic polymer contained in the methacrylic resin composition according to the second embodiment.

Examples of the raw material composition include a composition containing only MMA, and a composition containing MMA and a vinyl monomer. As the vinyl monomer, the same vinyl monomer as described in <2-1. Methacrylic polymer> of the first embodiment can be used. When the raw material composition contains an acrylic acid ester or styrene as the vinyl monomer, the light stability of the methacrylic resin composition to be obtained is improved. One kind of the vinyl monomer can be used alone, or two or more kinds thereof can be used in any ratio and combination.

A contained proportion of MMA is preferably 50% to 100% by mass, and a contained proportion of the vinyl monomer is preferably 0% to 50% by mass, with respect to the total mass of the raw material composition. In addition, the lower limit of the contained proportion of MMA is more preferably 70% by mass or more, and the upper limit of the contained proportion of the vinyl monomer is more preferably 30% by mass or less.

In addition, the raw material composition may contain a polymer including the MMA unit in advance. When the raw material composition contains the polymer, the raw material composition is a syrup, and thus a polymerization time can be shortened and productivity can be improved. Specific examples of the polymer including the MMA unit include a polymer including 50% by mass or more of the MMA unit and 50% by mass or less of a constitutional unit derived from the vinyl monomer with respect to the total mass of the polymer, and a polymer consisting of 100% by mass of the MMA unit.

Examples of a method of obtaining the above-described syrup include a method of dissolving the polymer including the MMA unit in the raw material composition, and a method of adding a known radical polymerization initiator to the raw material composition and polymerizing a part of the mixture.

A concentration of the raw material composition with respect to the total mass of the polymerizable composition (M21) can be set in a range of 97.5% to 99.99% by mass.

(Component A21 and component A22)

The aspect of component A21 is the same as the description of <1-2. Component A22>, and the aspect of component A22 is the same as the description of <2-2. Component A22>.

Component A21 and component A22 may be one kind or two or more kinds.

When the polymerizable composition (M21) contains component A21, a concentration of component A21 with respect to the total mass of the polymerizable composition (M21) is preferably 0.1 to 4,000 ppm by mass. When the lower limit of the concentration of component A21 is 0.1 ppm by mass or more, the methacrylic resin composition to be obtained exhibits excellent light stability. In addition, when the upper limit of the concentration of component A21 is 4,000 ppm by mass or less, the methacrylic resin composition to be obtained exhibits excellent heat resistance. The lower limit of the concentration of component A21 is preferably 1 ppm by mass or more, preferably 10 ppm by mass or more, more preferably 50 ppm by mass or more, and still more preferably 100 ppm by mass or more. In addition, the upper limit of the concentration of component A21 is preferably 3,000 ppm by mass or less, and more preferably 1,000 ppm by mass or less.

When the polymerizable composition (M21) contains component A22, the aspect of the concentration of component A22 with respect to the total mass of the polymerizable composition (M21) is the same as the aspect of the concentration of component A21.

(Radical polymerization initiator)

As the radical polymerization initiator, a known radical polymerization initiator can be used, and the same radical polymerization initiator as mentioned in the first embodiment can be exemplary examples. The radical polymerization initiator may be used alone or in combination of two or more kinds thereof in any ratio and combination. In addition, as necessary, a known polymerization promoter such as amine and mercaptan can be used in combination with the radical

polymerization initiator.

A concentration of the radical polymerization initiator with respect to the total mass of the polymerizable composition (M21) is not particularly limited, and for example, it can be set to 0.005% to 5% by mass, may be set to 0.01% to 1% by mass.

(Component B1)

The aspect of component B1 is the same as the description in <1-3. Component B1>.

Component B1 may be one kind or two or more kinds.

When the polymerizable composition (M21) contains component B1, a concentration of component B1 with respect to the total mass of the polymerizable composition (M21) is preferably 1 to 1,000 ppm by mass. When the concentration of component B1 is 1 ppm by mass or more, the effect of improving the light stability of the methacrylic resin composition to be obtained can be sufficiently obtained. In addition, when the concentration of component B1 is 1,000 ppm by mass or less, it is possible to prevent physical properties of the methacrylic resin composition to be obtained from being adversely affected. The lower limit of the concentration of component B1 is more preferably 5 ppm by mass or more, and still more preferably 10 ppm by mass or more. In addition, the upper limit of the concentration of component B1 is more preferably 500 ppm by mass or less, and still more preferably 100 ppm by mass or less.

(Component C)

The aspect of component C is the same as the description in <1-5. Component C>.

Component C may be one kind or two or more kinds.

<5-2. Polymerizable composition (M22)>

The polymerizable composition (M22) contains the monomer composition according to the second embodiment and a known radical polymerization initiator. The polymerizable composition (M22) may further contain a vinyl monomer. In addition, the methacrylic resin composition may contain other compounds (component C) as long as the effect of the present invention is not impaired.

(Monomer composition)

The monomer composition is the monomer composition according to the second embodiment, and is a composition containing a raw material component of the methacrylic polymer contained in the methacrylic resin composition according to the second embodiment.

A concentration of the monomer composition with respect to the total mass of the polymerizable composition (M22) can be set to 60% by mass or more and less than 100% by mass.

(Radical polymerization initiator)

The aspect of the radical polymerization initiator is the same as the description in <5-1. Polymerizable composition (M21)>.

(Vinyl monomer)

When the polymerizable composition (M22) contains a vinyl monomer, the same vinyl monomer as described in <2-1. Methacrylic polymer> of the first embodiment can be used as the vinyl monomer. When the polymerizable composition (M22) contains an acrylic acid ester or styrene as the vinyl monomer, the light stability of the methacrylic resin composition to be obtained is improved. One kind of the vinyl monomer can be used alone, or two or more kinds thereof can be used in any ratio and combination.

When the vinyl monomer is contained in the monomer composition, the vinyl monomer may be used as it is, or the vinyl monomer may be newly added as necessary. A concentration of the vinyl monomer with respect to the total mass of the polymerizable composition (M22) can be set to more than 0% by mass and less than 40% by mass.

(Component C)

The aspect of component C is the same as the description in <1-5. Component C>.

Component C may be one kind or two or more kinds.

<5-3. Radical polymerization step of polymerizable composition>

The aspect of the radical polymerization step of the polymerizable composition is the same as the description of <3-3. Radical polymerization step of polymerizable composition> in the first embodiment.

[6. Molded resin object]

The molded resin object according to the second embodiment contains the methacrylic resin composition according to the second embodiment. The aspect of the molded resin object is the same as the description of [4. Molded resin object] in the first embodiment.

<<Third embodiment>>

[1. Monomer composition]

The monomer composition according to a third embodiment contains MMA and a pyrazine compound (component A3) represented by Formula (3-1).

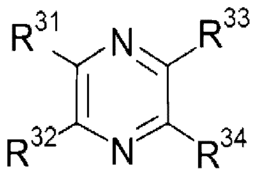

· · · (3-1)

In Formula (3-1), $R^{31}$, $R^{32}$, $R^{33}$, and $R^{34}$ are each independently a hydrogen atom, an alkyl group having 1 to 5 carbon atoms, or an alkoxy group having 1 to 6 carbon atoms.

When a concentration of component A3 with respect to the total mass of the monomer composition is indicated by XA3 (ppm by mass), XA3 is 1 to 10,000 ppm by mass.

It is preferable that the monomer composition further contain a polymerization inhibitor (component B1), an ester compound having an α-hydrogen (component B2) represented by Formula (3-2), or an α,β-unsaturated carbonyl compound (component B3) represented by Formula (3-3). The monomer composition may contain one kind of component B1, component B2, or component B3, or may contain two or more kinds thereof. The monomer composition may contain a monomer other than MMA, other compounds (component C), or water, as long as the effect of the present invention is not impaired.

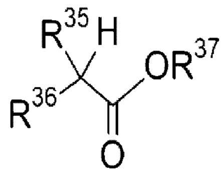

· · · (3-2)

In Formula (3-2), $R^{35}$ and $R^{36}$ are each independently a hydrogen atom or an alkyl group having 1 to 5 carbon atoms, and $R^{37}$ is an alkyl group having 1 to 5 carbon atoms.

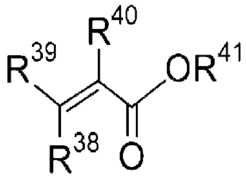

· · · (3-3)

In Formula (3-3), $R^{38}$, $R^{39}$, and $R^{40}$ are each independently a hydrogen atom or an alkyl group having 1 to 10 carbon atoms, and $R^{41}$ is an alkyl group having 1 to 10 carbon atoms.

Hereinafter, each item will be described in detail.

<1-1. Methyl methacrylate>

The monomer composition according to the third embodiment contains MMA.

The aspect of MMA is the same as the description of <1-1. Methyl methacrylate> in the first embodiment.

<1-2. Component A3>

The monomer composition according to a third embodiment contains the pyrazine compound (component A3) represented by Formula (3-1).

When the monomer composition contains component A3, the generation of the MMA dimer and methyl pyruvate can be suppressed. The reason for this is presumed as follows.

The MMA dimer is generated by a radical generated during storage of MMA. Examples of the above-described radical include a hydroxyl radical generated by an oxygen molecule absorbing ultraviolet light derived from sunlight. The hydroxyl radical also causes generation of methyl pyruvate by oxidation of MMA. Since the pyrazine compound is a $\pi$-conjugated compound having an aromatic ring, the pyrazine compound absorbs ultraviolet light, and an absorption wavelength thereof changes depending on the type of the substituent. The pyrazine compound (component A3) represented by Formula (3-1) can absorb ultraviolet light in a wide wavelength range. Therefore, when the monomer composition contains component A3, ultraviolet light in a wide range is absorbed, and the generation of the hydroxyl radical is suppressed. As a result, it is considered that the generation of the MMA dimer and methyl pyruvate can be efficiently suppressed.

A molecular weight of component A3 is preferably 200 or less. In this manner, the number of pyrazine rings per unit mass of component A3 is increased, and thus the effect of the present invention is easily obtained with a smaller amount of component A3. The molecular weight of component A3 is more preferably 180 or less, still more preferably 160 or less, and particularly preferably 140 or less.

The molecular weight of component A3 is preferably 80 or more, more preferably 100 or more, and still more preferably 120 or more.

The above-described upper limit and lower limit of the molecular weight of component A3 can be combined arbitrarily. For example, the molecular weight of component A3 is preferably 80 to 200, more preferably 80 to 180, still more preferably 100 to 160, and particularly preferably 120 to 140.

In Formula (3-1), $R^{31}$ , $R^{32}$, $R^{33}$, and $R^{34}$ are each independently a hydrogen atom, an alkyl group having 1 to 5 carbon atoms, or an alkoxy group having 1 to 6 carbon atoms.

$R^{31}$, $R^{32}$, $R^{33}$, and $R^{34}$ may be the same as or different from each other, but the total number of carbon atoms in the alkyl groups of $R^{31}$, $R^{32}$, $R^{33}$, and $R^{34}$ is preferably 1 or more, more preferably 2 or more, and still more preferably 3 or more.

The alkyl group of $R^{31}$, $R^{32}$, $R^{33}$, and $R^{34}$ may be linear or branched, or may have a ring.

The number of carbon atoms in the alkyl group is preferably 1 to 3, more preferably 1 or 2, and still more preferably 1.

Examples of the alkyl group include a methyl group, an ethyl group, an n-propyl group, an isopropyl group, an n-butyl group, an isobutyl group, an s-butyl group, a t-butyl group, an n-pentyl group, an isopentyl group, and a cyclopentyl group. Among these, a methyl group, an ethyl group, an n-propyl group, or an isopropyl group is preferable, and a methyl group, an ethyl group, or an isopropyl group is more preferable.

The number of carbon atoms in the alkoxy group of $R^{31}$, $R^{32}$, $R^{33}$, and $R^{34}$ is preferably 1 to 5, more preferably 1 to 3, and still more preferably 1.

Examples of the alkoxy group include a methoxy group, an ethoxy group, an n-propoxy group, an isopropoxy group, an n-butoxy group, an isobutoxy group, an s-butoxy group, a t-butoxy group, an n-pentoxy group, an isopentoxy group, and a phenoxy group.

From the viewpoint of increasing the absorbance of ultraviolet light to suppress the generation of the hydroxyl radical, it is still more preferable that $R^{31}$, $R^{32}$, $R^{33}$, and $R^{34}$ be each independently a hydrogen atom, a methyl group, an ethyl group, an n-propyl group, or an isopropyl group.

From the viewpoint of easy availability and easy synthesis, as component A3, 2,3,5,6-tetramethylpyrazine, pyrazine, 2,3,5-trimethylpyrazine, 2-methoxypyrazine, 2-isopropyl-3-methoxypyrazine, 2,5-dimethylpyrazine, 2,5-diisopropylpyrazine, 2-ethyl-3,5-dimethylpyrazine, 2,5-dimethyl-3-isobutylpyrazine, or 2-isopropyl-3-methoxy-5-isobutylpyrazine is preferable; 2,3,5,6-tetramethylpyrazine, pyrazine, 2,3,5-trimethylpyrazine, 2-methoxypyrazine, 2-isopropyl-3-methoxypyrazine, or 2,5-dimethylpyrazine is more preferable; and 2,3,5,6-tetramethylpyrazine or 2,3,5-trimethylpyrazine is still more preferable.

Component A3 may be used alone or in combination of two or more kinds thereof.

<1-3. Component B1>

The monomer composition according to the third embodiment preferably contains a polymerization inhibitor (component B1).

By containing component B1, it is possible to suppress the dimerization reaction of MMA by a radical mechanism during the storage of MMA. In addition, component B1 can trap the above-described hydroxyl radical generated during the storage of MMA. That is, when the monomer composition contains component B1 in addition to component A3, the generated amount of methyl pyruvate can be reduced by two different mechanisms of suppressing the generation of the hydroxyl radical by component A3 and removing the generated hydroxyl radical by component B1. Therefore, it is considered that the generation of the MMA dimer and methyl pyruvate can be suppressed more efficiently.

The aspect of component B1 is the same as the description for component B1 in

<1-3. Component B> of the first embodiment.

Component B1 may be one kind or two or more kinds.

When the monomer composition contains a compound corresponding to both component A3 and component B1, the compound is regarded as component A3. That is, when the monomer composition contains component A and component B1, it means that the monomer composition contains another component B1 different from the compound. When the monomer composition contains two or more kinds of compounds corresponding to both component A3 and component B1, a compound having the highest molar concentration in the monomer composition is regarded as component A3, and the other compounds are regarded as component B1.

<1-4. Component B2>

The monomer composition according to the third embodiment preferably contains the ester compound having an α-hydrogen (component B2) represented by Formula (3-2). The "α-hydrogen" represents a hydrogen atom bonded to a carbon atom adjacent to a carbon atom of a carbonyl group.

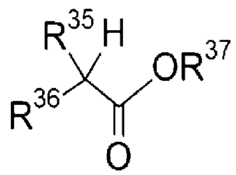 · · · (3-2)

In Formula (3-2), $R^{35}$ and $R^{36}$ are each independently a hydrogen atom or an alkyl group having 1 to 5 carbon atoms, and $R^{37}$ is an alkyl group having 1 to 5 carbon atoms.

When the monomer composition contains component B2 in addition to component A3, the generation of the MMA dimer and methyl pyruvate can be suppressed more efficiently. The reason for this is presumed as follows.

As described above, since the MMA dimer is mainly generated by the hydroxyl radical generated during the storage of MMA, and component A3 suppresses the generation of the hydroxyl radical, the generation of the MMA dimer can be suppressed. However, the dimerization reaction of MMA proceeds by an anionic mechanism under basic conditions. Since an ester compound having an α-hydrogen has weak acidity and can trap an anion, component B2 can suppress the dimerization reaction of MMA by an anion mechanism. Therefore, it is considered that the coexistence of component A3 and component B2 can efficiently suppress the dimerization reaction of MMA by different mechanisms.

On the other hand, as described above, methyl pyruvate is generated by oxidizing MMA with the hydroxyl radical and an oxygen molecule. Component A3 can suppress the generation of the hydroxyl radical, and component B2 can trap a radical intermediate generated by a reaction between the hydroxyl radical and MMA, and return the intermediate to MMA. Therefore, it is considered that the coexistence of component A3 and component B2 can efficiently suppress the generation of the methyl pyruvate.

A molecular weight of component B2 is preferably 200 or less. In this manner, the number of α-hydrogens per unit mass of component B2 is increased, and thus the effect of the present invention is easily obtained with a small amount of component B2. The molecular weight of component B2 is more preferably 180 or less, still more preferably 160 or less, and particularly preferably 140 or less.

The molecular weight of component B2 is preferably 60 or more, more preferably 80 or more, and still more preferably 100 or more.

The above-described upper limit and lower limit of the molecular weight of component B2 can be combined arbitrarily. For example, the molecular weight of component B2 is preferably 60 to 200, more preferably 60 to 180, still more

preferably 80 to 160, and particularly preferably 100 to 140.

In Formula (3-2), $R^{35}$ and $R^{36}$ are each independently a hydrogen atom or an alkyl group having 1 to 5 carbon atoms, and $R^{37}$ is an alkyl group having 1 to 5 carbon atoms. $R^{35}$, $R^{36}$, and $R^{37}$ may be the same as or different from each other.

In general, the $\alpha$-hydrogen of the ester compound has a property of reacting with an anion or a radical, but reactivity may be reduced depending on the type of a substituent. When $R^{35}$, $R^{36}$, and $R^{37}$ satisfy the above-described conditions, the reactivity of the $\alpha$-hydrogen of component B2 with an anion or a radical is maintained, and thus the effect of the present invention can be obtained.

The alkyl group of $R^{35}$, $R^{36}$, and $R^{37}$ may be linear or branched, or may have a ring.

The number of carbon atoms in the alkyl group is preferably 1 to 3, more preferably 1 or 2, and still more preferably 1.

Examples of the alkyl group include a methyl group, an ethyl group, an n-propyl group, an isopropyl group, an n-butyl group, an isobutyl group, an s-butyl group, a t-butyl group, an n-pentyl group, an isopentyl group, and a cyclopentyl group. Among these, a methyl group, an ethyl group, an n-propyl group, or an isopropyl group is preferable, and a methyl group, an ethyl group, or an isopropyl group is more preferable.

Among the compounds satisfying the above-described conditions, from the viewpoint of quality stability during storage of the monomer composition, as component B2, methyl isobutyrate, methyl propionate, isobutyl isobutyrate, methyl isovalerate, or methyl 2-methylbutyrate is preferable; and methyl isobutyrate or methyl propionate is more preferable.

Component B2 may be used alone or in combination of two or more kinds thereof.

<1-5. Component B3>

The monomer composition according to the third embodiment preferably contains the $\alpha,\beta$-unsaturated carbonyl compound (component B3) represented by Formula (3-3).

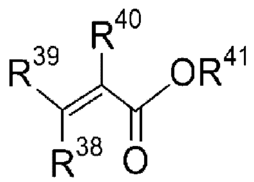 · · · (3-3)

In Formula (3-3), $R^{38}$, $R^{39}$, and $R^{40}$ are each independently a hydrogen atom or an alkyl group having 1 to 10 carbon atoms, and $R^{41}$ is an alkyl group having 1 to 10 carbon atoms.

When the monomer composition contains component B3 in addition to component A3, the generation of the MMA dimer and methyl pyruvate can be suppressed more efficiently. The reason for this is presumed as follows.

As described above, since the MMA dimer and the methyl pyruvate are generated by the hydroxyl radical generated during the storage of MMA, and component A3 suppresses the generation of the hydroxyl radical by absorbing ultraviolet light, the generation of the MMA dimer can be suppressed. On the other hand, the $\alpha,\beta$-unsaturated carbonyl compound (component B3) represented by Formula (3-3) also absorbs ultraviolet light because it has a conjugated double bond, but an absorption wavelength thereof is different from that of component A3. Therefore, it is considered that the coexistence of component A3 and component B3 can absorb ultraviolet light in a wide wavelength range and can efficiently suppress the generation of the hydroxyl radical.

A molecular weight of component B3 is preferably 400 or less. In this manner, the number of conjugated double bonds per unit mass of component B3 is increased, and thus the effect of the present invention is easily obtained with a small amount of component B3. The molecular weight of component B3 is more preferably 200 or less, still more preferably 160 or less, and particularly preferably 120 or less.

The molecular weight of component B3 is preferably 80 or more, and more preferably 100 or more.

The above-described upper limit and lower limit of the molecular weight of component B3 can be combined arbitrarily. For example, the molecular weight of component B3 is preferably 80 to 400, more preferably 80 to 200, still more preferably 80 to 160, and particularly preferably 80 to 120.

In Formula (3-3), $R^{38}$, $R^{39}$, and $R^{40}$ are each independently a hydrogen atom or an alkyl group having 1 to 10 carbon atoms, and $R^{41}$ is an alkyl group having 1 to 10 carbon atoms. $R^{38}$, $R^{39}$, $R^{40}$, and $R^{41}$ may be the same as or different from each other.

When $R^{38}$, $R^{39}$, $R^{40}$, and $R^{41}$ satisfy the above-described conditions, a $\pi$-conjugated system of component B3 is maintained, and thus a property of absorbing ultraviolet light in a wide wavelength range is provided, and the effect of the present invention can be obtained more efficiently.

The alkyl group of $R^{38}$, $R^{39}$, $R^{40}$, and $R^{41}$ may be linear or branched, or may have a ring.
The number of carbon atoms in the alkyl group is preferably 1 to 5, more preferably 1 to 3, and still more preferably 1 or 2.
Examples of the alkyl group include a methyl group, an ethyl group, an n-propyl group, an isopropyl group, an n-butyl group, an isobutyl group, an s-butyl group, a t-butyl group, an n-pentyl group, an isopentyl group, a hexyl group, an octyl group, a decyl group, a cyclopentyl group, a cyclohexyl group, and a cyclooctyl group. Among these, a methyl group, an ethyl group, an n-propyl group, or an isopropyl group is preferable, and a methyl group, an ethyl group, or an isopropyl group is more preferable.
Among the compounds satisfying the above-described conditions, from the viewpoint of quality stability during storage of the monomer composition, as component B3, methyl acrylate, butyl acrylate, ethyl methacrylate, methyl crotonate, methyl cis-crotonate, isobutyl methacrylate, butyl methacrylate, propyl methacrylate, isopentyl methacrylate, methyl 2-methylene-3-butenoate, methyl 3,3-dimethylacrylate, methyl 2-ethylacrylate, or methyl 2-pentenoate is preferable; methyl acrylate, butyl acrylate, ethyl methacrylate, or methyl crotonate is more preferable; and methyl acrylate or ethyl methacrylate is still more preferable.
Component B3 may be used alone or in combination of two or more kinds thereof.

<1-6. Monomer other than methyl methacrylate>

The monomer composition according to the third embodiment may contain a monomer other than MMA.
The aspect of the monomer other than MMA is the same as the description in

<1-4. Monomer other than methyl methacrylate> in the first embodiment.

A methacrylic polymer contained in a methacrylic resin composition according to a third embodiment, which will be described later, is preferably a copolymer including a repeating unit derived from MMA and a repeating unit derived from a vinyl monomer copolymerizable with MMA, and the vinyl monomer is preferably an acrylic acid ester or styrene. Therefore, it is preferable that the monomer composition according to the third embodiment further contain an acrylic acid ester or styrene as the monomer other than MMA.
The monomer copolymerizable with MMA may be one kind or two or more kinds. In addition, when component B3 is a monomer copolymerizable with MMA, component B3 may be used as the monomer copolymerizable with MMA, or another monomer copolymerizable with MMA may be used separately from component B3.

<1-7. Component C>

The monomer composition according to the third embodiment may contain other compounds (component C). The aspect of component C is the same as the description in <1-5. Component C> in the first embodiment.
Component C may be one kind or two or more kinds.

<1-8. Concentration of each component in monomer composition>

In the monomer composition according to the third embodiment, when a concentration of MMA with respect to the total mass of the monomer composition is indicated by XM (% by mass), XM is preferably 85% by mass or more. The lower limit of XM is more preferably 90% by mass or more, still more preferably 95% by mass or more, and particularly preferably 97% by mass or more. In addition, the upper limit of XM is usually 99.99% by mass or less, and may be 99.98% by mass or less or 99.97% by mass or less. Therefore, examples of XM include ranges of 85% to 99.99% by mass, 90% to 99.98% by mass, 95% to 99.97% by mass, 97% to 99.97% by mass, and 97% to 99.97% by mass.
In the monomer composition according to the third embodiment, when a concentration of component A3 with respect to the total mass of the monomer composition is indicated by XA3 (ppm by mass), XA3 is 1 ppm by mass or more. When XA3 is 1 ppm by mass or more, an effect of improving the quality stability of the monomer composition can be sufficiently obtained. In addition, XA3 is preferably 1 to 10,000 ppm by mass. When XA3 is 10,000 ppm by mass or less, the amount of impurities when a methacrylic resin composition is produced by polymerization of the monomer composition can be reduced, and adverse effects on physical properties of the methacrylic resin composition can be prevented. The lower limit of XA3 is preferably 5 ppm by mass or more, and more preferably 10 ppm by mass or more. In addition, the upper limit of XA3 is more preferably 5,000 ppm by mass or less, still more preferably 1,000 ppm by mass or less, and particularly preferably 100 ppm by mass or less.
In the monomer composition according to the third embodiment, when a concentration of component A3 with respect to the mass of MMA in the monomer composition is indicated by ZA (ppm by mass), ZA is preferably 1 to 10,000 ppm by mass. ZA can be calculated using the following expression.

$$ZA = \frac{XA3}{XM} \times 100$$

When ZA is 1 ppm by mass or more, an effect of improving the quality stability of the monomer composition can be sufficiently obtained. In addition, when ZA is 10,000 ppm by mass or less, the amount of impurities when a methacrylic resin composition is produced by polymerization of the monomer composition can be reduced, and adverse effects on physical properties of the methacrylic resin composition can be prevented. The lower limit of ZA is more preferably 5 ppm by mass or more, and still more preferably 10 ppm by mass or more. In addition, the upper limit of ZA is more preferably 5,000 ppm by mass or less, still more preferably 1,000 ppm by mass or less, and particularly preferably 100 ppm by mass or less.

When the monomer composition according to the third embodiment contains component B1, and a concentration of component B1 with respect to the total mass of the monomer composition is indicated by XB1 (ppm by mass), XB1 is preferably 1 to 2,000 ppm by mass. When XB1 is 1 ppm by mass or more, the effect of improving the quality stability of the monomer composition can be sufficiently obtained. In addition, when XB1 is 2,000 ppm by mass or less, the amount of impurities when a methacrylic resin composition is produced by polymerization of the monomer composition can be reduced, and adverse effects on physical properties of the methacrylic resin composition can be prevented. The lower limit of XB1 is more preferably 5 ppm by mass or more, and still more preferably 10 ppm by mass or more. In addition, the upper limit of XB1 is more preferably 1,000 ppm by mass or less, still more preferably 500 ppm by mass or less, and particularly preferably 100 ppm by mass or less.

In the monomer composition according to the third embodiment, when a concentration of component B1 with respect to the mass of MMA in the monomer composition is indicated by ZB1 (ppm by mass), ZB1 is preferably 1 to 2,000 ppm by mass. ZB1 can be calculated using the following expression.

$$ZB1 = \frac{XB1}{XM} \times 100$$

When ZB1 is 1 ppm by mass or more, an effect of improving the quality stability of the monomer composition can be sufficiently obtained. In addition, when ZB1 is 2,000 ppm by mass or less, the amount of impurities when a methacrylic resin composition is produced by polymerization of the monomer composition can be reduced, and adverse effects on physical properties of the methacrylic resin composition can be prevented. The lower limit of ZB1 is more preferably 5 ppm by mass or more, and still more preferably 10 ppm by mass or more. In addition, the upper limit of ZB1 is more preferably 1,000 ppm by mass or less, still more preferably 500 ppm by mass or less, and particularly preferably 100 ppm by mass or less.

In addition, from the viewpoint of improving the quality stability of the monomer composition, XB1/XA3 is preferably 0.005 to 1000. The lower limit of XB1/XA3 is more preferably 0.05 or more, and still more preferably 0.5 or more. The upper limit thereof is more preferably 100 or less, still more preferably 50 or less, and particularly preferably 5 or less.

When the monomer composition according to the third embodiment contains component B2, and a concentration of component B2 with respect to the total mass of the monomer composition is indicated by XB2 (ppm by mass), XB2 is preferably 5 to 10,000 ppm by mass. When XB2 is 5 ppm by mass or more, the effect of improving the quality stability of the monomer composition can be sufficiently obtained. In addition, when XB2 is 10,000 ppm by mass or less, the amount of impurities when a methacrylic resin composition is produced by polymerization of the monomer composition can be reduced, and adverse effects on physical properties of the methacrylic resin composition can be prevented. The lower limit of XB2 is more preferably 8 ppm by mass or more. In addition, the upper limit of XB2 is more preferably 1,000 ppm by mass or less, still more preferably 100 ppm by mass or less, and particularly preferably 20 ppm by mass or less.

In the monomer composition according to the third embodiment, when a concentration of component B2 with respect to the mass of MMA in the monomer composition is indicated by ZB2 (ppm by mass), ZB2 is preferably 5 to 10,000 ppm by mass. ZB2 can be calculated using the following expression.

$$ZB2 = \frac{XB2}{XM} \times 100$$

When ZB2 is 5 ppm by mass or more, an effect of improving the quality stability of the monomer composition can be sufficiently obtained. In addition, when ZB2 is 10,000 ppm by mass or less, the amount of impurities when a methacrylic resin composition is produced by polymerization of the monomer composition can be reduced, and adverse effects on physical properties of the methacrylic resin composition can be prevented. The lower limit of ZB2 is more preferably 8 ppm

by mass or more. In addition, the upper limit of ZB2 is more preferably 1,000 ppm by mass or less, still more preferably 100 ppm by mass or less, and particularly preferably 20 ppm by mass or less.

In addition, from the viewpoint of improving the quality stability of the monomer composition, XB2/XA3 is preferably 0.005 to 1000. The lower limit of XB2/XA3 is more preferably 0.05 or more, and still more preferably 0.5 or more. The upper limit thereof is more preferably 100 or less, still more preferably 50 or less, and particularly preferably 5 or less.

When the monomer composition according to the third embodiment contains component B3, and a concentration of component B3 with respect to the total mass of the monomer composition is indicated by XB3 (ppm by mass), XB3 is preferably 5 to 10,000 ppm by mass. When XB3 is 5 ppm by mass or more, the effect of improving the quality stability of the monomer composition can be sufficiently obtained. In addition, when XB3 is 10,000 ppm by mass or less, the amount of impurities when a methacrylic resin composition is produced by polymerization of the monomer composition can be reduced, and adverse effects on physical properties of the methacrylic resin composition can be prevented. The lower limit of XB3 is more preferably 8 ppm by mass or more. In addition, the upper limit of XB3 is more preferably 1,000 ppm by mass or less, still more preferably 100 ppm by mass or less, and particularly preferably 20 ppm by mass or less.

In the monomer composition according to the third embodiment, when a concentration of component B3 with respect to the mass of MMA in the monomer composition is indicated by ZB3 (ppm by mass), ZB3 is preferably 5 to 10,000 ppm by mass. ZB3 can be calculated using the following expression.

$$ZB3 = \frac{XB3}{XM} \times 100$$

When ZB3 is 5 ppm by mass or more, an effect of improving the quality stability of the monomer composition can be sufficiently obtained. **In** addition, when ZB3 is 10,000 ppm by mass or less, the amount of impurities when a methacrylic resin composition is produced by polymerization of the monomer composition can be reduced, and adverse effects on physical properties of the methacrylic resin composition can be prevented. The lower limit of ZB3 is more preferably 8 ppm by mass or more. In addition, the upper limit of ZB3 is more preferably 1,000 ppm by mass or less, still more preferably 100 ppm by mass or less, and particularly preferably 20 ppm by mass or less.

In addition, from the viewpoint of improving the quality stability of the monomer composition, XB3/XA3 is preferably 0.005 to 1000. The lower limit of XB3/XA3 is more preferably 0.05 or more, and still more preferably 0.5 or more. The upper limit thereof is more preferably 100 or less, still more preferably 50 or less, and particularly preferably 5 or less.

When the monomer composition according to the third embodiment contains the monomer other than MMA, a concentration of the monomer with respect to the total mass of the monomer composition is preferably 0% to 15% by mass. **In** addition, the lower limit of the concentration of the monomer is more preferably 1% by mass or more, and the upper limit thereof is more preferably 10% by mass or less.

The above-described preferred upper limit value and lower limit value can be arbitrarily combined.

<1-9. Analysis of monomer composition>

A method of confirming that the monomer composition contains component A3, component B1, component B2, component B3, the monomer other than MMA, component C, or water, and a method of calculating concentrations of component A3, component B1, component B2, component B3, the monomer other than MMA, component C, and water in the monomer composition are the same as the methods described in the first embodiment.

<1-10. Production method for monomer composition>

The monomer composition according to the third embodiment can be produced, for example, by a method of adding component A3 to MMA, and component B1, component B2, or component B3, the monomer other than MMA, and component C may be optionally further added thereto. In the following description, component B1, component B2, and component B3 may be collectively referred to as "component B".

The production method for the monomer composition is the same as the method described in the first embodiment, except that component A3 and component B are used.

As component A3 and component B, a commercially available product may be used, or a component synthesized by a known method may be used. When MMA produced by the method described in <1-1. Methyl methacrylate> of the first embodiment is used, component A3, and component B, the monomer other than MMA, and component C optionally added may be added as raw materials or in the middle of a production process to produce the monomer composition. In addition, when component A3 or component B is generated as a by-product in the MMA production process, the monomer composition may be produced by leaving a part of component A3 or component B to be generated.

[2. Methacrylic resin composition]

The methacrylic resin composition according to the third embodiment contains a methacrylic polymer and a pyrazine compound (component A3) represented by Formula (3-1).

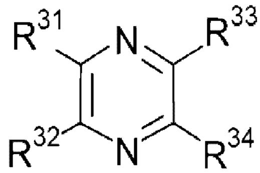 · · · (3-1)

In Formula (3-1), $R^{31}$, $R^{32}$, $R^{33}$, and $R^{34}$ are each independently a hydrogen atom, an alkyl group having 1 to 5 carbon atoms, or an alkoxy group having 1 to 6 carbon atoms.
In addition, when a concentration of component A3 with respect to the total mass of the methacrylic resin composition is indicated by YA3 (ppm by mass), YA3 is 1 to 10,000 ppm by mass. As a result, the methacrylic resin composition exhibits excellent long-term thermal stability while maintaining transparency and heat resistance.
It is preferable that the methacrylic resin composition further contain a polymerization inhibitor (component B1), an ester compound having an $\alpha$-hydrogen (component B2) represented by Formula (3-2), or an $\alpha,\beta$-unsaturated carbonyl compound (component B3) represented by Formula (3-3). In addition, the methacrylic resin composition may contain other compounds (component C) as long as the effect of the present invention is not impaired.

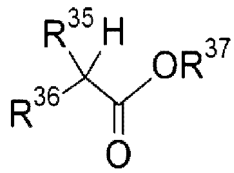 · · · (3-2)

In Formula (3-2), $R^{35}$ and $R^{36}$ are each independently a hydrogen atom or an alkyl group having 1 to 5 carbon atoms, and $R^{37}$ is an alkyl group having 1 to 5 carbon atoms.

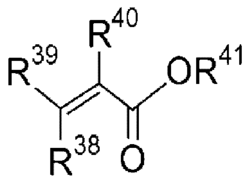 · · · (3-3)

In Formula (3-3), $R^{38}$, $R^{39}$, and $R^{40}$ are each independently a hydrogen atom or an alkyl group having 1 to 10 carbon atoms, and $R^{41}$ is an alkyl group having 1 to 10 carbon atoms.
A form of the methacrylic resin composition is not particularly limited, but is usually solid.
Hereinafter, each item will be described in detail.

<2-1. Methacrylic polymer>

The methacrylic resin composition according to the third embodiment contains a methacrylic polymer, and thus exhibits favorable transparency. In addition, decomposition due to heat or light is suppressed, and thus favorable heating formability, heat resistance, and mechanical strength are exhibited.

(Formulation of methacrylic polymer)

From the viewpoint of heat resistance and thermal stability of the methacrylic resin composition, a contained proportion of the MMA unit is preferably 50% to 100% by mass, and a contained proportion of the repeating unit derived from the vinyl monomer is preferably 0% to 50% by mass, with respect to the total mass of the methacrylic polymer. The lower limit of the contained proportion of the MMA unit is more preferably 60% or more, still more preferably 70% or more, particularly preferably 80% or more, and most preferably 90% by mass or more. In addition, the upper limit of the contained proportion of the repeating unit derived from the vinyl monomer is more preferably 40% by mass or less, still more

preferably 30% by mass or less, particularly preferably 20% by mass or less, and most preferably 10% by mass or less.

When the methacrylic polymer is a copolymer, arrangement of the copolymer is not particularly limited, and may be, for example, a random copolymer, a block copolymer, or an alternating copolymer; but a random copolymer is preferable.

The aspect of MMA is the same as that in <1-1. Methyl methacrylate> of the first embodiment.

When the methacrylic polymer is a copolymer including the repeating unit derived from the vinyl monomer, the vinyl monomer is preferably an acrylic acid ester or styrene. As a result, the thermal stability of the methacrylic resin composition is improved.

When the above-described vinyl monomer is an acrylic acid ester, the methacrylic polymer preferably includes 70% to 100% by mass of the MMA unit and 0% to 30% by mass of the repeating unit derived from an acrylic acid ester. When the above-described vinyl monomer is styrene, the methacrylic polymer preferably includes 50% to 100% by mass of the MMA unit and 0% to 50% by mass of the repeating unit derived from styrene.

As the acrylic acid ester, an acrylic acid ester having an alkyl group having 1 to 6 carbon atoms in a side chain is preferable; and examples thereof include methyl acrylate, ethyl acrylate, propyl acrylate, n-butyl acrylate, and t-butyl acrylate. These may be used alone or in combination of two or more kinds thereof in any ratio and combination. Among these, from the viewpoint of thermal stability of the methacrylic resin composition, at least one selected from the group consisting of methyl acrylate, ethyl acrylate, and n-butyl acrylate is preferable; and at least one selected from the group consisting of methyl acrylate and ethyl acrylate is more preferable.

One kind of the vinyl monomer can be used alone, or two or more kinds thereof can be used in any ratio and combination.

In addition, the methacrylic polymer can include a repeating unit derived from a polyfunctional monomer which contains two or more radically polymerizable functional groups in one molecule, as long as the effect of the present invention can be obtained. As a result, solvent resistance, chemical resistance, and the like can be improved.

The radically polymerizable functional group is not particularly limited as long as it has a carbon-carbon double bond and is a group which can be radically polymerized. Specific examples thereof include a vinyl group, an allyl group, a (meth)acryloyl group, and a (meth)acryloyloxy group. In particular, a (meth)acryloyl group is preferable from the viewpoint that storage stability of a compound having the radically polymerizable functional group is excellent and polymerizability of the compound is easily controlled. Here, the "(meth)acryloyl" means at least one selected from "acryloyl" or "methacryloyl". In addition, the radically polymerizable functional groups in the monomer having two radically polymerizable functional groups may be the same as or different from each other.

Examples of the polyfunctional monomer include allyl methacrylate, allyl acrylate, ethylene glycol di(meth) acrylate, ethylene glycol tri(meth)acrylate, neopentyl glycol di(meth)acrylate, and trimethylolpropane tri(meth)acrylate, but the polyfunctional monomer is not particularly limited thereto. These may be used alone or in combination of two or more kinds thereof in any ratio and combination. Among these, from the viewpoint of further improving the solvent resistance and the chemical resistance, the polyfunctional monomer is more preferably at least one selected from the group consisting of ethylene glycol di(meth)acrylate or neopentyl glycol di(meth)acrylate, and still more preferably ethylene glycol di(meth)acrylate.

<2-2. Component A3>

The methacrylic resin composition according to a third embodiment contains the pyrazine compound (component A3) represented by Formula (3-1). As a result, the methacrylic resin composition exhibits excellent thermal stability. The reason for this is presumed as follows.

In the methacrylic polymer including the MMA unit, the main chain or the side chain is cleaved by heat to generate a radical species. Typically, the generated radical species cause a decrease in transparency of the methacrylic resin composition. However, when component A is present in the methacrylic resin composition, component A functions as a radical scavenger, and the decrease in transparency is suppressed. As a result, the methacrylic resin composition exhibits excellent thermal stability.

The aspect of component A3 is the same as the description in <1-2. Component A3>.

Component A3 may be one kind or two or more kinds.

<2-3. Component B1>

The methacrylic resin composition according to the third embodiment preferably contains a polymerization inhibitor (component B1). As a result, an effect of improving the thermal stability of the methacrylic resin composition can be more efficiently obtained.

The aspect of component B1 is the same as the description in <1-3. Component B1>.

Component B1 may be one kind or two or more kinds.

<2-4. Component B2>

The methacrylic resin composition according to the third embodiment preferably contains the ester compound having an $\alpha$-hydrogen (component B2) represented by Formula (3-2). As a result, an effect of improving the thermal stability of the methacrylic resin composition can be more efficiently obtained. The reason for this is presumed as follows.

As described, in the methacrylic polymer including the MMA unit, the main chain or the side chain is cleaved by heat to generate a radical species. Typically, the generated radical species cause a decrease in transparency of the methacrylic resin composition. However, when component B2 is present in the methacrylic resin composition, component B2 functions as a radical scavenger, in addition to component A3. Since component A3 and component B2 have different types of radical species which can be captured, the coexistence of component A3 and component B2 can efficiently capture radicals and suppress a decrease in transparency. As a result, the methacrylic resin composition exhibits excellent thermal stability.

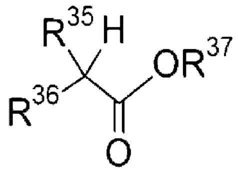 · · · (3-2)

In Formula (3-2), $R^{35}$ and $R^{36}$ are each independently a hydrogen atom or an alkyl group having 1 to 5 carbon atoms, and $R^{37}$ is an alkyl group having 1 to 5 carbon atoms.

The aspect of component B2 is the same as the description in <1-4. Component B2>.

Component B2 may be one kind or two or more kinds.

<2-5. Component B3>

The monomer composition according to the third embodiment preferably contains the $\alpha,\beta$-unsaturated carbonyl compound (component B3) represented by Formula (3-3). As a result, an effect of improving the thermal stability of the methacrylic resin composition can be more efficiently obtained. The reason for this is presumed as follows.

As described, in the methacrylic polymer including the MMA unit, the main chain or the side chain is cleaved by heat to generate a radical species. Typically, the generated radical species cause a decrease in transparency of the methacrylic resin composition. However, when component B3 is present in the methacrylic resin composition, component B3 functions as a radical scavenger, in addition to component A3. Since component A3 and component B3 have different types of radical species which can be captured, the coexistence of component A3 and component B3 can efficiently capture radicals and suppress a decrease in transparency. As a result, the methacrylic resin composition exhibits excellent thermal stability.

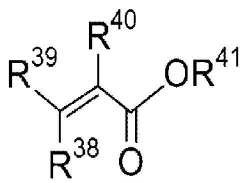 · · · (3-3)

In Formula (3-3), $R^{38}$, $R^{39}$, and $R^{40}$ are each independently a hydrogen atom or an alkyl group having 1 to 10 carbon atoms, and $R^{41}$ is an alkyl group having 1 to 10 carbon atoms.

The aspect of component B3 is the same as the description in <1-5. Component B3>.

Component B3 may be one kind or two or more kinds.

<2-6. Component C>

The methacrylic resin composition according to the third embodiment may contain other compounds (component C). The aspect of component C is the same as the description in <1-7. Component C>.

Component C may be one kind or two or more kinds.

<2-7. Concentration of each component in methacrylic resin composition>

When a concentration of the methacrylic polymer with respect to the total mass of the methacrylic resin

composition is indicated by YM (% by mass), YM is not particularly limited, but from the viewpoint of improving heat resistance, YM is usually 95% by mass or more, preferably 97.5% by mass or more, more preferably 98% by mass or more, and still more preferably 99% by mass or more. On the other hand, from the viewpoint of obtaining excellent thermal stability, YM is usually 99.99% by mass or less, preferably 99.985% by mass or less, more preferably 99.98% by mass or less, still more preferably 99.975% by mass or less, particularly preferably 99.97% by mass or less, especially preferably 99.95% by mass or less, and most preferably 99.9% by mass or less. The above-described upper limit value and lower limit value can be arbitrarily combined. Examples of the YM include ranges of 95% to 99.99% by mass, 95% to 99.985% by mass, 97.5% to 99.98% by mass, 97.5% to 99.975% by mass, 98% to 99.97% by mass, 98% to 99.95% by mass, and 99% to 99.9% by mass. When the methacrylic resin composition contains two or more kinds of methacrylic polymers, YM is the total concentration of the two or more kinds of methacrylic polymers.

When a concentration of component A3 with respect to the total mass of the methacrylic resin composition according to the third embodiment is indicated by YA3, YA3 is 1 ppm by mass or more. When the lower limit of YA3 is 1 ppm by mass or more, the methacrylic resin composition exhibits excellent thermal stability. In addition, YA is preferably 1 to 10,000 ppm by mass. When the upper limit of YA3 is 10,000 ppm by mass or less, it is possible to prevent physical properties of the methacrylic resin composition from being adversely affected. The lower limit of YA3 is preferably 5 ppm by mass or more, and more preferably 10 ppm by mass or more. In addition, the upper limit of YA3 is more preferably 5,000 ppm by mass or less, still more preferably 1,000 ppm by mass or less, and particularly preferably 100 ppm by mass or less.

In the methacrylic resin composition according to the third embodiment, when a concentration of component A3 with respect to the mass of the methacrylic polymer in the methacrylic resin composition is WA (ppm by mass), WA is preferably 1 to 10,000 ppm by mass. WA can be calculated using the following expression.

$$WA = \frac{YA3}{YM} \times 100$$

When the lower limit of WA is 1 ppm by mass or more, the methacrylic resin composition exhibits excellent thermal stability. In addition, when the upper limit of WA is 10,000 ppm by mass or less, it is possible to prevent physical properties of the methacrylic resin composition from being adversely affected. The lower limit of WA is more preferably 5 ppm by mass or more, and still more preferably 10 ppm by mass or more. In addition, the upper limit of WA is more preferably 5,000 ppm by mass or less, still more preferably 1,000 ppm by mass or less, and particularly preferably 100 ppm by mass or less.

When the methacrylic resin composition according to the third embodiment contains component B1, and a concentration of component B1 with respect to the total mass of the methacrylic resin composition is indicated by YB1 (ppm by mass), YB1 is preferably 1 to 2,000 ppm by mass. When YB1 is 1 ppm by mass or more, the effect of improving the thermal stability of the methacrylic resin composition can be sufficiently obtained. In addition, when YB1 is 2,000 ppm by mass or less, it is possible to prevent physical properties of the methacrylic resin composition from being adversely affected. The lower limit of YB1 is more preferably 5 ppm by mass or more, and still more preferably 10 ppm by mass or more. In addition, the upper limit of YB1 is more preferably 1,000 ppm by mass or less, still more preferably 500 ppm by mass or less, and particularly preferably 100 ppm by mass or less.

In the methacrylic resin composition according to the third embodiment, when a concentration of component B1 with respect to the mass of the methacrylic polymer in the methacrylic resin composition is WB1 (ppm by mass), WB1 is preferably 1 to 2,000 ppm by mass. WB1 can be calculated using the following expression.

$$WB1 = \frac{YB1}{YM} \times 100$$

When the lower limit of WB1 is 1 ppm by mass or more, the methacrylic resin composition exhibits excellent thermal stability. In addition, when the upper limit of WB1 is 2,000 ppm by mass or less, it is possible to prevent physical properties of the methacrylic resin composition from being adversely affected. The lower limit of WB1 is more preferably 5 ppm by mass or more, and still more preferably 10 ppm by mass or more. In addition, the upper limit of WB1 is more preferably 1,000 ppm by mass or less, still more preferably 500 ppm by mass or less, and particularly preferably 100 ppm by mass or less.

In addition, from the viewpoint of improving the thermal stability of the methacrylic resin composition, YB1/YA3 is preferably 0.005 to 1000. The lower limit of YB1/YA3 is more preferably 0.05 or more, and still more preferably 0.5 or more. The upper limit thereof is more preferably 100 or less, still more preferably 50 or less, and particularly preferably 5 or less.

When the methacrylic resin composition according to the third embodiment contains component B2, and a

concentration of component B2 with respect to the total mass of the methacrylic resin composition is indicated by YB2 (ppm by mass), YB2 is preferably 5 to 10,000 ppm by mass. When YB2 is 5 ppm by mass or more, the effect of improving the thermal stability of the methacrylic resin composition can be sufficiently obtained. In addition, when YB2 is 10,000 ppm by mass or less, it is possible to prevent physical properties of the methacrylic resin composition from being adversely affected. The lower limit of YB2 is more preferably 8 ppm by mass or more. In addition, the upper limit of YB2 is more preferably 1,000 ppm by mass or less, still more preferably 100 ppm by mass or less, and particularly preferably 20 ppm by mass or less.

In the methacrylic resin composition according to the third embodiment, when a concentration of component B2 with respect to the mass of the methacrylic polymer in the methacrylic resin composition is WB2 (ppm by mass), WB2 is preferably 5 to 10,000 ppm by mass. WB2 can be calculated using the following expression.

$$WB2 = \frac{YB2}{YM} \times 100$$

When the lower limit of WB2 is 5 ppm by mass or more, the methacrylic resin composition exhibits excellent thermal stability. In addition, when the upper limit of WB2 is 10,000 ppm by mass or less, it is possible to prevent physical properties of the methacrylic resin composition from being adversely affected. The lower limit of WB2 is more preferably 8 ppm by mass or more. In addition, the upper limit of WB2 is more preferably 1,000 ppm by mass or less, still more preferably 100 ppm by mass or less, and particularly preferably 20 ppm by mass or less.

In addition, from the viewpoint of improving the quality stability of the methacrylic resin composition, YB2/YA3 is preferably 0.005 to 1000. The lower limit of YB2/YA3 is more preferably 0.05 or more, and still more preferably 0.5 or more. The upper limit thereof is more preferably 100 or less, still more preferably 50 or less, and particularly preferably 5 or less.

When the methacrylic resin composition according to the third embodiment contains component B3, and a concentration of component B3 with respect to the total mass of the methacrylic resin composition is indicated by YB3 (ppm by mass), YB3 is preferably 5 to 10,000 ppm by mass. When YB3 is 5 ppm by mass or more, the effect of improving the thermal stability of the methacrylic resin composition can be sufficiently obtained. In addition, when YB3 is 10,000 ppm by mass or less, it is possible to prevent physical properties of the methacrylic resin composition from being adversely affected. The lower limit of YB3 is more preferably 8 ppm by mass or more. In addition, the upper limit of YB3 is more preferably 1,000 ppm by mass or less, still more preferably 100 ppm by mass or less, and particularly preferably 20 ppm by mass or less.

In the methacrylic resin composition according to the third embodiment, when a concentration of component B3 with respect to the mass of the methacrylic polymer in the methacrylic resin composition is WB3 (ppm by mass), WB3 is preferably 5 to 10,000 ppm by mass. WB3 can be calculated using the following expression.

$$WB3 = \frac{YB3}{YM} \times 100$$

When the lower limit of WB3 is 5 ppm by mass or more, the methacrylic resin composition exhibits excellent thermal stability. In addition, when the upper limit of WB3 is 10,000 ppm by mass or less, it is possible to prevent physical properties of the methacrylic resin composition from being adversely affected. The lower limit of WB3 is more preferably 8 ppm by mass or more. In addition, the upper limit of WB3 is more preferably 1,000 ppm by mass or less, still more preferably 100 ppm by mass or less, and particularly preferably 20 ppm by mass or less.

In addition, from the viewpoint of improving the quality stability of the methacrylic resin composition, YB3/YA3 is preferably 0.005 to 1000. The lower limit of YB3/YA3 is more preferably 0.05 or more, and still more preferably 0.5 or more. The upper limit thereof is more preferably 100 or less, still more preferably 50 or less, and particularly preferably 5 or less.

The above-described preferred upper limit value and lower limit value can be arbitrarily combined.

<2-8. Analysis of methacrylic resin composition>

A method of measuring concentrations of component A3, component B1, component B2, component B3, and component C in the methacrylic resin composition is the same as the method described in <2-5. Analysis of methacrylic resin composition> of the first embodiment.

[3. Production method for methacrylic resin composition]

The methacrylic resin composition according to the third embodiment can be produced by a method including a

step of radically polymerizing a polymerizable composition containing MMA. The polymerizable composition is, for example, a polymerizable composition (M31) containing a raw material composition, a component A3, and a radical polymerization initiator, or a polymerizable composition (M32) containing the monomer composition according to the third embodiment and a radical polymerization initiator; and the polymerizable composition (M32) is preferable. That is, the methacrylic resin composition according to the third embodiment preferably contains a polymer of the monomer composition according to the third embodiment.

The monomer composition according to the third embodiment has a low contained amount of MMA dimer and methyl pyruvate even after long-term storage. When a methacrylic resin composition is produced using, as a raw material, the monomer composition having a low contained amount of MMA dimer, a polymer having a small number of branches is obtained, and thus the thermal stability of the methacrylic resin composition is improved. In addition, when a methacrylic resin composition is produced using, as a raw material, the monomer composition having a low contained amount of methyl pyruvate, the generation of radicals is suppressed, and generation of a coloring substance can be suppressed.

Hereinafter, each item will be described in detail.

<3-1. Polymerizable composition (M31)>

The polymerizable composition (M31) contains a raw material composition, a component A3, and a radical polymerization initiator. It is preferable that the polymerizable composition (M31) further contain a polymerization inhibitor (component B1), the ester compound having an $\alpha$-hydrogen (component B2) represented by Formula (3-2), or the $\alpha,\beta$-unsaturated carbonyl compound (component B3) represented by Formula (3-3). In addition, the methacrylic resin composition may contain other compounds (component C) as long as the effect of the present invention is not impaired.

(Raw material composition)

The raw material composition is also a raw material component of the methacrylic polymer contained in the methacrylic resin composition according to the third embodiment.

Examples of the raw material composition include a composition containing only MMA, and a composition containing MMA and a vinyl monomer. As the vinyl monomer, the same vinyl monomer as described in <2-1. Methacrylic polymer> can be used. When the raw material composition contains an acrylic acid ester or styrene as the vinyl monomer, the thermal stability of the methacrylic resin composition to be obtained is improved. One kind of the vinyl monomer can be used alone, or two or more kinds thereof can be used in any ratio and combination.

A contained proportion of MMA is preferably 50% to 100% by mass, and a contained proportion of the vinyl monomer is preferably 0% to 50% by mass, with respect to the total mass of the raw material composition. In addition, the lower limit of the contained proportion of MMA is more preferably 70% by mass or more, and the upper limit of the contained proportion of the vinyl monomer is more preferably 30% by mass or less.

In addition, the raw material composition may contain a polymer including the MMA unit in advance. When the raw material composition contains the polymer, the raw material composition is a syrup, and thus a polymerization time can be shortened and productivity can be improved. Specific examples of the polymer including the MMA unit include a polymer including 50% by mass or more of the MMA unit and 50% by mass or less of a constitutional unit derived from the vinyl monomer with respect to the total mass of the polymer, and a polymer consisting of 100% by mass of the MMA unit.

Examples of a method of obtaining the above-described syrup include a method of dissolving the polymer including the MMA unit in the raw material composition, and a method of adding a known radical polymerization initiator to the raw material composition and polymerizing a part of the mixture.

A concentration of the raw material composition with respect to the total mass of the polymerizable composition (M31) can be set in a range of 97.5% to 99.99% by mass.

(Component A3)

The aspect of component A3 is the same as the description in <1-2. Component A3>.

Component A3 may be one kind or two or more kinds.

A concentration of component A3 with respect to the total mass of the polymerizable composition (M31) is preferably 1 to 10,000 ppm by mass. When the lower limit of the concentration of component A3 is 1 ppm by mass or more, the methacrylic resin composition to be obtained exhibits excellent thermal stability. In addition, when the upper limit of the concentration of component A3 is 10,000 ppm by mass or less, it is possible to prevent physical properties of the methacrylic resin composition to be obtained from being adversely affected. The lower limit of the concentration of component A3 is preferably 5 ppm by mass or more, and more preferably 10 ppm by mass or more. In addition, the upper limit of the concentration of component A3 is preferably 5,000 ppm by mass or less, more preferably 1,000 ppm by mass or less, and still more preferably 100 ppm by mass or less.

(Radical polymerization initiator)

As the radical polymerization initiator, a known radical polymerization initiator can be used, and the same radical polymerization initiator as mentioned in the first embodiment can be exemplary examples. The radical polymerization initiator may be used alone or in combination of two or more kinds thereof in any ratio and combination. In addition, as necessary, a known polymerization promoter such as amine and mercaptan can be used in combination with the radical polymerization initiator.
A concentration of the radical polymerization initiator with respect to the total mass of the polymerizable composition (M31) is not particularly limited, and for example, it can be set to 0.005% to 5% by mass, may be set to 0.01% to 1% by mass.

(Component B1)

The aspect of component B1 is the same as the description in <1-3. Component B1>.
Component B1 may be one kind or two or more kinds.
When the polymerizable composition (M31) contains component B1, a concentration of component B1 with respect to the total mass of the polymerizable composition (M31) is preferably 1 to 1,000 ppm by mass. When the concentration of component B1 is 1 ppm by mass or more, the effect of improving the thermal stability of the methacrylic resin composition to be obtained can be sufficiently obtained. In addition, when the concentration of component B1 is 1,000 ppm by mass or less, it is possible to prevent physical properties of the methacrylic resin composition to be obtained from being adversely affected. The lower limit of the concentration of component B1 is more preferably 5 ppm by mass or more, and still more preferably 10 ppm by mass or more. In addition, the upper limit of the concentration of component B1 is more preferably 500 ppm by mass or less, and still more preferably 100 ppm by mass or less.

(Component B2)

The aspect of component B2 is the same as the description in <1-4. Component B2>.
Component B2 may be one kind or two or more kinds.
When the polymerizable composition (M31) contains component B2, a concentration of component B2 with respect to the total mass of the polymerizable composition (M31) is preferably 5 to 1,000 ppm by mass. When the concentration of component B2 is 5 ppm by mass or more, the effect of improving the thermal stability of the methacrylic resin composition to be obtained can be sufficiently obtained. In addition, when the concentration of component B2 is 10,000 ppm by mass or less, it is possible to prevent physical properties of the methacrylic resin composition to be obtained from being adversely affected. The lower limit of the concentration of component B2 is more preferably 8 ppm by mass or more. In addition, the upper limit of the concentration of component B2 is more preferably 1,000 ppm by mass or less, still more preferably 100 ppm by mass or less, and particularly preferably 20 ppm by mass or less.

(Component B3)

The aspect of component B3 is the same as the description in <1-5. Component B3>.
Component B3 may be one kind or two or more kinds.
When the polymerizable composition (M31) contains component B3, a concentration of component B3 with respect to the total mass of the polymerizable composition (M31) is preferably 5 to 1,000 ppm by mass. When the concentration of component B3 is 5 ppm by mass or more, the effect of improving the thermal stability of the methacrylic resin composition to be obtained can be sufficiently obtained. In addition, when the concentration of component B3 is 10,000 ppm by mass or less, it is possible to prevent physical properties of the methacrylic resin composition to be obtained from being adversely affected. The lower limit of the concentration of component B3 is more preferably 8 ppm by mass or more. In addition, the upper limit of the concentration of component B3 is more preferably 1,000 ppm by mass or less, still more preferably 100 ppm by mass or less, and particularly preferably 20 ppm by mass or less.

(Component C)

The aspect of component C is the same as the description in <1-7. Component C>.
Component C may be one kind or two or more kinds.

<3-2. Polymerizable composition (M32)>

The polymerizable composition (M32) contains the monomer composition according to the third embodiment

and a known radical polymerization initiator. The polymerizable composition (M32) may further contain a vinyl monomer. In addition, the methacrylic resin composition may contain other compounds (component C) as long as the effect of the present invention is not impaired.

(Monomer composition)

The monomer composition is the monomer composition according to the third embodiment, and is a composition containing a raw material component of the methacrylic polymer contained in the methacrylic resin composition according to the third embodiment.
A concentration of the monomer composition with respect to the total mass of the polymerizable composition (M32) can be set to 60% by mass or more and less than 100% by mass.

(Radical polymerization initiator)

The aspect of the radical polymerization initiator is the same as the description in <3-1. Polymerizable composition (M31)>.

(Vinyl monomer)

When the polymerizable composition (M32) contains a vinyl monomer, the same vinyl monomer as described in <2-1. Methacrylic polymer> can be used as the vinyl monomer. When the polymerizable composition (M32) contains an acrylic acid ester or styrene as the vinyl monomer, the thermal stability of the methacrylic resin composition to be obtained is improved. One kind of the vinyl monomer can be used alone, or two or more kinds thereof can be used in any ratio and combination.
When the vinyl monomer is contained in the monomer composition, the vinyl monomer may be used as it is, or the vinyl monomer may be newly added as necessary. A concentration of the vinyl monomer with respect to the total mass of the polymerizable composition (M32) can be set to more than 0% by mass and less than 40% by mass.

(Component C)

The aspect of component C is the same as the description in <1-7. Component C>.
Component C may be one kind or two or more kinds.

<3-3. Radical polymerization step of polymerizable composition>

The aspect of the radical polymerization step of the polymerizable composition is the same as the description of <3-3. Radical polymerization step of polymerizable composition> in the first embodiment.

[4. Molded resin object]

The molded resin object according to the third embodiment contains the methacrylic resin composition according to the third embodiment. The aspect of the molded resin object is the same as the description of [4. Molded resin object] in the first embodiment.
Hereinafter, the present invention will be described in more detail with reference to Examples and Comparative Examples, but the present invention is not limited to these examples. Unless otherwise specified, "%" and "ppm" in Examples and Comparative Examples mean "% by mass" and "ppm by mass". In addition, "parts" indicates "parts by mass". In addition, components B1 to B3 may be collectively referred to as "component B", and XB1, XB2, and XB3 may be collectively referred to as "XB".

<<Test for first embodiment>>

[Name of compound]

Names of compounds used in Examples and Comparative Examples are as follows.

· Methyl isovalerate (manufactured by Tokyo Chemical Industry Co., Ltd.)
· Isobutyl isobutyrate (manufactured by Tokyo Chemical Industry Co., Ltd.)
· Isoamyl isobutyrate (manufactured by Tokyo Chemical Industry Co., Ltd.)

[Analysis of monomer composition]

A contained amount of each constituent component of monomer compositions produced in Examples and Comparative Examples was calculated from an addition amount of each raw material. In addition, in the evaluation of quality stability described later, a MMA dimer and methyl pyruvate in the monomer composition after storage were quantified by an absolute calibration curve method using GC-MS. Measurement conditions of GC-MS were as follows.

<GC-MS measurement conditions>

Device: GC-MS measuring device (product name: QP-2010SE, manufactured by Shimadzu Corporation)
Carrier gas: helium
Ionization method: electron ionization (EI) method
Column: DB-WAX 60 m × 320 μm × 1.0 μm (manufactured by Agilent)
Temperature rising conditions: held at 35°C for 10 minutes, raised from 35°C to 150°C at 5 °C/min, held at 150°C for 17 minutes, raised from 150°C to 220°C at 5 °C/min, and held at 220°C for 6 minutes
Injection port temperature: 210°C
Interface temperature: 250°C
Ion source temperature: 250°C
Injection mode: split
Split ratio: 50:1
Flow rate: 0.97 mL/min
Total flow rate: 52.5 mL/min
Purge flow rate: 3.0 mL/min
Control mode: constant linear velocity
Pressure: 26.1 KPa
Average linear velocity: 25.0 cm/sec
Injection volume: 1 μL
Measurement mode: scan mode; m/z detection range: 10 to 300
Detection time: 70 minutes

[Evaluation of quality stability of monomer composition]

The quality stability of the monomer compositions produced in Examples and Comparative Examples during storage was evaluated by the amount of MMA dimer and methyl pyruvate produced when the monomer composition was stored at 25°C for 14 days.

[Analysis of methacrylic resin composition]

Concentrations of constituent components of methacrylic resin compositions produced in Examples and Comparative Examples were calculated as follows. The obtained methacrylic resin composition was finely crushed, and 0.2 g of the crushed methacrylic resin composition was dissolved in 10 mL of acetone. Next, 1 mL of an internal standard solution was added to the obtained solution using a hole pipette. A 0.1% by volume of methyl salicylate/acetone solution was used as the internal standard solution. A standard reagent of the target was diluted with acetone to prepare three kinds of test solutions having different concentrations, and the internal standard solution was added thereto to create a three-point calibration curve by GC-MS measurement. With this, the concentration of each component in the methacrylic resin composition was quantified. Measurement conditions of GC-MS were as follows.

<GC-MS measurement conditions>

Device: GC HP6890/MS HP5973 (manufactured by Agilent)
Ionization method: electron ionization (EI) method
Column: DB-WAX 60 m × 250 μm × 0.5 μm (manufactured by Agilent)
Temperature rise condition: 70°C (5 min) → 200°C (5 min); Rate = 10 °C/min
Injection port temperature: 220°C

AUX temperature: 230°C
Ion source temperature: 230°C
Split ratio: 10:1
Flow rate: 2.0 mL/min
Average linear velocity: 37 cm/sec
Injection volume: 1 μL
Measurement mode: SIM

[Evaluation of heat resistance of methacrylic resin composition]

As an index of heat resistance of the methacrylic resin compositions produced in Examples and Comparative Examples, a load deflection temperature (hereinafter, also referred to as "HDT") was used. The HDT was measured for a test piece (length: 120 mm × width: 12.7 mm × thickness: 3 mm) of the methacrylic resin composition in accordance with JIS K 7191.

[Measurement of HAZE]

HAZE of the methacrylic resin composition was measured in accordance with JIS K 7136 using a haze meter (manufactured by NIPPON DENSHOKU INDUSTRIES Co., Ltd., model name: NDH4000). A test piece (square shape of 50 mm in length × 50 mm in width, 3 mm in thickness) formed of the methacrylic resin composition was used for the measurement.

[Measurement of yellow index (YI)]

A yellow index (YI) of the methacrylic resin composition was measured in accordance with ASTM D 1925 using a spectroscopic colorimeter (manufactured by NIPPON DENSHOKU INDUSTRIES Co., Ltd., model name: SE-7700). A test piece (square shape of 50 mm in length × 50 mm in width, 3 mm in thickness) formed of the methacrylic resin composition was used for the measurement.

[Evaluation of light stability of methacrylic resin composition]

A change (ΔTt) in total light transmittance before and after a light exposure test was used as an index of light stability of the methacrylic resin compositions produced in Examples and Comparative Examples.

<Light stability test>

The light stability test was performed using a metal weather ultra-accelerated light stability tester (manufactured by DAIPLA WINTES CO., LTD., model name: DW-R8PL-A) equipped with a metal halide lamp (manufactured by DAIPLA WINTES CO., LTD., model: MW-60W) and a light cut filter (manufactured by DAIPLA WINTES CO., LTD., model: KF-1). Specifically, a test piece (square shape of 50 mm in length × 50 mm in width, 3 mm in thickness) containing the methacrylic resin composition was installed in an evaluation room of the metal weather ultra-accelerated light stability tester, and the test piece was irradiated with light from the metal halide lamp for 300 hours. An irradiation intensity of UV was corrected such that the irradiation intensity at a wavelength of 300 to 400 nm measured with an ultraviolet illuminance meter (manufactured by Ushio Inc., model name: UVP-365-03) was 130 $mW/cm^2$. The test piece was irradiated with visible light and UV rays from the metal halide lamp. The evaluation room of the metal weather ultra-accelerated light stability tester was set to an environment of a temperature of 63°C and a humidity of 50 RH%.

<Measurement of total light transmittance (Tt)>

The total light transmittance (Tt) of the methacrylic resin composition was measured in accordance with JIS K 7361-1 using a haze meter (manufactured by NIPPON DENSHOKU INDUSTRIES Co., Ltd., model name: NDH4000). A test piece (square shape of 50 mm in length × 50 mm in width, 3 mm in thickness) formed of the methacrylic resin composition was used for the measurement. One piece of the test piece before the light stability test and one piece of the test piece after the light exposure test were measured once, and a change in measured value before and after the light stability test was defined as a change in the total light transmittance (ΔTt).

[Example A1-1]

Isobutyl isobutyrate was used as component A1, and 0.0400 g of component A1 was added to 39.96 g of a reagent of MMA (moisture concentration: 240 ppm) to prepare an MMA solution (A-1 solution). A concentration of component A1 in the A-1 solution is shown in Table 1.
Next, 0.2000 g of the A-1 solution was added to 19.80 g of a reagent of MMA (moisture concentration: 240 ppm) to prepare a monomer composition. A concentration of each component in the monomer composition is shown in Table 2.
The obtained monomer composition was stored at 25°C for 14 days. Table 2 shows the amounts of MMA dimer and methyl pyruvate generated in the monomer composition after the storage.

[Example A1-2]

An A-1 solution was prepared by the same method as in Example A1-1.
Next, a monomer composition was prepared in the same manner as in Example A1-1, except that the amounts of the reagent of MMA and the A-1 solution were changed as shown in Table 2. A concentration of each component in the monomer composition is shown in Table 2.
The obtained monomer composition was stored in the same manner as in Example A1-1. Table 2 shows the amounts of MMA dimer and methyl pyruvate generated in the monomer composition after the storage.

[Example A1-3]

Isobutyl isobutyrate was used as component A1, and 0.0400 g of component A1 was added to 39.96 g of a reagent of MMA (moisture concentration: 240 ppm) to prepare a monomer composition. A concentration of each component in the monomer composition is shown in Table 2.
The obtained monomer composition was stored in the same manner as in Example A1-1. Table 2 shows the amounts of MMA dimer and methyl pyruvate generated in the monomer composition after the storage.

[Example A1-4]

A monomer composition was prepared in the same manner as in Example A1-3, except that the amounts of the reagent of MMA and component A1 were changed as shown in Table 2. A concentration of each component in the monomer composition is shown in Table 2.
The obtained monomer composition was stored in the same manner as in Example A1-1. Table 2 shows the amounts of MMA dimer and methyl pyruvate generated in the monomer composition after the storage.

[Examples A1-5 and A1-6]

An A-1 solution was prepared in the same manner as in Example A1-1, except that a compound shown in Table 1 was used as component A1 and amounts of the reagent of MMA and component A1 were changed as shown in Table 1.
Next, a monomer composition was prepared in the same manner as in Example A1-1, except that the amounts of the reagent of MMA and the A-1 solution were changed as shown in Table 2. A concentration of each component in the monomer composition is shown in Table 2.
The obtained monomer composition was stored in the same manner as in Example A1-1. Table 2 shows the amounts of MMA dimer and methyl pyruvate generated in the monomer composition after the storage.

[Examples A1-7 and A1-8]

A monomer composition was prepared in the same manner as in Example A1-3, except that a compound shown in Table 2 was used as component A1 and amounts of the reagent of MMA and component A1 were changed as shown in Table 2. A concentration of each component in the monomer composition is shown in Table 2.
The obtained monomer composition was stored in the same manner as in Example A1-1. Table 2 shows the amounts of MMA dimer and methyl pyruvate generated in the monomer composition after the storage.

[Example A1-9]

Isobutyl isobutyrate was used as component A1, and 0.0210 g of component A1 was added to 10.00 g of a reagent of MMA (moisture concentration: 240 ppm) to prepare an MMA solution (A-1 solution). A concentration of component A1 in the A-1 solution is shown in Table 1.

2,4-Dimethyl-6-t-butylphenol was used as a component B, 0.0228 g of component B was added to 10.00 g of a reagent of MMA (moisture concentration: 240 ppm) to prepare an MMA solution (B-1 solution). A concentration of component B in the B-1 solution is shown in Table 1.

Next, 0.2019 g of the A-1 solution and 0.1993 g of the B-1 solution were added to 40.02 g of a reagent of MMA (moisture concentration: 240 ppm) to prepare a monomer composition. A concentration of each component in the monomer composition is shown in Table 2.

The obtained monomer composition was stored in the same manner as in Example A1-1. Table 2 shows the amounts of MMA dimer and methyl pyruvate generated in the monomer composition after the storage.

[Example A1-10]

An A-1 solution was prepared in the same manner as in Example A1-9, except that a compound shown in Table 1 was used as component A1 and amounts of the reagent of MMA and component A1 were changed as shown in Table 1.

A B-1 solution was prepared by the same method as in Example A1-9.

Next, a monomer composition was prepared in the same manner as in Example A1-9, except that the amounts of the reagent of MMA, the A-1 solution, and the B-1 solution were changed as shown in Table 2. A concentration of each component in the monomer composition is shown in Table 2.

The obtained monomer composition was stored in the same manner as in Example A1-1. Table 2 shows the amounts of MMA dimer and methyl pyruvate generated in the monomer composition after the storage.

[Comparative Example A1-1]

40.00 g of a reagent of MMA (moisture concentration: 240 ppm) was used as a monomer composition and stored in the same manner as in Example A1-1. Table 2 shows the amounts of MMA dimer and methyl pyruvate generated in the monomer composition after the storage.

[Comparative Example A1-2]

Methyl isobutyrate was used as component A1, and 0.0293 g of component A1 was added to 10.08 g of a reagent of MMA (moisture concentration: 240 ppm) to prepare an MMA solution (A-1 solution). A concentration of component A1 in the A-1 solution is shown in Table 1.

Next, 0.2123 g of the A-1 solution was added to 40.06 g of a reagent of MMA (moisture concentration: 240 ppm) to prepare a monomer composition. A concentration of each component in the monomer composition is shown in Table 2.

The obtained monomer composition was stored in the same manner as in Example A1-1. Table 2 shows the amounts of MMA dimer and methyl pyruvate generated in the monomer composition after the storage.

[Comparative Example A1-3]

A B-1 solution was prepared by the same method as in Example A1-13.

Next, 0.2213 g of the B-1 solution was added to 40.03 g of a reagent of MMA (moisture concentration: 240 ppm) to prepare a monomer composition. A concentration of each component in the monomer composition is shown in Table 2.

The obtained monomer composition was stored in the same manner as in Example A1-1. Table 2 shows the amounts of MMA dimer and methyl pyruvate generated in the monomer composition after the storage.

[Table 1]

| | A-1 solution | | | | B-1 solution | | | |
|---|---|---|---|---|---|---|---|---|
| | Addition amount of reagent of MMA [g] | Component A1 | | | Addition amount of reagent of MMA [g] | Component B | | |
| | | Compound name | Addition amount [g] | Concentration [ppm by mass] | | Compound name | Addition amount [g] | Concentration [ppm by mass] |
| Example A1-1 | 39.96 | Isobutyl isobutyrate | 0.0400 | 1000 | - | - | - | - |
| Example A1-2 | 39.96 | Isobutyl isobutyrate | 0.0400 | 1000 | - | - | - | - |
| Example A1-3 | - | - | - | - | - | - | - | - |
| Example A1-4 | - | - | - | - | - | - | - | - |
| Example A1-5 | 39.96 | Isobutyl isobutyrate | 0.0400 | 1000 | - | - | - | - |
| Example A1-6 | 39.96 | Isobutyl isobutyrate | 0.0400 | 1000 | - | - | - | - |
| Example A1-7 | - | - | - | - | - | - | - | - |
| Example A1-8 | - | - | - | - | - | - | - | - |
| Example A1-9 | 10.00 | Isobutyl isobutyrate | 0.0210 | 2096 | 10.00 | 2,4-Dimethyl-6-t-butylphenol | 0.0228 | 2274 |
| Example A1-10 | 10.18 | Isoamyl isobutyrate | 0.0227 | 2226 | 1000 | 2,4-Dimethyl-6-t-butylphenol | 0.0228 | 2274 |
| Comparative Example A1-1 | - | - | - | - | - | - | - | - |
| Comparative Example A1-2 | 10.08 | Methyl isobutyrate | 0.0293 | 2898 | - | - | - | - |
| Comparative Example A1-3 | - | - | - | - | 1000 | 2,4-Dimethyl-6-t-butylphenol | 0.0228 | 2274 |

[Table 2]

| | Addition amount [g] | | | | | Monomer composition | | | | | | Generated amount of MMA dimer [ppm] | Generated amount of methyl pyruvate [ppm] |
|---|---|---|---|---|---|---|---|---|---|---|---|---|---|
| | | | | | | MMA | Component A1 | | Component B | | XB/XAI | | |
| | Reagent of MMA | A-1 solution | B-1 solution | C-1 solution | Component A1 | Concentration XM [% by mass] | Compound name | Concentration XA1 [ppm by mass] | Compound name | Concentration XB [ppm by mass] | | | |
| Example A1-1 | 19.80 | 0.2000 | | | | 99.98 | Isobutyl isobutyrate | 10 | | | | 8 | 3 |
| Example A1-2 | 18.00 | 2.0000 | | | | 99.97 | Isobutyl isobutyrate | 100 | | | | 8 | 1 |
| Example A1-3 | 39.96 | | | | 0.0400 | 99.88 | Isobutyl isobutyrate | 1000 | | | | 10 | 4 |
| Example A1-4 | 19.80 | | | | 0.2000 | 98.98 | Isobutyl isobutyrate | 10000 | | | | 4 | 6 |
| Example A1-5 | 19.80 | 0.2000 | | | | 99.98 | Isoamyl isobutyrate | 10 | | | | 7 | 9 |
| Example A1-6 | 18.00 | 2.0000 | | | | 99.97 | Isoamyl isobutyrate | 100 | | | | 10 | 8 |
| Example A1-7 | 39.96 | | | | 1.0400 | 99.88 | Isoamyl isobutyrate | 1000 | | | | 19 | 15 |
| Example A1-8 | 19.80 | | | | 1.2000 | 98.98 | Isoamyl isobutyrate | 10000 | | | | 13 | 3 |
| Example A1-9 | 10.02 | 0.2019 | 0.1993 | | | 99.97 | Isobutyl isobutyrate | 10 | 2,4-Dimethyl-6-t-butylphenol | 11 | 1.071 | 13 | 6 |
| Example A1-10 | 40.13 | 0.2061 | 0.2052 | | | 99.97 | Isoamyl isobutyrate | 11 | 2,4-Dimethyl-6-t-butylphenol | 12 | 1.017 | 14 | 7 |
| Comparative Example A1-1 | 40.00 | | | 0.2123 | | 99.98 | | | | | | 26 | 19 |
| Comparative Example A1-2 | 40.06 | 0.2123 | | | | 99.97 | Methyl iso-butyrate | 15 | | | | 0 | 32 |

(continued)

| | Addition amount [g] | | | | | Monomer composition | | | | | | Generated amount of MMA dimer [ppm] | Generated amount of methyl pyruvate [ppm] |
|---|---|---|---|---|---|---|---|---|---|---|---|---|---|
| | | | | | | MMA | Component A1 | | Component B | | XB/XAI | | |
| | Reagent of MMA | A-1 solution | B-1 solution | C-1 solution | Component A1 | Concentration XM [% by mass] | Compound name | Concentration XA1 [ppm by mass] | Compound name | Concentration XB [ppm by mass] | | | |
| Comparative Example A1-3 | 40.03 | | 0.2213 | | | 99.97 | | | 2,4-Dimethyl-6-t-butylphenol | 13 | | 29 | 2 |

As shown in Table 2, in Examples A1-1 to A1-15 in which the monomer composition contained the defined component A1, both the MMA dimer and methyl pyruvate were suppressed from being generated in the monomer composition after the storage, and it can be said that the quality stability during the storage was high.

[Example A2-1]

100 parts of MMA was supplied to a reaction vessel (a polymerization tank) equipped with a cooling tube, a thermometer, and a stirrer, bubbling was carried out with nitrogen gas while carrying out stirring, and heating was started. At the time when the internal temperature of the reaction vessel reached 80°C, 0.12 parts of 2,2'-azobis(2,4-dimethylvaleronitrile) was added thereto as a radical polymerization initiator, and the resultant mixture was further heated until the internal temperature of the reaction vessel reached 100°C and held for 9 minutes. Next, the internal temperature of the reaction vessel was lowered to room temperature to obtain a syrup. A concentration of the polymer in the syrup was 20% by mass with respect to the total mass of the syrup.

Methyl isovalerate was used as component A1, and 0.01 parts of component A1 and 0.3 parts of t-hexyl peroxypivalate as a radical polymerization initiator were added to 100 parts of the obtained syrup to obtain a polymerizable composition. Concentrations of MMA and component A1 in the above-described polymerizable composition are shown in Table 3.

The obtained polymerizable composition was poured into a space with a gap interval of 4.1 mm, which was provided by arranging a soft resin gasket at the end of SUS plates between two SUS plates facing each other, and heated at 80°C for 45 minutes and then at 130°C for 30 minutes to cure the polymerizable composition, thereby obtaining a methacrylic resin composition.

Next, the obtained methacrylic resin composition was cooled together with the SUS plates, and then the SUS plates were removed to obtain a plate-like molded resin object having a thickness of 3 mm. The molded resin object is a molded object consisting of only the methacrylic resin composition, and corresponds to both the methacrylic resin composition and the molded resin object. Table 3 shows evaluation results of characteristics of the obtained molded resin object. In Table 3, "-" means that component A was not added.

[Examples A2-2 and A2-3]

A polymerizable composition was obtained by the same method as in Example A2-1, except that the addition amount of component A1 was changed as shown in Table 1. The concentrations of MMA and component A in the above-described polymerizable composition are shown in Table 3.

A methacrylic resin composition and a molded resin object were produced by the same methods as in Example A2-1, using the obtained polymerizable composition. The evaluation results of the above-described molded resin object are shown in Table 3.

[Examples A2-4 to A2-11]

A polymerizable composition was obtained by the same method as in Example A2-1, except that a compound shown in Table 1 was used as component A1 and the addition amount of component A1 was changed as shown in Table 1. Concentrations of MMA and component A1 in the above-described polymerizable composition are shown in Table 3.

A methacrylic resin composition and a molded resin object were produced by the same methods as in Example A2-1, using the obtained polymerizable composition. The evaluation results of the above-described molded resin object are shown in Table 3.

[Comparative Example A2-1]

A polymerizable composition was obtained by the same method as in Example A2-1, except that component A1 was not used. The concentration of MMA in the above-described polymerizable composition is shown in Table 3.

A methacrylic resin composition and a molded resin object were produced by the same methods as in Example A2-1, using the obtained polymerizable composition. The evaluation results of the above-described molded resin object are shown in Table 3.

[Table 3]

| | Component A | Polymerizable composition | | | | Methacrylic resin composition (molded resin object) | | | | | | Evaluation result of light stability |
|---|---|---|---|---|---|---|---|---|---|---|---|---|
| | Compound name | Addition amount [part/100 parts of syrup] | | Coneantration of MMA [% by mass] | Concentration of component A1 [ppm by mass] | Concentrtion of MMA [% by mass] | Concentration of component A1 [ppm by mass] | Total light transmittance Tt [%] | HAZE [%] | YI (3 mm thickness in plate thickness direction) | HDT [°C] | ΔTt [%] |
| | | Component A1 | Polymerization initiator | | | | | | | | | |
| Example A2-1 | Methyl isovalerate | 0.01 | 0.3 | 99.57 | 100 | 98.35 | 99 | 92.42 | 1.30 | 0.28 | 103.60 | -1.03 |
| Example A2-2 | Methyl isovalerate | 0.1 | 0.3 | 99.48 | 996 | 98.47 | 998 | )2.46 | 0.13 | 0.23 | 103.25 | -0.88 |
| Example A2-3 | Methyl isovalerate | 1 | 0.3 | 98.60 | 9872 | 97.78 | 9951 | 92.54 | 0.06 | 0.22 | 100.90 | -0.64 |
| Example A2-4 | Butyl isobutyrate | 0.001 | 0.3 | 99.58 | 10 | 98.35 | 10 | )2.62 | 1.07 | 0.19 | 103.20 | -1.12 |
| Example A2-5 | Butyl isobutyrate | 0.01 | 0.3 | 99.57 | 100 | 98.54 | 92 | 92.50 | 0.11 | 0.21 | 103.15 | -1.03 |
| Example A2-6 | Butyl isobutyrate | 0.1 | 0.3 | 99.48 | 996 | 98.38 | 1001 | 92.52 | 0.06 | 0.22 | 103.10 | -0.99 |
| Example A2-7 | Butyl isobutyrate | 1 | 0.3 | 98.60 | 9872 | 97.86 | 10159 | 92.55 | 0.15 | 0.18 | 101.35 | -0.59 |
| Example A2-8 | Isoamyl isobutyrate | 0.001 | 0.3 | 99.58 | 10 | 98.70 | 12 | 92.35 | 1.10 | 0.27 | 103.60 | -0.87 |
| Example A2-9 | Isoamyl isobutyrate | 0.01 | 0.3 | 99.57 | 100 | 98.56 | 104 | 92.46 | 0.07 | 0.30 | 103.65 | -1.00 |
| Example A2-10 | Isoamyl isobutyrate | 0.1 | 0.3 | 99.48 | 996 | 98.47 | 1048 | 92.53 | 0.06 | 0.23 | 103.70 | -1.04 |
| Example A2-11 | Isoamyl isobutyrate | 1 | 0.3 | 98.60 | 9872 | 97.72 | 10388 | )2.49 | 0.05 | 0.23 | 101.40 | -0.62 |
| Comparative Example A2-1 | - | - | 0.3 | 99.58 | - | 98.44 | - | 92.81 | 0.19 | 0.04 | 103.70 | -1.84 |

As shown in Table 3, the methacrylic resin compositions containing the specific amount of component A1, produced in Examples A2-1 to A2-11, exhibited excellent light stability as compared with Comparative Example A2-1, while maintaining transparency and heat resistance. It was found that, as the value of ΔTt was higher, the light stability of the total light transmittance was better. The methacrylic resin composition could also be produced by polymerizing a polymerizable composition containing the monomer compositions obtained in Examples A1-1 to A1-10.

<<Test for second embodiment>>

[Name of compound]

Names of compounds used in Examples and Comparative Examples are as follows.

- Methyl crotonate (manufactured by Tokyo Chemical Industry Co., Ltd.)
- Isoprenyl methyl ketone (manufactured by Tokyo Chemical Industry Co., Ltd.)
- Methyl 3,3-dimethylacrylate (manufactured by Tokyo Chemical Industry Co., Ltd.)
- Methacrylamide (manufactured by Tokyo Chemical Industry Co., Ltd.)

Methods for analyzing the monomer composition, evaluating the quality stability of the monomer composition, analyzing the methacrylic resin composition, evaluating the heat resistance of the methacrylic resin composition, measuring the HAZE and the yellow index (YI), evaluating the light stability of the methacrylic resin composition, performing the light stability test, and measuring the total light transmittance (Tt) are the same as those in the tests according to the first embodiment.

[Example B1-1]

Methyl crotonate was used as a component A2, and 0.0400 g of component A2 was added to 39.96 g of a reagent of MMA (moisture concentration: 240 ppm) to prepare an MMA solution (A-1 solution). A concentration of component A2 in the A-1 solution is shown in Table 4.

Next, 0.2000 g of the A-1 solution was added to 19.80 g of a reagent of MMA (moisture concentration: 240 ppm) to prepare a monomer composition. A concentration of each component in the monomer composition is shown in Table 5.

The obtained monomer composition was stored at 25°C for 14 days. Table 5 shows the amounts of MMA dimer and methyl pyruvate generated in the monomer composition after the storage.

[Example B1-2]

An A-1 solution was prepared by the same method as in Example B1-1.

Next, a monomer composition was prepared in the same manner as in Example B1-1, except that the amounts of the reagent of MMA and the A-1 solution were changed as shown in Table 5. A concentration of each component in the monomer composition is shown in Table 5.

The obtained monomer composition was stored in the same manner as in Example B1-1. Table 5 shows the amounts of MMA dimer and methyl pyruvate generated in the monomer composition after the storage.

[Example B1-3]

Methyl crotonate was used as a component A2, and 0.0400 g of component A2 was added to 39.96 g of a reagent of MMA (moisture concentration: 240 ppm) to prepare a monomer composition. A concentration of each component in the monomer composition is shown in Table 5.

The obtained monomer composition was stored in the same manner as in Example B1-1. Table 5 shows the amounts of MMA dimer and methyl pyruvate generated in the monomer composition after the storage.

[Example B1-4]

A monomer composition was prepared in the same manner as in Example B1-3, except that the amounts of the reagent of MMA and component A2 were changed as shown in Table 5. A concentration of each component in the monomer composition is shown in Table 5.

The obtained monomer composition was stored in the same manner as in Example B1-1. Table 5 shows the amounts of MMA dimer and methyl pyruvate generated in the monomer composition after the storage.

[Examples B1-5, B1-6, B1-9, B1-10, and B1-13]

An A-1 solution was prepared in the same manner as in Example B1-1, except that a compound shown in Table 4 was used as component A2 and amounts of the reagent of MMA and component A2 were changed as shown in Table 4.
Next, a monomer composition was prepared in the same manner as in Example B1-1, except that the amounts of the reagent of MMA and the A-1 solution were changed as shown in Table 5. A concentration of each component in the monomer composition is shown in Table 5.
The obtained monomer composition was stored in the same manner as in Example B1-1. Table 5 shows the amounts of MMA dimer and methyl pyruvate generated in the monomer composition after the storage.

[Examples B1-7, B1-8, B1-11, and B1-12]

A monomer composition was prepared in the same manner as in Example B1-3, except that a compound shown in Table 5 was used as component A2 and amounts of the reagent of MMA and component A2 were changed as shown in Table 5. A concentration of each component in the monomer composition is shown in Table 5.
The obtained monomer composition was stored in the same manner as in Example B1-1. Table 2 shows the amounts of MMA dimer and methyl pyruvate generated in the monomer composition after the storage.

[Example B1-14]

Methyl crotonate was used as a component A2, and 0.0207 g of component A2 was added to 10.02 g of a reagent of MMA (moisture concentration: 240 ppm) to prepare an MMA solution (A-1 solution). A concentration of component A2 in the A-1 solution is shown in Table 4.
2,4-Dimethyl-6-t-butylphenol was used as a component B, 0.0228 g of component B was added to 10.00 g of a reagent of MMA (moisture concentration: 240 ppm) to prepare an MMA solution (B-1 solution). A concentration of component B in the B-1 solution is shown in Table 4.
Next, 0.1050 g of the A-1 solution and 0.1031 g of the B-1 solution were added to 20.00 g of a reagent of MMA (moisture concentration: 240 ppm) to prepare a monomer composition. A concentration of each component in the monomer composition is shown in Table 5.
The obtained monomer composition was stored in the same manner as in Example B1-1. Table 5 shows the amounts of MMA dimer and methyl pyruvate generated in the monomer composition after the storage.

[Examples B1-15 and B1-16]

An A-1 solution was prepared in the same manner as in Example B1-14, except that a compound shown in Table 4 was used as component A2 and amounts of the reagent of MMA and component A2 were changed as shown in Table 4.
Next, a monomer composition was prepared by the same method as in Example B1-14, except that the amounts of the reagent of MMA and component B were changed as shown in Table 4.
Next, a monomer composition was prepared in the same manner as in Example B1-14, except that the amounts of the reagent of MMA, the A-1 solution, and the B-1 solution were changed as shown in Table 5. A concentration of each component in the monomer composition is shown in Table 5.
The obtained monomer composition was stored in the same manner as in Example B1-1. Table 5 shows the amounts of MMA dimer and methyl pyruvate generated in the monomer composition after the storage.

[Comparative Example B1-1]

40.00 g of a reagent of MMA (moisture concentration: 240 ppm) was used as a monomer composition and stored in the same manner as in Example B1-1. Table 5 shows the amounts of MMA dimer and methyl pyruvate generated in the monomer composition after the storage.

[Comparative Example B1-2]

A B-1 solution was prepared by the same method as in Example B1-14.
Next, 0.2213 g of the B-1 solution was added to 40.03 g of a reagent of MMA (moisture concentration: 240 ppm) to prepare a monomer composition. A concentration of each component in the monomer composition is shown in Table 5.
The obtained monomer composition was stored in the same manner as in Example B1-1. Table 5 shows the amounts of MMA dimer and methyl pyruvate generated in the monomer composition after the storage.

[Table 4]

| | A-1 solution | | | | B-1 solution | | | |
|---|---|---|---|---|---|---|---|---|
| | Addition amount of reagent of MMA [g] | Component A1 | | | Addition amount of reagent of MMA [g] | Component B | | |
| | | Compound name | Addition amount [g] | Concentration [ppm by mass ] | | Compound name | Addition amount [g] | Concentration [ppm by mass ] |
| Example B1-1 | 39.96 | Methyl crotonate | 0.0400 | 1000 | - | - | - | - |
| Example B1-2 | 39.96 | Methyl crotonate | 0.0400 | 1000 | - | - | - | - |
| Example B1-3 | - | - | - | - | - | - | - | - |
| Example B1-4 | | - | - | - | - | - | - | - |
| Example B1-5 | 39.96 | Isoprenyl methyl ketone | 0.0400 | 1000 | - | - | - | - |
| Example B1-6 | 39.96 | Isoprenyl methyl ketone | 0.0400 | 1000 | - | - | - | - |
| Example B1-7 | | | | | | | | |
| Example BI-8 | | - | - | - | - | - | - | - |
| Example B1-9 | 39.96 | Methyl 3,3-dimethylacrylate | 0.0400 | 1000 | - | - | - | - |
| Example B1-10 | 39.96 | Methyl 3,3-dimethylacrylate | 0.0400 | 1000 | - | - | - | - |
| Example B1-11 | | | | | | | | |
| Example B1-12 | | - | - | - | - | - | - | - |
| Example B1-13 | 10.02 | Isoprenyl methyl ketone | 0.0243 | 2419 | - | - | - | - |
| Example B1-14 | 10.02 | Methyl crotonate | 0.0207 | 2063 | 10.00 | 2,4-Dimethyl-6-t-butylphenol | 0.0228 | 2274 |
| Example B1-15 | 10.02 | Isoprenyl methyl ketone | 0.0243 | 2419 | 10.00 | 2,4-Dimethyl-6-t-butylphenol | 0.0228 | 2274 |
| Example B1-16 | 10.01 | Methyl 3,3-dimethylacrylate | 0.0201 | 2003 | 10.00 | 2,4-Dimethyl-6-t-butylphenol | 0.0228 | 2274 |
| Comparative Example B1-1 | - | - | - | - | - | - | - | - |

(continued)

| | A-1 solution | | | | B-1 solution | | | |
|---|---|---|---|---|---|---|---|---|
| | Addition amount of reagent of MMA [g] | Component A1 | | | Addition amount of reagent of MMA [g] | Component B | | |
| | | Compound name | Addition amount [g] | Concentration [ppm by mass ] | | Compound name | Addition amount [g] | Concentration [ppm by mass ] |
| Comparative Example B1-2 | - | - | - | - | 10.00 | 2,4-Dimethyl-6-t-butylphenol | 0.0228 | 2274 |

[Table 5]

| | Addition amount [g] | | | | | Monomer composition | | | | | | Generated amount of MMA dimer [ppm] | Generated amount of methyl pyruvate [ppm] |
|---|---|---|---|---|---|---|---|---|---|---|---|---|---|
| | | | | | | MMA | Component A2 | | Component B | | XB/XA2 | | |
| | Reagent of MMA | A-1 solution | B-1 solution | C-1 solution | Component A2 | Concentration XM [% by mass] | Compound name | Concentration XA2 [ppm by mass] | Compound name | Concentration XB [ppm by mass] | | | |
| Example B1-1 | 19.80 | 0.2000 | - | - | - | 99.98 | Methyl crotonate | 10 | - | - | - | 14 | 8 |
| Example B1-2 | 18.00 | 2.0000 | - | - | - | 99.97 | Methyl crotonate | 100 | - | - | - | 21 | 11 |
| Example B1-3 | 39.96 | - | - | - | 0.0400 | 99.88 | Methyl crotonate | 1000 | - | - | - | 20 | 15 |
| Example B1-4 | 19.8 | - | - | - | 0.2 | 98.98 | Methyl crotonate | 10000 | - | - | - | 20 | 19 |
| Example B1-5 | 19.80 | 1.2000 | - | - | - | 99.98 | Isoprenyl methyl ketone | 10 | - | - | - | 19 | 11 |
| Example B1-6 | 18.00 | 2.0000 | - | - | - | 99.97 | Isoprenyl methyl ketone | 100 | - | - | - | 10 | 10 |
| Example B1-7 | 39.96 | - | - | - | 0.0400 | 99.88 | Isoprenyl methyl ketone | 1000 | - | - | - | 18 | 5 |
| Example B1-8 | 19.80 | - | - | - | 0.2000 | 98.98 | Isoprenyl methyl ketone | 10000 | - | - | - | 14 | 5 |
| Example B1-9 | 19.80 | 1.2000 | - | - | - | 99.98 | Methyl 3,3-dimethylacrylate | 10 | - | - | - | 21 | 16 |
| Example B1-10 | 18.00 | 2.0000 | - | - | - | 99.97 | Methyl 3,3-dimethylacrylate | 100 | - | - | - | 19 | 17 |
| Example B1-11 | 39.96 | - | - | - | 0.0400 | 99.88 | Methyl 3,3-dimethylacrylate | 1000 | - | - | - | 11 | 20 |
| Example B1-12 | 19.80 | - | - | - | 0.2000 | 98.98 | Methyl 3,3-dimethylacrylate | 10000 | - | - | - | 15 | 79 |
| Example B1-13 | 40.01 | 0.2027 | - | - | - | 99.97 | Isoprenyl methyl ketone | 12 | - | - | - | 14 | 8 |

(continued)

| | Addition amount [g] | | | | | Monomer composition | | | | | | Generated amount of MMA dimer [ppm] | Generated amount of methyl pyruvate [ppm] |
|---|---|---|---|---|---|---|---|---|---|---|---|---|---|
| | | | | | | MMA | Component A2 | | Component B | | XB/XA2 | | |
| | Reagent of MMA | A-1 solution | B-1 solution | C-1 solution | Component A2 | Concentration XM [% by mass] | Compound name | Concentration XA2 [ppm by mass] | Compound name | Concentration XB [ppm by mass] | | | |
| Example B1-14 | 20.00 | 1.1050 | 0.1031 | - | - | 99.97 | Methyl crotonate | 11 | 2,4-Dimethyl-6-t-butylphenol | 12 | 1.083 | 20 | 2 |
| Example B1-15 | 20.00 | 0.1058 | 0.1001 | - | - | 99.97 | Isoprenyl methyl ketone | 13 | 2,4-Dimethyl-6-t-butylphenol | 11 | 0.889 | 22 | 4 |
| Example B1-16 | 20.05 | 0.1023 | 0.1014 | - | - | 99.97 | Methyl 3,3-di-methylacrylate | 10 | 2,4-Di-methyl-6-t-butylphenol | 11 | 1.125 | 14 | 5 |
| Comparative Example B1-1 | 40.00 | - | - | - | - | 99.98 | - | - | - | - | - | 26 | 19 |
| Comparative Example B1-2 | 40.03 | - | 0.2213 | - | - | 99.97 | - | - | 2,4-Dimethyl-6-t-butylphenol | 13 | - | 29 | 2 |

As shown in Table 5, in Examples B1-1 to B1-16 in which the monomer composition contained the defined component A2, both the MMA dimer and methyl pyruvate were suppressed from being generated in the monomer composition after the storage, and it can be said that the quality stability during the storage was high.

[Example B2-1]

100 parts of MMA was supplied to a reaction vessel (a polymerization tank) equipped with a cooling tube, a thermometer, and a stirrer, bubbling was carried out with nitrogen gas while carrying out stirring, and heating was started. At the time when the internal temperature of the reaction vessel reached 80°C, 0.12 parts of 2,2'-azobis(2,4-dimethylvaleronitrile) was added thereto as a radical polymerization initiator, and the resultant mixture was further heated until the internal temperature of the reaction vessel reached 100°C and held for 9 minutes. Next, the internal temperature of the reaction vessel was lowered to room temperature to obtain a syrup. A concentration of the polymer in the syrup was 20% by mass with respect to the total mass of the syrup.
Methyl crotonate was used as a component A2, and 0.001 parts of component A2 and 0.3 parts of t-hexyl peroxypivalate as a radical polymerization initiator were added to 100 parts of the obtained syrup to obtain a polymerizable composition. The concentrations of MMA and component A2 in the above-described polymerizable composition are shown in Table 6.
The obtained polymerizable composition was poured into a space with a gap interval of 4.1 mm, which was provided by arranging a soft resin gasket at the end of SUS plates between two SUS plates facing each other, and heated at 80°C for 45 minutes and then at 130°C for 30 minutes to cure the polymerizable composition, thereby obtaining a methacrylic resin composition.
Next, the obtained methacrylic resin composition was cooled together with the SUS plates, and then the SUS plates were removed to obtain a plate-like molded resin object having a thickness of 3 mm. The molded resin object is a molded object consisting of only the methacrylic resin composition, and corresponds to both the methacrylic resin composition and the molded resin object. Table 6 shows evaluation results of characteristics of the obtained molded resin object. In Table 6, "-" means that component A2 was not added.

[Examples B2-2 to B2-4]

A polymerizable composition was obtained by the same method as in Example B2-1, except that the addition amount of component A2 was changed as shown in Table 6. The concentrations of MMA and component A2 in the above-described polymerizable composition are shown in Table 6.
A methacrylic resin composition and a molded resin object were produced by the same methods as in Example B2-1, using the obtained polymerizable composition. The evaluation results of the above-described molded resin object are shown in Table 6.

[Examples B2-5 to B2-13]

A polymerizable composition was obtained by the same method as in Example B2-1, except that a compound shown in Table 6 was used as component A2 and the addition amount of component A2 was changed as shown in Table 6. The concentrations of MMA and component A2 in the above-described polymerizable composition are shown in Table 6.
A methacrylic resin composition and a molded resin object were produced by the same methods as in Example B2-1, using the obtained polymerizable composition. The evaluation results of the above-described molded resin object are shown in Table 6.

[Comparative Example B2-1]

A polymerizable composition was obtained by the same method as in Example B2-1, except that component A2 was not used. The concentration of MMA in the above-described polymerizable composition is shown in Table 6.
A methacrylic resin composition and a molded resin object were produced by the same methods as in Example B2-1, using the obtained polymerizable composition. The evaluation results of the above-described molded resin object are shown in Table 6.

[Table 6]

| | Component A | Polymerizable composition | | | | Methacrylic resin composition (molded resin object) | | | | | | Evaluation result of light stability |
|---|---|---|---|---|---|---|---|---|---|---|---|---|
| | Compound name | Addition amount [part/100 parts of syrup] | | Concentration of MMA [% by mass] | Concentration of component A2 [ppm by mass] | Concentration of MMA [% by mass] | Concentration of component A2 [ppm by mass] | Total light transmittance Tt [%] | HAZE [%] | YI (3 mm thickness in plate thickness direction) | HDT [°C] | ΔTt [%] |
| | | Component A2 | Polymerization initiator | | | | | | | | | |
| Example B2-1 | Methyl crotonate | 0.001 | 0.3 | 99.58 | 10 | 98.09 | 10 | 92.80 | 0.06 | 0.39 | 102.05 | -1.02 |
| Example B2-2 | Methyl crotonate | 0.01 | 0.3 | 99.57 | 100 | 98.26 | 100 | 92.40 | 0.04 | 0.25 | 102.80 | -1.15 |
| Example B2-3 | Methyl crotonate | 0.1 | 0.3 | 99.48 | 996 | 98.30 | 1030 | 92.50 | 0.16 | 0.31 | 103.10 | -1.05 |
| Example B2-4 | Methyl crotonate | 1 | 0.3 | 98.60 | 9872 | 97.67 | 9700 | 92.34 | 0.04 | 0.20 | 99.95 | -1.23 |
| Example B2-5 | Isoprenyl methyl ketone | 0.001 | 0.3 | 99.58 | 10 | 98.34 | 1 | 92.51 | 0.04 | 0.31 | 102.85 | -1.12 |
| Example B2-6 | Isoprenyl methyl ketone | 0.01 | 0.3 | 99.57 | 100 | 98.37 | 4 | 92.30 | 0.05 | 0.23 | 102.45 | -1.03 |
| Example B2-7 | Methyl 3.3-dimethylacrylate | 0.001 | 0.3 | 99.58 | 10 | 98.21 | 10 | 92.49 | 0.04 | 0.29 | 101.60 | -1.22 |
| Example B2-8 | Methyl 3.3-dimethylacrylate | 0.01 | 0.3 | 99.57 | 100 | 98.19 | 100 | 92.34 | 0.07 | 0.24 | 102.10 | -1.18 |
| Example B2-9 | Methyl 3.3-dimethylacrylate | 0.1 | 0.3 | 99.48 | 996 | 98.30 | 980 | 92.48 | 0.07 | 0.33 | 102.90 | -1.27 |
| Example B2-10 | Methyl 3.3-dimethylacrylate | 1 | 0.3 | 98.60 | 9872 | 97.30 | 10000 | 92.25 | 0.03 | 0.25 | 100.75 | -0.99 |
| Example B2-11 | Methacrylamide | 0.001 | 0.3 | 99.58 | 10 | 98.49 | 2 | 92.37 | 00.03 | 0.26 | 103.45 | -1.11 |
| Example B2-12 | Methacrylamide | 0.01 | 0.3 | 99.57 | 100 | 98.53 | 13 | 92.23 | 0.04 | 0.22 | 103.15 | -1.07 |

(continued)

| | Component A | Polymerizable composition | | | | Methacrylic resin composition (molded resin object) | | | | | | Evaluation result of light stability |
|---|---|---|---|---|---|---|---|---|---|---|---|---|
| | Compound name | Addition amount [part/100 parts of syrup] | | Concentration of MMA [% by mass] | Concentration of component A2 [ppm by mass] | Concentration of MMA [% by mass] | Concentration of component A2 [ppm by mass] | Total light transmittance Tt [%] | HAZE [%] | YI (3 mm thickness in plate thickness direction) | HDT [°C] | ΔTt [%] |
| | | Component A2 | Polymerization initiator | | | | | | | | | |
| Example B2-13 | Methacrylamide | 0.1 | 0.3 | 99.48 | 996 | 98.34 | 150 | 92.56 | 0.04 | 0.34 | 102.50 | -1.16 |
| Comparative Example B2-1 | - | - | 0.3 | 99.58 | - | 98.42 | - | 92.40 | 0.13 | 0.23 | 103.05 | -1.37 |

As shown in Table 6, the methacrylic resin compositions containing the specific amount of component A2, produced in Examples B2-1 to B2-13, exhibited excellent light stability as compared with Comparative Example B2-1, while maintaining transparency and heat resistance. The methacrylic resin composition could also be produced by polymerizing a polymerizable composition containing the monomer compositions obtained in Examples B1-1 to B1-21.

<<Test for third embodiment>>

[Abbreviation of compounds]

Abbreviations of compounds used in Examples and Comparative Examples are as follows.

- $Me_4Py$: 2,3,5,6-tetramethylpyrazine (manufactured by Tokyo Chemical Industry Co., Ltd.)
- $Me_3Py$: 2,3,5-trimethylpyrazine (manufactured by Tokyo Chemical Industry Co., Ltd.)
- IMeOPy: 2-isopropyl-3-methoxypyrazine (manufactured by Tokyo Chemical Industry Co., Ltd.)
- Py: pyrazine (manufactured by Tokyo Chemical Industry Co., Ltd.)
- MeOpy: 2-methoxypyrazine (manufactured by Tokyo Chemical Industry Co., Ltd.)
- DMePy: 2,5-dimethylpyrazine (manufactured by Tokyo Chemical Industry Co., Ltd.)
- DBPL: 2,4-dimethyl-6-t-butylphenol (manufactured by Tokyo Chemical Industry Co., Ltd.)
- MePL: 4-methoxyphenol (manufactured by FUJIFILM Wako Pure Chemical Corporation)
- HQ: Hydroquinone (manufactured by FUJIFILM Wako Pure Chemical Corporation)
- PT: phenothiazine (manufactured by Tokyo Chemical Industry Co., Ltd.)
- HTMPO: 4-hydroxy-2,2,6,6-tetramethylpiperidine-N-oxyl (manufactured by Tokyo Chemical Industry Co., Ltd.)
- DPA: N,N-diphenylamine (manufactured by Tokyo Chemical Industry Co., Ltd.)
- NDPA: N-nitrosodiphenylamine (manufactured by Tokyo Chemical Industry Co., Ltd.)
- $Ph_3P$: triphenyl phosphite (manufactured by Tokyo Chemical Industry Co., Ltd.)
- MIB: methyl isobutyrate (manufactured by Tokyo Chemical Industry Co., Ltd.)
- MPr: methyl propionate (manufactured by FUJIFILM Wako Pure Chemical Corporation)
- MA: methyl acrylate (manufactured by Tokyo Chemical Industry Co., Ltd.)
- EMA: ethyl methacrylate (manufactured by Tokyo Chemical Industry Co., Ltd.)

Methods for analyzing the monomer composition, evaluating the quality stability of the monomer composition, and analyzing the methacrylic resin composition are the same as those **in** the tests according to the first embodiment.

[Evaluation of long-term thermal stability of methacrylic resin composition]

A change (ΔTt) in total light transmittance and a change (ΔYI) in yellow index before and after a long-term thermal stability test were used as an index of long-term thermal stability of the methacrylic resin compositions produced in Examples and Comparative Examples. In the long-term thermal stability test, a test piece containing the methacrylic resin composition, which was cut out from a plate-like molded resin object produced in each of Examples and Comparative Examples, was used.

<Long-term thermal stability test>

The long-term thermal stability test was performed by installing a test piece (rectangular shape of 50 mm in length × 100 mm in width, 3 mm in thickness) containing the methacrylic resin composition in a gear oven and carrying out a heat treatment under conditions of 100°C and 504 hours.

<Measurement of total light transmittance (Tt)>

The total light transmittance (Tt) of the methacrylic resin composition was measured in accordance with JIS K 7361-1 using a haze meter (manufactured by NIPPON DENSHOKU INDUSTRIES Co., Ltd., model name: NDH4000). A test piece (square shape of 50 mm in length × 100 mm in width, 3 mm in thickness) formed of the methacrylic resin composition was used for the measurement. One piece of the test piece before the long-term thermal stability test and one piece of the test piece after the test were measured once, and a change in measured value before and after the long-term thermal stability test was defined as a change in the total light transmittance (ΔTt).

<Measurement of yellow index (YI)>

A yellow index (YI) of the methacrylic resin composition was measured in accordance with ASTM D 1925 using a spectroscopic colorimeter (manufactured by NIPPON DENSHOKU INDUSTRIES Co., Ltd., model name: SE-7700). A test piece (square shape of 50 mm in length × 100 mm in width, 3 mm in thickness) formed of the methacrylic resin composition was used for the measurement. One piece of the test piece before the long-term thermal stability test and one piece of the test piece after the test were measured once, and a change in measured value before and after the long-term thermal stability test was defined as a change in the yellow index (ΔYI).

[Example C1-1]

2,3,5,6-Tetramethylpyrazine ($Me_4Py$) was used as a component A3, and 0.0214 g of component A3 was added to 10.02 g of a reagent of MMA (moisture concentration: 240 ppm) to prepare an MMA solution (A-1 solution). A concentration of component A3 in the A-1 solution is shown in Table 7.
Next, 0.1025 g of the A-1 solution was added to 20.0016 g of a reagent of MMA (moisture concentration: 240 ppm) to prepare a monomer composition. A concentration of each component in the monomer composition is shown in Table 9.
The obtained monomer composition was stored at 25°C for 14 days. Table 8 shows the amounts of MMA dimer and methyl pyruvate generated in the monomer composition after the storage.

[Example C1-2]

2,3,5,6-Tetramethylpyrazine ($Me_4Py$) was used as a component A3, and 0.0400 g of component A3 was added to 39.9600 g of a reagent of MMA (moisture concentration: 240 ppm) to prepare a monomer composition. A concentration of each component in the monomer composition is shown in Table 8.
The obtained monomer composition was stored in the same manner as in Example C1-1. Table 8 shows the amounts of MMA dimer and methyl pyruvate generated in the monomer composition after the storage.

[Example C1-3]

A monomer composition was prepared in the same manner as in Example C1-2, except that the amounts of the reagent of MMA and component A3 were changed as shown in Table 8. A concentration of each component in the monomer composition is shown in Table 8.
The obtained monomer composition was stored in the same manner as in Example C1-1. Table 8 shows the amounts of MMA dimer and methyl pyruvate generated in the monomer composition after the storage.

[Examples C1-4, C1-5, C1-6, and C1-9]

An A-1 solution was prepared in the same manner as in Example C1-1, except that a compound shown in Table 7 was used as component A3 and amounts of the reagent of MMA and component A3 were changed as shown in Table 7.
Next, a monomer composition was prepared in the same manner as in Example C1-1, except that the amounts of the reagent of MMA and the A-1 solution were changed as shown in Table 8. A concentration of each component in the monomer composition is shown in Table 8.
The obtained monomer composition was stored in the same manner as in Example C1-1. Table 8 shows the amounts of MMA dimer and methyl pyruvate generated in the monomer composition after the storage.

[Examples C1-7 and C1-8]

A monomer composition was prepared in the same manner as in Example C1-2, except that a compound shown in Table 8 was used as component A3 and amounts of the reagent of MMA and component A3 were changed as shown in Table 8. A concentration of each component in the monomer composition is shown in Table 8.
The obtained monomer composition was stored in the same manner as in Example C1-1. Table 8 shows the amounts of MMA dimer and methyl pyruvate generated in the monomer composition after the storage.

[Example C1-10]

An A-1 solution was prepared by the same method as in Example C1-1.
2,4-Dimethyl-6-t-butylphenol (DBPL) was used as a component B3, 0.0829 g of component B3 was added to 40.0221 g of a reagent of MMA (moisture concentration: 240 ppm) to prepare an MMA solution (B-1 solution). A

concentration of component B3 in the B-1 solution is shown in Table 7.

Next, 0.1017 g of the A-1 solution and 0.1016 g of the B-1 solution were added to 20.0861 g of a reagent of MMA (moisture concentration: 240 ppm) to prepare a monomer composition. A concentration of each component in the monomer composition is shown in Table 8.

The obtained monomer composition was stored in the same manner as in Example C1-1. Table 8 shows the amounts of MMA dimer and methyl pyruvate generated in the monomer composition after the storage.

[Examples C1-11 to C1-15]

An A-1 solution was prepared in the same manner as in Example C1-1, except that a compound shown in Table 7 was used as component A3 and amounts of the reagent of MMA and component A3 were changed as shown in Table 7.

A B-1 solution was prepared by the same method as in Example C1-10.

Next, a monomer composition was prepared in the same manner as in Example C1-10, except that the amounts of the reagent of MMA, the A-1 solution, and the B-1 solution were changed as shown in Table 8. A concentration of each component in the monomer composition is shown in Table 8.

The obtained monomer composition was stored in the same manner as in Example C1-1. Table 8 shows the amounts of MMA dimer and methyl pyruvate generated in the monomer composition after the storage.

[Examples C1-16 to C1-18]

An A-1 solution was prepared by the same method as in Example C1-1.

A B-1 solution was prepared in the same manner as in Example C1-10, except that a compound shown in Table 7 was used as component B3 and amounts of the reagent of MMA and component B3 were changed as shown in Table 7.

Next, a monomer composition was prepared in the same manner as in Example C1-10, except that the amounts of the reagent of MMA, the A-1 solution, and the B-1 solution were changed as shown in Table 8. A concentration of each component in the monomer composition is shown in Table 8.

The obtained monomer composition was stored in the same manner as in Example C1-1. Table 8 shows the amounts of MMA dimer and methyl pyruvate generated in the monomer composition after the storage.

[Examples C1-19 and C1-22]

An A-1 solution was prepared by the same method as in Example C1-1.

A B-1 solution was prepared by the same method as in Example C1-10.

Next, a monomer composition was prepared in the same manner as in Example C1-10, except that the amounts of the reagent of MMA, the A-1 solution, and the B-1 solution were changed as shown in Table 8 and Table 10. A concentration of each component in the monomer composition is shown in Table 8 and Table 10.

The obtained monomer composition was stored in the same manner as in Example C1-1. Table 8 and Table 10 show the amounts of MMA dimer and methyl pyruvate generated in the monomer composition after the storage.

[Example C1-20]

A B-1 solution was prepared by the same method as in Example C1-10.

Next, 2,3,5,6-tetramethylpyrazine ($Me_4Py$) was used as a component A3, and 0.0210 g of component A3 and 0.1021 g of the B-1 solution were added to 20.0176 g of a reagent of MMA (moisture concentration: 240 ppm) to prepare a monomer composition. A concentration of each component in the monomer composition is shown in Table 10.

The obtained monomer composition was stored in the same manner as in Example C1-1. Table 10 shows the amounts of MMA dimer and methyl pyruvate generated in the monomer composition after the storage.

[Example C1-21]

A B-1 solution was prepared by the same method as in Example C1-10.

Next, a monomer composition was prepared in the same manner as in Example C1-20, except that the amounts of the reagent of MMA, component A3, and the B-1 solution were changed as shown in Table 10. A concentration of each component in the monomer composition is shown in Table 10.

The obtained monomer composition was stored in the same manner as in Example C1-1. Table 10 shows the amounts of MMA dimer and methyl pyruvate generated in the monomer composition after the storage.

[Examples C1-23 and C1-24]

An A-1 solution was prepared by the same method as in Example C1-1.

A B-1 solution was prepared in the same manner as in Example C1-10, except that the amounts of the reagent of MMA and component B3 were changed as shown in Table 9.

Next, a monomer composition was prepared in the same manner as in Example C1-10, except that the amounts of the reagent of MMA, the A-1 solution, and the B-1 solution were changed as shown in Table 10. A concentration of each component in the monomer composition is shown in Table 10.

The obtained monomer composition was stored in the same manner as in Example C1-1. Table 10 shows the amounts of MMA dimer and methyl pyruvate generated in the monomer composition after the storage.

[Example C1-25]

An A-1 solution was prepared by the same method as in Example C1-1.

A B-1 solution was prepared by the same method as in Example C1-10.

Next, 0.0980 g of the A-1 solution, 0.1014 g of the B-1 solution, and 0.2940 g of pure water were added to 20.0017 g of a reagent of MMA (moisture concentration: 240 ppm) to prepare a monomer composition. A concentration of each component in the monomer composition is shown in Table 10.

The obtained monomer composition was stored in the same manner as in Example C1-1. Table 10 shows the amounts of MMA dimer and methyl pyruvate generated in the monomer composition after the storage.

[Examples C1-26 to C1-29]

An A-1 solution was prepared by the same method as in Example C1-1.

A B-1 solution was prepared in the same manner as in Example C1-10, except that a compound shown in Table 9 was used as component B3 and amounts of the reagent of MMA and component B3 were changed as shown in Table 9.

Next, a monomer composition was prepared in the same manner as in Example C1-10, except that the amounts of the reagent of MMA, the A-1 solution, and the B-1 solution were changed as shown in Table 10. A concentration of each component in the monomer composition is shown in Table 10.

The obtained monomer composition was stored in the same manner as in Example C1-1. Table 10 shows the amounts of MMA dimer and methyl pyruvate generated in the monomer composition after the storage.

[Examples C1-30 to C1-36]

An A-1 solution was prepared in the same manner as in Example C1-1, except that a compound shown in Table 9 was used as component A3 and amounts of the reagent of MMA and component A3 were changed as shown in Table 10.

A B-1 solution was prepared in the same manner as in Example C1-10, except that a compound shown in Table 9 was used as component B3 and amounts of the reagent of MMA and component B3 were changed as shown in Table 9.

Next, a monomer composition was prepared in the same manner as in Example C1-10, except that the amounts of the reagent of MMA, the A-1 solution, and the B-1 solution were changed as shown in Table 10. A concentration of each component in the monomer composition is shown in Table 10.

The obtained monomer composition was stored in the same manner as in Example C1-1. Table 10 shows the amounts of MMA dimer and methyl pyruvate generated in the monomer composition after the storage.

[Comparative Example C1-1]

40.00 g of a reagent of MMA (moisture concentration: 240 ppm) was used as a monomer composition and stored in the same manner as in Example C1-1. Table 10 shows the amounts of MMA dimer and methyl pyruvate generated in the monomer composition after the storage.

[Comparative Example C1-2]

A B-1 solution was prepared in the same manner as in Example C1-10, except that the amounts of the reagent of MMA and component B3 were changed as shown in Table 8.

Next, 0.2213 g of the B-1 solution was added to 40.0273 g of a reagent of MMA (moisture concentration: 240 ppm) to prepare a monomer composition. A concentration of each component in the monomer composition is shown in Table 10.

The obtained monomer composition was stored in the same manner as in Example C1-1. Table 10 shows the amounts of MMA dimer and methyl pyruvate generated in the monomer composition after the storage.

[Table 7]

| | A-1 solution | | | | B-1 solution | | | |
|---|---|---|---|---|---|---|---|---|
| | Addition amount of reagent of MMA [g] | Component A3 | | | Addition amount of reagent o f MMA [g] | Component B3 | | |
| | | Compound name | Addition amount [g] | Concentration [ppm by mass] | | Compound name | Addition amount [g] | Concentration [ppm by mass] |
| Example C1-1 | 10.02 | $Me_4Py$ | 0.0214 | 2131 | - | - | - | - |
| Example C1-2 | - | - | - | - | - | - | - | - |
| Example C1-3 | - | - | - | - | - | - | - | - |
| Example C1-4 | 39.96 | $Me_3Py$ | 0.0400 | 1000 | - | - | - | - |
| Example C1-5 | 10.01 | $Me_3Py$ | 0.0224 | 2233 | - | - | - | - |
| Example C1-6 | 39.96 | $Me_1Py$ | 0.0400 | 1000 | - | - | - | - |
| Xxample C1-7 | - | - | - | - | - | - | - | - |
| Example C1-8 | - | - | - | - | - | - | - | - |
| Example C1-9 | 10.03 | IMeOPy | 0.0210 | 2090 | - | - | - | - |
| Example C1-10 | 10.02 | $Me_4Py$ | 0.0214 | 2131 | 40.0221 | DBPL | 0.0829 | 2067 |
| Example C1-11 | 10.01 | Py | 0.0240 | 2392 | 40.0221 | DBPL | 0.0829 | 2067 |
| Example C1-12 | 10.01 | Me3Py | 0.0224 | 2233 | 40.0221 | DBPL | 0.0829 | 2067 |
| Example C1-13 | 10.03 | MeOPy | 0.0205 | 2040 | 40.0221 | DBPL | 0.0829 | 2067 |
| Example C1-14 | 10.03 | IMeOPy | 0.0210 | 2090 | 40.0221 | DBPL | 0.0829 | 2067 |
| Example C1-15 | 10.01 | DMePy | 0.0210 | 2094 | 40.0221 | DBPL | 0.0829 | 2067 |
| Example C1-16 | 10.02 | $Me_4Py$ | 0.0214 | 2131 | 10.0051 | MePL | 0.0191 | 1905 |
| Example C1-17 | 10.02 | $Me_4Py$ | 0.0214 | 2131 | 10.0238 | HQ | 0.0233 | 2319 |
| Example C1-18 | 10.02 | $Me_4Py$ | 0.0214 | 2131 | 10.0204 | PT | 0.0238 | 2370 |
| Example C1-19 | 10.02 | $Me_4Py$ | 0.0214 | 2131 | 40.0221 | DBPL | 0.0829 | 2067 |

[Table 8]

| | | Addition amount [g] | | | | | Monomer composition | | | | | | Generated amount of MMA dimer [ppm] | Generated amount of methyl pyruvate [ppm] |
|---|---|---|---|---|---|---|---|---|---|---|---|---|---|---|
| | | | | | | | MMA | Component A3 | | Component B3 | | XB3/XA3 | | |
| | | Reagent of MMA | A-1 solution | B-1 solution | Component A3 | Pure water | Concentration XM [% by mass] | Compound name | Concentration XA3 [ppm by mass] | Compound name | Concentration XB3 [ppm by mass] | | | |
| Example | C1-1 | 20.0016 | 0.1025 | - | - | - | 99.97 | $Me_4Py$ | 11 | - | - | - | 18 | 4 |
| | C1-2 | 39.9600 | - | - | 0.0400 | - | 99.88 | $MC_4Py$ | 1000 | - | - | - | 24 | 8 |
| | C1-3 | 19.8000 | - | - | 0.2000 | - | 98.98 | $Mo_4Py$ | 10000 | - | - | - | 24 | 16 |
| | C1-4 | 19.9800 | 0.0200 | - | - | - | 99.98 | $Me_3Py$ | 1 | - | - | - | 22 | 12 |
| | C1-5 | 20.0240 | 0.1018 | - | - | - | 99.97 | $Me_3Py$ | 11 | - | - | - | 17 | 12 |
| | C1-6- | 18.0000 | 2.0000 | - | - | - | 99.97 | $Me_3Py$ | 100 | - | - | - | 23 | 14 |
| | C1-7 | 39.9600 | - | - | 0.0400 | - | 99.88 | $Mc_3Py$ | 1000 | - | - | - | 28 | 9 |
| | C1-8 | 19.8000 | - | - | 0.2000 | - | 98.98 | $Me_3Py$ | 10000 | - | - | - | 24 | 11 |
| | C1-9 | 20.0203 | 0.1046 | - | - | - | 99.97 | IMe0Py | 11 | - | - | - | 17 | 11 |
| | C1-10 | 20.0861 | 0.1017 | 0.1016 | - | - | 99.97 | $Me_4Py$ | 11 | DBPL | 10 | 0.969 | 18 | 0 |
| | C1-11 | 20.0261 | 0.1039 | 0.1071 | - | - | 99.97 | Py | 12 | DBPL | 11 | 0.891 | 16 | 1 |
| | C1-12 | 20.0129 | 0.1014 | 0.1045 | - | - | 99.97 | $Me_3Py$ | 11 | DBPL | 11 | 0.954 | 12 | 0 |
| | C1-13 | 20.1391 | 0.1038 | 0.1071 | - | - | 99.97 | Me0Py | 10 | DBPL | 11 | 1.046 | 15 | 0 |
| | C1-14 | 20.0117 | 0.1059 | 0.1012 | - | - | 99.97 | IMePy | 11 | DBPL | 10 | 0.945 | 19 | 1 |
| | C1-15 | 20.05 10 | 0.1067 | 0.1038 | - | - | 99.97 | DMeOPy | 11 | DBPL | 11 | 0.960 | 17 | 2 |
| | C1-16 | 20.05 10 | 0.1014 | 0.1056 | - | - | 99.97 | $Me_4Py$ | 11 | MePL | 10 | 0.931 | 14 | 1 |
| | C1-17 | 20.0161 | 0.1013 | 0.1023 | - | - | 9997 | $Me_4Py$ | 11 | IIQ | 12 | 1.099 | 17 | 1 |
| | C1-18 | 20.0180 | 0.1032 | 0.1051 | - | - | 99.97 | $Me_4Py$ | 11 | PT | 12 | 1.132 | 19 | 1 |
| | C1-19 | 19.0407 | 1.0019 | 0.1055 | - | - | 99.96 | $Me_4Py$ | 106 | DBPL | 11 | 0.102 | 19 | 1 |

[Table 9]

| | A-1 solution | | | | B-1 solution | | | |
|---|---|---|---|---|---|---|---|---|
| | Addition amount of reagent of MMA [g] | Component A3 | | | Addition amount of reagent of MMA [g] | Component B3 | | |
| | | Compound name | Addition amount [g] | Concentration [ppm by mass] | | Compound name | Addition amount [g] | Concentration [ppm by mass] |
| Example C1-20 | - | - | - | - | 40.0221 | DBPL | 0.0829 | 2067 |
| Example C1-21 | - | - | - | - | 40.0221 | DBPL | 0.0829 | 2067 |
| lixample C1-22 | 10.02 | $Me_4Py$ | 0.0214 | 2131 | 40.0221 | DBPL | 0.0829 | 2067 |
| Example C1-23 | 10.02 | $Me_4Py$ | 0.0214 | 2131 | 40.0080 | DBPL | 0.0828 | 2065 |
| lixample C1-24 | 10.02 | $Me_4Py$ | 0.0214 | 2131 | 40.0080 | DBPL | 0.0828 | 2065 |
| Example C1-25 | 10.02 | $Me_4Py$ | 0.0214 | 2131 | 40.0221 | DBPL | 0.0829 | 2067 |
| Example C1-26 | 10.02 | $Me_4Py$ | 0.0214 | 2131 | 10.0021 | HTMPO | 0.0202 | 2016 |
| Example C1-27 | 10.02 | $Me_4Py$ | 0.0214 | 2131 | 10.1244 | DPA | 0.0222 | 2188 |
| Example C1-28 | 10.02 | $Me_4Py$ | 0.0214 | 2131 | 10.0077 | NDPA | 0.0208 | 2074 |
| Example C1-29 | 10.02 | $Me_4Py$ | 0.0214 | 2131 | 10.0061 | $Ph_3P$ | 0.0223 | 2224 |
| Example C1-30 | 10.02 | $Me_4Py$ | 0.0214 | 2131 | - | - | - | - |
| Example C1-31 | 10.02 | $Me_4Py$ | 0.0214 | 2131 | - | - | - | - |
| Example C1-32 | 10.02 | $Me_4Py$ | 0.0214 | 2131 | - | - | - | - |
| Example C1-33 | 10.01 | $Me_3Py$ | 0.0224 | 2233 | - | - | - | - |
| Example C1-34 | 10.01 | $Mc_3Py$ | 0.0224 | 2233 | - | - | - | - |
| Example C1-35 | 10.01 | $Me_3Py$ | 0.0224 | 2233 | - | - | - | - |
| Example C1-36 | 10.01 | $Mc_3Py$ | 0.0224 | 2233 | - | - | - | - |
| Comparative Example C1-1 | - | - | - | - | 40.0221 | DBPL | 0.0829 | 2067 |
| Comparative Example C1-2 | - | - | - | - | 10.0026 | DBPL | 0.0228 | 2274 |

[Table 10]

| | | Addition amount [g] | | | | | | Monomer composition | | | | | | | | | Generated amount of MMA dimer [ppm] | Generated amount of methyl pyruvate [ppm] |
|---|---|---|---|---|---|---|---|---|---|---|---|---|---|---|---|---|---|---|
| | | | | | | | | MMA | Component A3 | | Component B3 | | Component C | | | | | |
| | | Reagent of MMA | A-1 solution | B-1 solution | C-1 solution | Component A3 | Pure water | Concentration XM [% by mass] | Compound name | Concentration XA3 [ppm by mass] | Compound name | Concentration XB3 [ppm by mass] | Compound name | Concentration XC [ppm by mass] | XB3/XA3 | XC/XA3 | | |
| Example | C1-20 | 20.017-6 | - | 0.1021 | - | 0.0210 | - | 99.87 | $Me_4Py$ | 1043 | DBPL | 10 | - | - | 0.01 | - | 16 | 1 |
| | C1-21 | 9.9970 | - | 0.0546 | - | 0.0926 | - | 99.06 | $Me_4Py$ | 9128 | DBPL | 11 | - | - | 0.001 | - | 21 | 3 |
| | C1-22 | 19.014-6 | 0.1034 | 1.0058 | - | - | - | 99.96 | $Me_4Py$ | 11 | DBPL | 103 | - | - | 9.434 | - | 20 | 0 |
| | C1-23 | 7.5067 | 0.0551 | 2.5107 | - | - | - | 99.92 | $Me_4Py$ | 12 | DBPL | 515 | - | - | 44.156 | - | 25 | 0 |
| | C1-24 24 | 4.0066 | 0.0605 | 5.9942 | - | - | - | 99.85 | $Me_4Py$ | 13 | DBPL | 1230 | - | - | 96.012 | - | 26 | 0 |
| | C1-25 | 20.001-7 | 0.0980 | 0.1014 | - | - | 0.29-40 | 98.54 | $Me_4Py$ | 10 | DBPL | 10 | $H_2O$ | 14345 | 1.004 | - | 20 | 4 |
| | C1-26 | 10.002-0 | 0.0532 | 0.0520 | - | - | - | 99.97 | $Me_4Py$ | 11 | HTMPO | 10 | - | - | 0.924 | - | 15 | 4 |
| | C1-27 | 10.027-1 | 0.0513 | 0.0523 | - | - | - | 99.97 | Py | 11 | DPA | 11 | - | - | 1.047 | - | 0 | 0 |
| | C1-28 | 10.015-4 | 0.0553 | 0.0521 | - | - | - | 99.97 | $Me_4Py$ | 12 | NDPA | 11 | - | - | 0.917 | - | 20 | 5 |
| | C1-29 | 10.005-5 | 0.0534 | 0.0508 | - | - | - | 99.97 | $Me_4Py$ | 11 | $Ph_3P$ | 11 | - | - | 0.993 | - | 20 | 9 |
| | C1-30 | 20.029-3 | 0.1030 | 0.0722 | 0.0722 | - | - | 99.97 | $Me_4Py$ | 11 | - | - | MIB | 10 | - | 0.953 | 18 | 9 |
| | C1-31 | 20.062-6 | 0.1036 | 0.0028 | 0.1028 | - | - | 99.97 | $Me_4Py$ | 11 | - | - | MPr | 9 | - | 0.8196 | 20 | 15 |
| | C1-32 | 20.018-5 | 0.1068 | 0.1019 | 0.1019 | - | - | 99.97 | $Me_4Py$ | 11 | - | - | MA | 9 | - | 0.8254 | 21 | 13 |
| | C1-33 | 20.018-0 | 0.0029 | 0.0713 | 0.0713 | - | - | 99.97 | $Me_3Py$ | 11 | - | - | MIB | 10 | - | 0.899 | 19 | 16 |

(continued)

| | | Addition amount [g] | | | | | | Monomer composition | | | | | | | | | Generated amount of MMA dimer [ppm] | Generated amount of methyl pyruvate [ppm] |
|---|---|---|---|---|---|---|---|---|---|---|---|---|---|---|---|---|---|---|
| | | | | | | | | MMA | Component A3 | | Component B3 | | Component C | | XB3/XA3 | XC/XA3 | | |
| | | Reagent of MMA | A-1 solution | B-1 solution | C-1 solution | Component A3 | Pure water | Concentration XM [% by mass] | Compound name | Concentration XA3 [ppm by mass] | Compound name | Concentration XB3 [ppm by mass] | Compound name | Concentration XC [ppm by mass] | | | | |
| | C1-34 | 20.004-5 | 0.1009 | 0.1058 | 0.1058 | - | - | 99.97 | $Me_3Py$ | 11 | - | - | MPr | 9 | - | 0.8265 | 20 | 12 |
| | C1-35 | 20.026-5 | 0.1018 | 0.1010 | 0.1010 | - | - | 99.97 | $Me_3Py$ | 11 | - | - | MA | 9 | - | 0.819 | 13 | 16 |
| | C1-36 | 20.100-4 | 0.1035 | 0.1011 | 0.1011 | - | - | 99.97 | $Me_3Py$ | 11 | - | - | EMA | 10 | - | 0.8571 | 21 | 14 |
| Comparative Example | C1-1 1 | 20.034-2 | - | 0.1012 | - | 0.3141 | - | 98.44 | $Me_4Py$ | 15360 | DBPL | 10 | - | - | 0.001 | - | 33 | 11 |
| | C1-2 | 40.027-3 | - | 0.2213 | - | - | - | 99.97 | - | - | DBPL | 13 | - | - | - | - | 30 | 7 |

As shown in Table 9 and Table 10, in Examples C1-1 to C1-36 in which the monomer composition contained the defined component A3, the MMA dimer was suppressed from being generated in the monomer composition after the storage as compared with Comparative Examples C1-1 and C1-2, and it can be said that the quality stability during the storage was high. In Examples C1-1 to C1-36 in which the monomer composition contained component A3, the generation of methyl pyruvate tends to be suppressed.

[Example C2-1]

100 parts of MMA was supplied to a reaction vessel (a polymerization tank) equipped with a cooling tube, a thermometer, and a stirrer, bubbling was carried out with nitrogen gas while carrying out stirring, and heating was started. At the time when the internal temperature of the reaction vessel reached 80°C, 0.12 parts of 2,2'-azobis(2,4-dimethylvaleronitrile) was added thereto as a radical polymerization initiator, and the resultant mixture was further heated until the internal temperature of the reaction vessel reached 100°C and held for 9 minutes. Next, the internal temperature of the reaction vessel was lowered to room temperature to obtain a syrup. A concentration of the polymer in the syrup was 20% by mass with respect to the total mass of the syrup.

2,3,5,6-Tetramethylpyrazine ($Me_4Py$) was used as a component A3, and 0.001 parts of component A3 and 0.3 parts of t-hexyl peroxypivalate as a radical polymerization initiator were added to 100 parts of the obtained syrup to obtain a polymerizable composition. The concentrations of MMA and component A3 in the above-described polymerizable composition are shown in Table 11.

The obtained polymerizable composition was poured into a space with a gap interval of 4.1 mm, which was provided by arranging a soft resin gasket at the end of SUS plates between two SUS plates facing each other, and heated at 80°C for 45 minutes and then at 130°C for 30 minutes to cure the polymerizable composition, thereby obtaining a methacrylic resin composition.

Next, the obtained methacrylic resin composition was cooled together with the SUS plates, and then the SUS plates were removed to obtain a plate-like molded resin object having a thickness of 3 mm. The molded resin object is a molded object consisting of only the methacrylic resin composition, and corresponds to both the methacrylic resin composition and the molded resin object. Table 12 shows evaluation results of characteristics of the obtained molded resin object.

In Table 11, "-" means that component A3 or component B3 described later was not added.

[Examples C2-2 to C2-4]

A polymerizable composition was obtained by the same method as in Example C2-1, except that a compound shown in Table 11 was used as component A3 and the addition amount of component A3 was changed as shown in Table 11. The concentrations of MMA and component A3 in the above-described polymerizable composition are shown in Table 11.

A methacrylic resin composition and a molded resin object were produced by the same methods as in Example C2-1, using the obtained polymerizable composition. The evaluation results of the above-described molded resin object are shown in Table 12.

[Example C2-5]

A syrup was obtained by the same method as in Example C2-1.

2,3,5,6-Tetramethylpyrazine ($Me_4Py$) was used as a component A3, methyl isobutyrate (MIB) was used as a component B3, 0.001 parts of component A3 was added to 100 parts of the obtained syrup, and the preparation was carried out such that component B3 was 0.005 parts. Furthermore, 0.3 parts of t-hexylperoxypivalate as a radical polymerization initiator was added thereto to obtain a polymerizable composition. The concentrations of MMA and component A3 in the above-described polymerizable composition are shown in Table 11.

A methacrylic resin composition and a molded resin object were produced by the same methods as in Example C2-1, using the obtained polymerizable composition. The evaluation results of the above-described molded resin object are shown in Table 12.

[Example C2-6]

A syrup was obtained by the same method as in Example C2-5.

2,3,5,6-Tetramethylpyrazine ($Me_4Py$) was used as a component A3, methyl propionate (MPr) was used as a component B3, 0.001 parts of component A3 was added to 100 parts of the obtained syrup, and the preparation was carried out such that component B3 was 0.0015 parts. Furthermore, 0.3 parts of t-hexylperoxypivalate as a radical

polymerization initiator was added thereto to obtain a polymerizable composition. The concentrations of MMA and component A3 in the above-described polymerizable composition are shown in Table 11.

A methacrylic resin composition and a molded resin object were produced by the same methods as in Example C2-1, using the obtained polymerizable composition. The evaluation results of the above-described molded resin object are shown in Table 12.

[Example C2-7]

A syrup was obtained by the same method as in Example C2-5.

2,3,5,6-Tetramethylpyrazine ($Me_4Py$) was used as a component A3, methyl acrylate (MA) was used as a component B3, 0.001 parts of component A3 was added to 100 parts of the obtained syrup, and the preparation was carried out such that component B3 was 0.009 parts. Furthermore, 0.3 parts of t-hexylperoxypivalate as a radical polymerization initiator was added thereto to obtain a polymerizable composition. The concentrations of MMA and component A3 in the above-described polymerizable composition are shown in Table 11.

A methacrylic resin composition and a molded resin object were produced by the same methods as in Example C2-1, using the obtained polymerizable composition. The evaluation results of the above-described molded resin object are shown in Table 12.

[Comparative Example C2-1]

A polymerizable composition was obtained by the same method as in Example C2-1, except that component A3 was not used. The concentration of MMA in the above-described polymerizable composition is shown in Table 11.

A methacrylic resin composition and a molded resin object were produced by the same methods as in Example C2-1, using the obtained polymerizable composition. The evaluation results of the above-described molded resin object are shown in Table 12.

[Table 11]

| | Component A3 | Component A3 | Polymerizable composition | | | | |
|---|---|---|---|---|---|---|---|
| | Compound name | Compound name | Addition amount [part/ 100 parts of syrup] | | Concentration of MMA [% by mass] | Concentration of component A3 [ppm by mass] | Concentration of component B3 [ppm by mass] |
| | | | Component A3 | Polymerization initiator | | | |
| Example C2-1 | $Me_4Py$ | - | 0.001 | 0.3 | 99.58 | 10 | - |
| Example C2-2 | $Me_4Py$ | - | 0.01 | 0.3 | 99.57 | 100 | - |
| Example C2-3 | $Me_4Py$ | - | 0.1 | 0.3 | 99.48 | 996 | - |
| Example C2-4 | $Me_3Py$ | - | 0.001 | 0.3 | 98.60 | 10 | - |
| Example C2-5 | $Me_4Py$ | MIB | 0.001 | 0.3 | 99.58 | 10 | 50 |
| Example C2-6 | $Me_4Py$ | MPr | 0.001 | 0.3 | 99.58 | 10 | 15 |
| Example C2-7 | $Me_4Py$ | MA | 0.001 | 0.3 | 99.58 | 10 | 90 |
| Comparative Example C2-1 | - | - | - | 0.3 | 99.58 | - | - |

[Table 12]

| | Methacrylic resin composition (molded resin object) | | | | | | Evaluation result of long-term thermal stability | |
|---|---|---|---|---|---|---|---|---|
| | Concentration of MMA [% by mass] | Concentration of component A3 [ppm by mass] | Concentration of component B3 [ppm by mass] (actually measured value) | Total light transmittance Tt [%] | YI (3 mm thickness in plate thickness direction) | HDT [°C] | ΔTt [%] | ΔYI |
| Example C2-1 | 98.25 | 9 | - | 93.06 | 0.41 | 103.50 | -0.15 | 0.50 |
| Example C2-2 | 98.46 | 95 | - | 92.75 | 0.30 | 104.00 | -0.12 | 0.45 |
| Example C2-3 | 98.36 | 991 | - | 92.30 | 0.20 | 103.60 | -0.18 | 0.44 |
| Example C2-4 | 98.38 | 11 | - | 92.45 | 0.24 | 104.10 | -0.11 | 0.52 |
| Example C2-5 | 98.30 | 12 | 54 | 92.86 | 0.15 | 103.85 | -0.11 | 0.41 |
| Example C2-6 | 98.47 | 12 | 11 | 92.87 | 0.14 | 104.10 | -0.11 | 0.45 |
| Example C2-7 | 98.52 | 10 | 88 | 92.49 | 0.29 | 104.00 | -0.11 | 0.17 |
| Comparative Example C2-1 | 98.42 | - | - | 92.46 | 0.19 | 103.00 | -0.24 | 0.60 |

As shown in Table 12, the methacrylic resin compositions containing the specific amount of component A3, produced in Examples C2-1 to C2-7, exhibited excellent long-term thermal stability as compared with Comparative Example C2-1, while maintaining transparency and heat resistance. The methacrylic resin composition could also be produced by polymerizing a polymerizable composition containing the monomer compositions obtained in Examples C1-1 to C1-36.

INDUSTRIAL APPLICABILITY

With the invention according to the first embodiment and the second embodiment, a monomer composition which can be used for a raw material or the like of a methacrylic resin having excellent light stability can be stably stored for a long period of time, and a methacrylic resin composition and a resin composition which are industrially useful can be obtained.

With the invention according to the third embodiment, a monomer composition which can be used for a raw material or the like of a methacrylic resin having excellent long-term thermal stability can be stably stored for a long period of time, and a methacrylic resin composition and a resin composition which are industrially useful can be obtained.

**Claims**

**1.** A monomer composition, comprising:

methyl methacrylate; and
one compound (component A) selected from an ester compound having an $\alpha$-hydrogen (component A1) represented by Formula (1-1), an $\alpha,\beta$-unsaturated carbonyl compound (component A21) represented by Formula (2-1), an $\alpha,\beta$-unsaturated carboxylic acid ester (component A22) represented by Formula (2-2), or a pyrazine compound (component A3) represented by Formula (3-1),
wherein, when the monomer composition contains component A1 and a concentration of component A1 with respect to a total mass of the monomer composition is indicated by XA1 (ppm by mass), XA1 is 5 to 10000 ppm by mass,
when the monomer composition contains component A21 and a concentration of component A21 with respect to the total mass of the monomer composition is indicated by XA21 (ppm by mass), XA21 is 1 to 10000 ppm by mass,
when the monomer composition contains component A22 and a concentration of component A22 with respect to the total mass of the monomer composition is indicated by XA22 (ppm by mass), XA22 is 1 to 10000 ppm by mass, and
when the monomer composition contains component A3 and a concentration of component A3 with respect to the total mass of the monomer composition is indicated by XA3 (ppm by mass), XA3 is 1 ppm by mass or more,

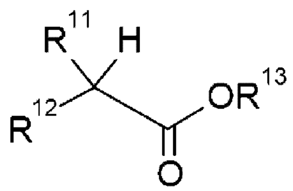

· · · (1-1)

(in Formula (1-1), $R^{11}$ and $R^{12}$ are each independently a hydrogen atom or an alkyl group having 1 to 5 carbon atoms, $R^{13}$ is an alkyl group having 1 to 5 carbon atoms, and any one or more of $R^{11}$ to $R^{13}$ is an alkyl group having 2 to 5 carbon atoms),

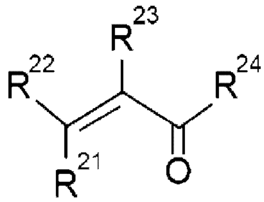

· · · (2-1)

(in Formula (2-1), $R^{21}$, $R^{22}$, and $R^{23}$ are each independently a hydrogen atom or an alkyl group having 1 to 5 carbon atoms, and $R^{24}$ is an alkyl group having 1 to 5 carbon atoms or an amino group),

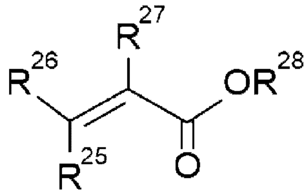

· · · (2-2)

(in Formula (2-2), $R^{25}$, $R^{26}$, and $R^{27}$ are each independently a hydrogen atom or an alkyl group having 1 to 10 carbon atoms, $R^{28}$ is an alkyl group having 1 to 10 carbon atoms, and any one or more of $R^{25}$ and $R^{26}$ is an alkyl group having 1 to 10 carbon atoms),

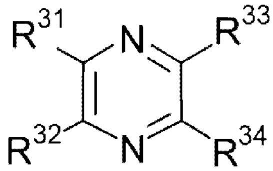

· · · (3-1)

(in Formula (3-1), $R^{31}$, $R^{32}$, $R^{33}$, and $R^{34}$ are each independently a hydrogen atom, an alkyl group having 1 to 5 carbon atoms, or an alkoxy group having 1 to 6 carbon atoms).

**2.** The monomer composition according to Claim 1,
wherein component A is component A1.

**3.** The monomer composition according to Claim 2,
wherein XA1 is 10 to 5000 ppm by mass.

**4.** The monomer composition according to Claim 2,
wherein a molecular weight of component A1 is 200 or less.

**5.** The monomer composition according to Claim 2,
wherein, in Formula (1-1), $R^{11}$ and $R^{12}$ are each independently a hydrogen atom, a methyl group, an ethyl group, an n-propyl group, or an isopropyl group, and $R^{13}$ is a methyl group, an isobutyl group, or an isoamyl group.

**6.** The monomer composition according to Claim 2,
wherein component A1 is at least one selected from the group consisting of isobutyl isobutyrate, methyl isovalerate, and isoamyl isobutyrate.

**7.** The monomer composition according to Claim 1,
wherein component A is component A21.

**8.** The monomer composition according to Claim 7,
wherein XA21 is 10 to 5000 ppm by mass.

**9.** The monomer composition according to Claim 7,
wherein a molecular weight of component A21 is 200 or less.

**10.** The monomer composition according to Claim 7,
wherein, in Formula (2-1), $R^{21}$, $R^{22}$, and $R^{23}$ are each independently a hydrogen atom, a methyl group, an ethyl group, an n-propyl group, or an isopropyl group, and $R^{24}$ is a methyl group or an amino group.

**11.** The monomer composition according to Claim 7,
wherein component A21 is at least one selected from the group consisting of isopropenyl methyl ketone and methacrylamide.

**12.** The monomer composition according to Claim 1,
wherein component A is component A22.

**13.** The monomer composition according to Claim 12, wherein XA22 is 10 to 5000 ppm by mass.

**14.** The monomer composition according to Claim 12, wherein a molecular weight of component A22 is 200 or less.

**15.** The monomer composition according to Claim 12, wherein, in Formula (2-2), $R^{25}$, $R^{26}$, and $R^{27}$ are each independently a hydrogen atom, a methyl group, an ethyl group, an n-propyl group, or an isopropyl group, and $R^{28}$ is a methyl group, an ethyl group, an n-propyl group, an isopropyl group, an n-butyl group, an isobutyl group, or an isopentyl group.

**16.** The monomer composition according to Claim 12, wherein component A22 is at least one selected from the group consisting of methyl crotonate and methyl 3,3-dimethylacrylate.

**17.** The monomer composition according to Claim 1, wherein component A is component A3.

**18.** The monomer composition according to Claim 17, wherein XA3 is 1 to 10000 ppm by mass.

**19.** The monomer composition according to Claim 17, wherein XA3 is 1 to 1000 ppm by mass.

**20.** The monomer composition according to Claim 17, wherein a molecular weight of component A3 is 200 or less.

**21.** The monomer composition according to Claim 17, wherein, in Formula (3-1), $R^{31}$, $R^{32}$, $R^{33}$, and $R^{34}$ are each independently a hydrogen atom or an alkyl group having 1 to 5 carbon atoms.

**22.** The monomer composition according to Claim 17, wherein, in Formula (3-1), $R^{31}$, $R^{32}$, $R^{33}$, and $R^{34}$ are each independently a hydrogen atom, a methyl group, an ethyl group, an n-propyl group, or an isopropyl group.

**23.** The monomer composition according to Claim 17, wherein component A3 is at least one selected from the group consisting of 2,3,5,6-tetramethylpyrazine and 2,3,5-trimethylpyrazine.

**24.** The monomer composition according to Claim 1, further comprising: a polymerization inhibitor (component B1).

**25.** The monomer composition according to Claim 24, wherein, when a concentration of component B1 with respect to the total mass of the monomer composition is indicated by XB1 (ppm by mass), XB1 is 1 to 1000 ppm by mass.

**26.** The monomer composition according to Claim 24, wherein, when the concentration of component A1 with respect to the total mass of the monomer composition is indicated by XA1 (ppm by mass) and a concentration of component B1 with respect to the total mass of the monomer composition is indicated by XB1 (ppm by mass), XB1/XA1 is 0.005 to 7.

**27.** The monomer composition according to Claim 24, wherein, when a concentration of component B1 with respect to the total mass of the monomer composition is indicated by XB1 (ppm by mass), XB1 is 1 to 2000 ppm by mass.

**28.** The monomer composition according to Claim 24, wherein, when the concentration of component A3 with respect to the total mass of the monomer composition is indicated by XA3 (ppm by mass) and a concentration of component B1 with respect to the total mass of the monomer

composition is indicated by XB1 (ppm by mass), XB1/XA3 is 0.005 to 1000.

**29.** The monomer composition according to Claim 24,
wherein component B1 is at least one polymerization inhibitor selected from the group consisting of a phenol-based compound, a quinone-based compound, a nitrobenzene-based compound, an N-oxyl-based compound, an amine-based compound, a phosphorus-containing compound, a sulfur-containing compound, an iron-containing compound, a copper-containing compound, and a manganese-containing compound.

**30.** The monomer composition according to Claim 24,
wherein component B1 is at least one polymerization inhibitor selected from the group consisting of a phenol-based compound, an N-oxyl-based compound, an amine-based compound, and a sulfur-containing compound.

**31.** The monomer composition according to Claim 17, further comprising:
an ester compound having an α-hydrogen (component B2) represented by Formula (3-2),

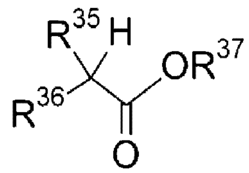

· · · (3-2)

(in Formula (3-2), $R^{35}$ and $R^{36}$ are each independently a hydrogen atom of an alkyl group having 1 to 5 carbon atoms, and $R^{37}$ is an alkyl group having 1 to 5 carbon atoms).

**32.** The monomer composition according to Claim 31,
wherein, when a concentration of component B2 with respect to the total mass of the monomer composition is indicated by XB2 (ppm by mass), XB2 is 5 to 10000 ppm by mass.

**33.** The monomer composition according to Claim 31,
wherein, when a concentration of component B2 with respect to the total mass of the monomer composition is indicated by XB2 (ppm by mass), XB2/XA3 is 0.005 to 1000.

**34.** The monomer composition according to Claim 31,
wherein, in Formula (3-2), $R^{35}$ and $R^{36}$ are each independently a hydrogen atom, a methyl group, an ethyl group, an n-propyl group, or an isopropyl group, and $R^{37}$ is a methyl group, an ethyl group, an n-propyl group, or an isopropyl group.

**35.** The monomer composition according to Claim 17, further comprising:
an α,β-unsaturated carbonyl compound (component B3) represented by Formula (3-3),

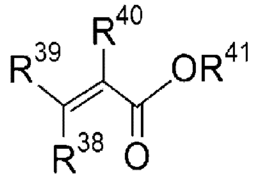

· · · (3-3)

(in Formula (3-3), $R^{38}$, $R^{39}$, and $R^{40}$ are each independently a hydrogen atom of an alkyl group having 1 to 10 carbon atoms, and $R^{41}$ is an alkyl group having 1 to 10 carbon atoms).

**36.** The monomer composition according to Claim 35,
wherein, when a concentration of component B3 is indicated by XB3 (ppm by mass), XB3 is 5 to 10000 ppm by mass.

**37.** The monomer composition according to Claim 35,
wherein, when a concentration of component B3 is indicated by XB3 (ppm by mass), XB3/XA3 is 0.005 to 1000.

**38.** The monomer composition according to Claim 35,

wherein, in Formula (3-3), $R^{38}$ $R^{39}$, and $R^{40}$ are each independently a hydrogen atom, a methyl group, an ethyl group, an n-propyl group, or an isopropyl group, and $R^{41}$ is a methyl group, an ethyl group, an n-propyl group, or an isopropyl group.

**39.** The monomer composition according to Claim 1,
wherein, when a concentration of the methyl methacrylate with respect to the total mass of the monomer composition is indicated by XM (% by mass), XM is 85% by mass or more.

**40.** The monomer composition according to Claim 1, further comprising:
an acrylic acid ester.

**41.** The monomer composition according to Claim 40,
wherein the acrylic acid ester is at least one selected from the group consisting of methyl acrylate, ethyl acrylate, and n-butyl acrylate.

**42.** The monomer composition according to Claim 1, further comprising:
styrene.

**43.** A production method for a methacrylic resin composition, comprising:
a step of radically polymerizing a polymerizable composition containing the monomer composition according to Claim 1.

**44.** A methacrylic resin composition, comprising:
a polymer of the monomer composition according to Claim 1.

**45.** A methacrylic resin composition, comprising:

a methacrylic polymer; and
one compound (component A) selected from an ester compound having an α-hydrogen (component A1) represented by Formula (1-1), an α,β-unsaturated carbonyl compound (component A21) represented by Formula (2-1), an a,ø-unsaturated carboxylic acid ester (component A22) represented by Formula (2-2), or a pyrazine compound (component A3) represented by Formula (3-1),
wherein, when the methacrylic resin composition contains component A1 and a concentration of component A1 with respect to a total mass of the methacrylic resin composition is indicated by YA1 (ppm by mass), YA1 is 5 to 10000 ppm by mass,
when the methacrylic resin composition contains component A21 and a concentration of component A21 with respect to the total mass of the methacrylic resin composition is indicated by YA21 (ppm by mass), YA21 is 0.1 to 4000 ppm by mass,
when the methacrylic resin composition contains component A22 and a concentration of component A22 with respect to the total mass of the methacrylic resin composition is indicated by YA22 (ppm by mass), YA22 is 1 to 10000 ppm by mass, and
when the methacrylic resin composition contains component A3 and a concentration of component A3 with respect to the total mass of the methacrylic resin composition is indicated by YA3 (ppm by mass), YA3 is 1 ppm by mass or more,

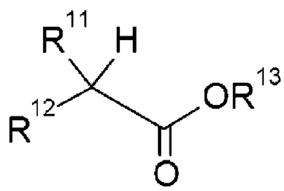

· · · (1-1)

(in Formula (1-1), $R^{11}$ and $R^{12}$ are each independently a hydrogen atom or an alkyl group having 1 to 5 carbon atoms, $R^{13}$ is an alkyl group having 1 to 5 carbon atoms, and any one or more of $R^{11}$ to $R^{13}$ is an alkyl group having 2 to 5 carbon atoms),

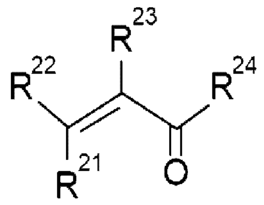

· · · (2-1)

(in Formula (2-1), $R^{21}$, $R^{22}$, and $R^{23}$ are each independently a hydrogen atom or an alkyl group having 1 to 5 carbon atoms, and $R^{24}$ is an alkyl group having 1 to 5 carbon atoms or an amino group),

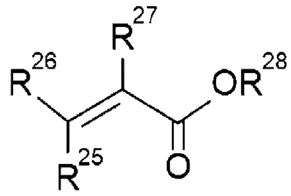

· · · (2-2)

(in Formula (2-2), $R^{25}$, $R^{26}$, and $R^{27}$ are each independently a hydrogen atom or an alkyl group having 1 to 10 carbon atoms, $R^{28}$ is an alkyl group having 1 to 10 carbon atoms, and any one or more of $R^{25}$ and $R^{26}$ is an alkyl group having 1 to 10 carbon atoms),

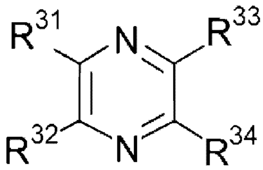

· · · (3-1)

(in Formula (3-1), $R^{31}$, $R^{32}$, $R^{33}$, and $R^{34}$ are each independently a hydrogen atom, an alkyl group having 1 to 5 carbon atoms, or an alkoxy group having 1 to 6 carbon atoms).

**46.** The methacrylic resin composition according to Claim 45,
wherein component A is component A1.

**47.** The methacrylic resin composition according to Claim 46,
wherein YA1 is 10 to 5000 ppm by mass.

**48.** The methacrylic resin composition according to Claim 46,
wherein, in Formula (1-1), $R^{11}$ and $R^{12}$ are each independently a hydrogen atom, a methyl group, an ethyl group, an n-propyl group, or an isopropyl group, and $R^{13}$ is a methyl group, an isobutyl group, or an isoamyl group.

**49.** The methacrylic resin composition according to Claim 46,
wherein component A1 is at least one selected from the group consisting of isobutyl isobutyrate, methyl isovalerate, and isoamyl isobutyrate.

**50.** The methacrylic resin composition according to Claim 45,
wherein component A is component A21.

**51.** The methacrylic resin composition according to Claim 50,
wherein YA21 is 1 to 4000 ppm by mass.

**52.** The methacrylic resin composition according to Claim 50,
wherein YA21 is 10 to 1000 ppm by mass.

**53.** The methacrylic resin composition according to Claim 50,
wherein, in Formula (2-1), $R^{21}$, $R^{22}$, and $R^{23}$ are each independently a hydrogen atom, a methyl group, an ethyl group, an n-propyl group, or an isopropyl group, and $R^{24}$ is a methyl group or an amino group.

**54.** The methacrylic resin composition according to Claim 50, wherein component A21 is at least one selected from the group consisting of isopropenyl methyl ketone and methacrylamide.

**55.** The methacrylic resin composition according to Claim 45, wherein component A is component A22.

**56.** The methacrylic resin composition according to Claim 55, wherein YA22 is 10 to 5000 ppm by mass.

**57.** The methacrylic resin composition according to Claim 55, wherein, in Formula (2-2), $R^{25}$, $R^{26}$, and $R^{27}$ are each independently a hydrogen atom, a methyl group, an ethyl group, an n-propyl group, or an isopropyl group, and $R^{28}$ is a methyl group, an ethyl group, an n-propyl group, an isopropyl group, an n-butyl group, an isobutyl group, or an isopentyl group.

**58.** The methacrylic resin composition according to Claim 55, wherein component A22 is at least one selected from the group consisting of methyl crotonate and methyl 3,3-dimethylacrylate.

**59.** The methacrylic resin composition according to Claim 45, wherein component A is component A3.

**60.** The methacrylic resin composition according to Claim 59, wherein YA3 is 1 to 10000 ppm by mass.

**61.** The methacrylic resin composition according to Claim 59, wherein YA3 is 1 to 1000 ppm by mass.

**62.** The methacrylic resin composition according to Claim 59, wherein, in Formula (3-1), $R^{31}$, $R^{32}$, $R^{33}$, and $R^{34}$ are each independently a hydrogen atom or an alkyl group having 1 to 5 carbon atoms.

**63.** The methacrylic resin composition according to Claim 59, wherein, in Formula (3-1), $R^{31}$, $R^{32}$, $R^{33}$, and $R^{34}$ are each independently a hydrogen atom, a methyl group, an ethyl group, an n-propyl group, or an isopropyl group.

**64.** The methacrylic resin composition according to Claim 59, wherein component A3 is at least one selected from the group consisting of 2,3,5,6-tetramethylpyrazine and 2,3,5-trimethylpyrazine.

**65.** The methacrylic resin composition according to Claim 45, further comprising: a polymerization inhibitor (component B1).

**66.** The methacrylic resin composition according to Claim 65, wherein, when a concentration of component B1 with respect to the total mass of the methacrylic resin composition is indicated by YB1 (ppm by mass), YB1 is 1 to 2000 ppm by mass.

**67.** The methacrylic resin composition according to Claim 65, wherein, when a concentration of component B1 with respect to the total mass of the methacrylic resin composition is indicated by YB1 (ppm by mass), YB1/YA3 is 0.005 to 1000.

**68.** The methacrylic resin composition according to Claim 65, wherein component B1 is at least one polymerization inhibitor selected from the group consisting of a phenol-based compound, a quinone-based compound, a nitrobenzene-based compound, an N-oxyl-based compound, an amine-based compound, a phosphorus-containing compound, a sulfur-containing compound, an iron-containing compound, a copper-containing compound, and a manganese-containing compound.

**69.** The methacrylic resin composition according to Claim 65,

wherein component B1 is at least one polymerization inhibitor selected from the group consisting of a phenol-based compound, an N-oxyl-based compound, an amine-based compound, and a sulfur-containing compound.

**70.** The methacrylic resin composition according to Claim 59, further comprising:
an ester compound having an $\alpha$-hydrogen (component B2) represented by Formula (3-2),

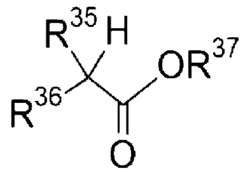
· · · (3-2)

(in Formula (3-2), $R^{35}$ and $R^{36}$ are each independently a hydrogen atom or an alkyl group having 1 to 5 carbon atoms, and $R^{37}$ is an alkyl group having 1 to 5 carbon atoms).

**71.** The methacrylic resin composition according to Claim 70,
wherein, when a concentration of component B2 with respect to the total mass of the methacrylic resin composition is indicated by YB2 (ppm by mass), YB2 is 5 to 10000 ppm by mass.

**72.** The methacrylic resin composition according to Claim 70,
wherein, when a concentration of component B2 with respect to the total mass of the methacrylic resin composition is indicated by YB2 (ppm by mass), YB2/YA3 is 0.005 to 1000.

**73.** The methacrylic resin composition according to Claim 70,
wherein, in Formula (3-2), $R^{35}$ and $R^{36}$ are each independently a hydrogen atom, a methyl group, an ethyl group, an n-propyl group, or an isopropyl group, and $R^{37}$ is a methyl group, an ethyl group, an n-propyl group, or an isopropyl group.

**74.** The methacrylic resin composition according to Claim 59, further comprising:
an $\alpha$,$\beta$-unsaturated carbonyl compound (component B3) represented by Formula (3-3),

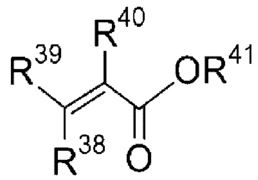
· · · (3-3)

(in Formula (3-3), $R^{38}$, $R^{39}$, and $R^{40}$ are each independently a hydrogen atom or an alkyl group having 1 to 10 carbon atoms, and $R^{41}$ is an alkyl group having 1 to 10 carbon atoms).

**75.** The methacrylic resin composition according to Claim 74,
wherein, when a concentration of component B3 with respect to the total mass of the methacrylic resin composition is indicated by YB3 (ppm by mass), YB3 is 5 to 10000 ppm by mass.

**76.** The methacrylic resin composition according to Claim 74,
wherein, when a concentration of component B3 with respect to the total mass of the methacrylic resin composition is indicated by YB3 (ppm by mass), YB3/YA3 is 0.005 to 1000.

**77.** The methacrylic resin composition according to Claim 74,
wherein, in Formula (3-3), $R^{38}$, $R^{39}$, and $R^{40}$ are each independently a hydrogen atom, a methyl group, an ethyl group, an n-propyl group, or an isopropyl group, and $R^{41}$ is a methyl group, an ethyl group, an n-propyl group, or an isopropyl group.

**78.** The methacrylic resin composition according to Claim 45,
wherein the methacrylic polymer includes, with respect to a total mass of the methacrylic polymer, 70% to 100% by mass of a repeating unit derived from methyl methacrylate and 0% to 30% by mass of a repeating unit derived from an

acrylic acid ester.

**79.** The methacrylic resin composition according to Claim 45,
wherein the methacrylic polymer includes, with respect to a total mass of the methacrylic polymer, 50% to 100% by mass of a repeating unit derived from methyl methacrylate and 0% to 50% by mass of a repeating unit derived from styrene.

**80.** A molded resin object, comprising:
the methacrylic resin composition according to Claim 45.

**INTERNATIONAL SEARCH REPORT**

International application No.
PCT/JP2023/038977

A. CLASSIFICATION OF SUBJECT MATTER
Int.Cl. C08F 220/14(2006.01)i; C08F 20/14(2006.01)i; C08K 5/00(2006.01)i; C08K 5/3462(2006.01)i; C08L 33/12(2006.01)i
FI: C08F220/14; C08L33/12; C08F20/14; C08K5/3462; C08K5/00
According to International Patent Classification (IPC) or to both national classification and IPC

B. FIELDS SEARCHED
Minimum documentation searched (classification system followed by classification symbols)
Int.Cl. C08F220/14; C08F20/14; C08K5/00; C08K5/3462; C08L33/12

Documentation searched other than minimum documentation to the extent that such documents are included in the fields searched

| | |
|---|---|
| Published examined utility model applications of Japan | 1922-1996 |
| Published unexamined utility model applications of Japan | 1971-2023 |
| Registered utility model specifications of Japan | 1996-2023 |
| Published registered utility model applications of Japan | 1994-2023 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X | JP 2022-056754 A (SUMITOMO CHEMICAL CO., LTD.) 11 April 2022 (2022-04-11) claims, examples | 1-6, 12-16, 31, 32, 34-36, 38-49, 55-58, 70, 71, 73-75, 77-80 |
| Y | | 24-27, 29, 30, 65, 66, 68,69 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 December 2023 | 26 December 2023 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2023/038977

C (Continuation). DOCUMENTS CONSIDERED TO BE RELEVANT

| Category* | Citation of document, with indication, where appropriate, of the relevant passages | Relevant to claim No. |
|---|---|---|
| A | | 7-11, 17-23, 28, 33, 37, 50-54, 59-64, 67, 72, 76 |
| X | JP 62-123150 A (MITSUI TOATSU CHEM. INC.) 04 June 1987 (1987-06-04) claims, examples | 1-6, 31, 32, 34, 39-49, 70, 71, 73, 78-80 |
| Y | | 24-27, 29, 30, 65, 66, 68, 69 |
| A | | 7-23, 28, 33, 35-38, 50-64, 67, 72, 74-77 |
| X | JP 2007-045803 A (ASAHI KASEI CHEMICALS CORP.) 22 February 2007 (2007-02-22) claims, examples | 1, 7-11, 39-45, 50-54, 78-80 |
| Y | | 24-27, 29, 30, 65, 66, 68, 69 |
| A | | 2-6, 12-23, 28, 31-38, 46-49, 55-64, 67, 70-77 |
| X | WO 2019/059179 A1 (KURARAY CO., LTD.) 28 March 2019 (2019-03-28) claims, examples | 1, 12-16, 35, 36, 38-45, 55-58, 74, 75, 77-80 |
| Y | | 24-27, 29, 30, 65, 66, 68, 69 |
| A | | 2-11, 17-23, 28, 31-34, 37, 46-54, 59-64, 67, 70-73, 76 |

Form PCT/ISA/210 (continuation of second sheet) (January 2015)

**INTERNATIONAL SEARCH REPORT**

International application No. PCT/JP2023/038977

C (Continuation). DOCUMENTS CONSIDERED TO BE RELEVANT

| Category* | Citation of document, with indication, where appropriate, of the relevant passages | Relevant to claim No. |
|---|---|---|
| X | WO 2015/119233 A1 (KURARAY CO., LTD.) 13 August 2015 (2015-08-13) claims, examples | 1, 12-16, 24-27, 29, 30, 35, 36, 38-45, 55-58, 65, 66, 68, 69, 74, 75, 77-80 |
| A | | 2-11, 17-23, 28, 31-34, 37, 46-54, 59-64, 67, 70-73, 76 |
| Y | JP 2001-072639 A (MITSUBISHI RAYON CO., LTD.) 21 March 2001 (2001-03-21) paragraph [0021], examples | 24-27, 29, 30, 65, 66, 68, 69 |
| A | JP 8-169862 A (ELF ATOCHEM SA) 02 July 1996 (1996-07-02) entire text | 1-80 |
| P,X | WO 2022/230913 A1 (MITSUBISHI CHEMICAL CORP.) 03 November 2022 (2022-11-03) claims, examples | 1, 7-16, 24-27, 29-32, 34-36, 38-45, 50-58, 65, 66, 68-71, 73-75, 77-80 |
| P,X | WO 2023/100867 A1 (MITSUBISHI CHEMICAL CORP.) 08 June 2023 (2023-06-08) claims, examples | 1, 17-45, 59-80 |

Form PCT/ISA/210 (continuation of second sheet) (January 2015)

**INTERNATIONAL SEARCH REPORT**
Information on patent family members

International application No.
PCT/JP2023/038977

| | | |
|---|---|---|
| JP 2022-056754 A | 11 April 2022 | US 2022/0098344 A1<br>claims, examples<br>EP 3978541 A1<br>CN 114316122 A<br>KR 10-2022-0044107 A<br>TW 202214556 A<br>PL 3978541 T<br>ES 2941410 T |
| JP 62-123150 A | 04 June 1987 | (Family: none) |
| JP 2007-045803 A | 22 February 2007 | (Family: none) |
| WO 2019/059179 A1 | 28 March 2019 | (Family: none) |
| WO 2015/119233 A1 | 13 August 2015 | US 2016/0347879 A1<br>claims, examples<br>EP 3103819 A1<br>CN 105980414 A<br>KR 10-2016-0118206 A<br>SG 11201606349S A<br>TW 201538535 A |
| JP 2001-072639 A | 21 March 2001 | (Family: none) |
| JP 8-169862 A | 02 July 1996 | US 5585514 A<br>entire text<br>EP 690041 A1<br>DE 69501437 C<br>FR 2721923 A<br>ES 2113160 T<br>DK 690041 T<br>AT 162173 T<br>CZ 173395 A<br>GR 3026194 T<br>KR 10-1996-0000851 A<br>CN 1125713 A<br>TW 294660 B<br>CA 2152873 A1 |
| WO 2022/230913 A1 | 03 November 2022 | (Family: none) |
| WO 2023/100867 A1 | 08 June 2023 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022172929 A
- JP 2022172930 A
- JP 2023085752 A
- JP S55139404 A
- JP 2012072333 A
- JP 2004155757 A
- JP 2005502695 W
- JP H10504553 W
- JP H586084 A
- JP H11222493 A